# EUROPEAN PATENT APPLICATION

(11) **EP 3 950 520 A2**
(43) Date of publication of application: **09.02.2022**
(21) Application number: 19748077.5
(22) Date of filing: 11.01.2019
(51) Int. Cl.: B65D 3/02

(54) **METHOD AND MACHINE FOR CREATING AND SEALING FLAPS OF FLEXIBLE PACKAGES, AND VARIOUS MODELS OF FLEXIBLE 3D PLUS-TYPE PACKAGES**

(71) Applicant: López-Aróstegui, Sáenz, Guillermo, 48610 Urduliz (Vizcaya) (ES)
(72) Inventor: López-Aróstegui, Sáenz, Guillermo, 48610 Urduliz (Vizcaya) (ES)
(86) International application number: PCT/ES2019/000005
(87) International publication number: WO 2019/149973

(57) **Abstract**

The procedure of the invention consists in manufacturing and/or transforming flexible containers in vertical filling and sealing machines that manufacture or process English fold, stable bottom or pad type containers, by generating and sealing flaps at the top and/or bottom of the lateral sides of the previous pre-container (6a) or subsequent pre-container (6b) arranged in the vertical machine.

Impact bodies (2; 3) installed in the vertical machine are used, which, when operated, hit, push and fold at least part of at least one side or lateral side on at least another part of another side or contiguous side, thus generating at least any one of the flaps such as: the plus flaps (11; 12; 13), triangular body flaps (14) manipulated triangular body flaps (15) the flap folded on itself (15a) or the strip flap (15b).

Subsequently, the flaps are sealed, by means of a sealing mode like that of a resistance, in order to keep the generated flap permanently stable.

Another object of the invention, devices that are installed in the vertical machine that facilitate the optimal generation of the flaps, such as:
- the Rammer body (19) intended to widen and stretch the wrapper or sheet of the bottom part or / and of the lower support side of the pre-container (6a), or
- Pressing platform or drawer unit (22) intended to push and crush the upper part of the pre-container (6b) against the underside of the clamp (1a), causing the pre-container (6b) to expand three-dimensionally in a cubic shape.

The new machines of the invention will have at least one impact body (2; 3) or / and at least one device (19; 20; 21; 22) of the invention.

The invention also protects different packaging models, such as mixed packaging: one half of the pad type and the other half of the English fold type.

## Description

### TECHNICAL FIELD OF THE INVENTION

It belongs to the industry that manufactures three-dimensional or heat-sealed stable bottom flexible containers, which stand upright on their own because a flatter, wider and firmer side is generated in the container.
- The technology of this invention is applicable, complementing them, in other packaging machines that manufacture flexible containers, for example: the vertical (or, for example, the horizontal) machines for liquids and/or solids that, from a film roll, forms, fills and seals (one, two, three, four or more seams) of the container, for example, pillow type, English type, stable bottom, stand up, stabilo pack^{®} or doy pack.
- These machines use different types of wrappers or film, which can be laminated, in the form of a tube or semi-tube, and can also be as a monolayer (e.g. polyethylene) or multilayer/ complex (of two, three, four, five or more layers of, e.g. polypropylenepolyethylene, polyethylene-polyester or cardboard-polyethylene-aluminum bonded sheets).
- The products to be packaged are from well differentiated sectors:
   A) Food:
      a.1) Liquid or paste-like products (additionally may also contain solids) such as: drinks, yogurts, purees, soups, sauces or jams.
      a.2) Solid products such as: corn flakes, vegetables, legumes, dried fruit, chips, olives or snacks.
   B) Non-food:
      b.1) Liquid or paste-like products (additionally may also contain solids) such as: mineral or synthetic oils, gels or shampoo, perfumes-colognes, creams, paints, chemical or cleaning products.
      b.2) Solid products or objects such as: hardware parts (screws; washers; etc.), toys, consumables or kitchenware.

### STATE OF THE RELEVANT TECHNIQUE

On the one hand, there is the process of transforming initial containers into three-dimensional containers, also of my invention and which I call **3D compack.**

This system has been protected with five applications for Invention Patents [PCT / ES2012 / 000261 - WO201303903; PCT / ES2014 / 000041 - WO2014140464; PCT / ES2015 / 000131 - WO2016042176A1; PCT / ES2015 / 000174 - WO2016087690A1; PCT / ES2016 / 000085 - WO2017021570A1].

It consists of a procedure and machine to transform initial containers (flexible containers that have previously been configured, filled and sealed by vertical or horizontal machines) into different three-dimensional containers, such as: the cube, rectangular prism, rhomboid pyramid, cylinder or irregular polyhedra.

In a first stage, pressure is applied in the direction of the inner seal of the container, using at least one impact body on or against at least one part of at least one perimeter lateral side or area of two perimeter lateral sides contiguous to one end or apex; so that part of the fluid is displaced towards the contour of the container, increasing the pressure inside the container, as well as producing a local inflation effect, obtaining: at least one support side or additional side in the area of the container with which the impact body impacts which allows the container to stand upright in a stable manner and in turn modify the geometric configuration of the container, as well as generating at least one flap or triangular body contiguous to the support side or additional side and, in a second stage, the generated flap is sealed, by means of a heat source such as a resistance or by ultrasound, at least part of at least one side of at least one sealing line.

On the other hand, the vertical or horizontal packaging machines with which flexible packaging is also manufactured, that are available on the current market and have been marketed for at least twenty years, are the following;
- Stable bottom, English type, stand up or stabilo packaging systems, which use film rolls (laminated; semi-tube or tube), as well as a square or cylindrical forming tube where the film is fitted or adjusted to the above mentioned tube sliding along it thus momentarily configuring a cylindrical or cubic shape (in this case, a container from the middle down is mainly configured in a cubic form).

Then, when the wrapper used exceeds the tube (five or more centimeters) the container is sealed at the bottom and then (when the wrapper moves downwards) it is sealed from the top. In the case of wanting to configure a three-dimensional container in a cubic form from the middle down, and as the side that acts as the base is flat: the technique known as the English fold is used which is that, just as the container is transversely sealed from the bottom, a triangle-shaped impact body is introduced into the container from the bottom of the two parallel sides to the left and right of the container.

Also, optionally, up to five longitudinal sealing lines can be made outside the forming tube to give consistency to the container: one in the middle and at the longitudinal joint of the two ends of the fold that wraps the forming tube, thus sealing the sheet so that the wrapper remains in the intended tube shape, as well as four more longitudinal sealing lines on the four vertical edges of the cubic form generated by the forming tube.

Depending on the type of packaging (laminated; in tube or semi-tube) and the degree of stability to be obtained, the container may have two or three sealing lines such as those on the pillow type, the English fold type or, for example, a combined half pillow and half English type) or of four or five sealing lines (the stable bottom, stand up or stabilo type containers).
- The Doy pack packaging system, which has a support base side but is less stable, less volumetric and less economical (since it requires a special complex three-layer plastic to provide rigidity and consistency to the container). Also, as this container is almost flat - except for just the bottom part- and with two sealing lines on the sides: it makes it more difficult to dose or to use, because it generates a narrow mouth and also because, if the container contains liquid, less pressure is exerted on it making it difficult to leave.

The technique consists of folding or bending the film twice. First, in two equal halves; second, the part where the (closed) curvature of the fold or bend is made is introduced inwards, generating another fold or bend towards the inside of the container in order to make the container acquire a stable base shape (like a gusset that expands) on the underside with which it will be held upright and finally sealed with five seam lines (two at the bottom, two at the sides and one at the top once the product is introduced inside) to maintain the configuration of the container.

### TECHNICAL PROBLEM TO BE SOLVED

When applying, installing or incorporating the 3D plus system procedure, of generating and sealing at least one plus flap, directly in the vertical flexible packaging machines [e.g., the pillow or pillow pack type of one, two, three, four or more sealing line containers that do not stand upright, or the containers that do stand upright such as those of the English type, gusseted, stand up, stabilo, doy pack or stable bottom/ block bottom, which also have one, two, three, four or more sealing lines], the following technical aspects are solved:
1- the procedure and processes of the 3D compack transformation system are simplified, as it is now possible to carry out the entire transformation (generating and sealing or generating and folding one, two, three or four plus flaps or triangular body flaps, or one, two, three, four or more burr plus flaps or burr flap) of a pre-container before it has been made or filled inside with the product to be packaged, thus saving time and costs in the 3D plus transformation process.
2- the transformation of high production flexible packaging, such as initial packaging or prepackaging produced by **high performance vertical packaging machines for flexible packaging** of 60, 70, 80 or more packaging units per minute, can be covered or undertaken effectively and immediately.
   Therefore, since the 3D plus device can be installed in any of the vertical or horizontal packaging machines on the market, it solves the possibility of transforming any type of initial or pre-container size in a practical, functional, effective and economical way as well as expanding the marketing field.
3- it allows the sealing lines to be applied from the 3D plus system to be safer because they can be carried out when the container is empty without it still being filled with the product to be packaged, so that no particles, matter or substances can come between the packaging and the sealing. It also allows less alteration of the pre-selected sealing temperature so that safer sealing lines will be produced, and the operator will need to spend less time controlling and adjusting the sealing system.
4- make the burr plus flap or burr flap sealing lines easier, simpler and faster, which in addition to conferring greater stability and consistency to the container: they also enable an opening cap to be generated easily and quickly where to serve or take the product packaged inside, since these burr plus flaps or burr flaps can be detatched by pulling on them.

Make these sealing lines on the edges. Later, when the container is tightly closed, it is more difficult because the container holds or necessarily contains a fluid inside (air/gas or/and liquid/paste) that makes the shape of the container more unstable, so if it contains a lot of fluid it will make it difficult to generate the burr plus flap or burr flap and, if it contains little fluid, the container will not be straight but curved, so at least part of the burr plus flap or burr flap may not be generated and sealed.

### EXPOSURE OF THE INVENTION

**A first object of the invention,** is the procedure or processes of generating at least one plus flap or triangular body flap: directly on **the vertical** (or, for example, on horizontal or diagonally inclined) **packaging machines for flexible containers** of the film type in rolls or laminated (or also in tubes or semi-tubes), in which these machines, in a first stage, form a pre-container open at least on one side, in a second stage fill the product to be packaged and, in a third stage the container is sealed (closed tightly all around the contour and sealed on all the perimeter sides) or pre-container, which can be closed (all around the contour and sealed on all the perimeter sides) or open, on at least one of its sides and then transferred to the production plants where they will be filled with the product to be packaged.

For this, at least one device of the 3D plus system will be installed in the vertical or horizontal flexible packaging machines to generate and seal at least one plus flap (on flexible containers, e.g. English type, stable bottom, stand up, stabilo or doy pack), at least one triangular body flap (in containers that are of the pillow type or English type from the middle down and pillow type from the middle up) or burr plus flap (these are made on the edges, preferably horizontally on the front and back side of the pre-container or container, so that it will be sealed over the English fold at the height of the ends of this edge).
- In the vertical packaging machines, when the procedure or processes of the 3D plus system are most optimized (generating and sealing the plus flap, triangular body flap or burr plus flap), it is when the devices of the invention are activated at the moment right after the sealing and cutting jaws of the vertical packaging machines are closed (trapping or transversely holding the film or sheet of the wrapper, blocking its advance) and, preferably, before the pre-container of the product to be packaged is filled.

**A preferential mode of the procedure of the invention is set out below.** Procedure to transform flexible English fold, stable bottom. pillow or half English fold or stable bottom and half pillow containers or pre-containers manufactured on vertical packaging machines, by generating and sealing at least one flap, triangular body flap. English fold plus flap, stable bottom plus flap or burr plus flap.

The Procedure has the following four Stages:
A first stage, in which the wrapper (e.g., a complex two-layer film type sheet on a roll, or also, in a tube or semi-tube) is driven by a displacement mode (e.g. mechanical, such as that of at least one roller driven by a motor or turning cylinder) to the forming tube's forming neck (e.g, cylindrical, quadrangular or rectangular) where the sheet (or tube or semi-tube wrapper) is folded down to wrap the forming tube on all its sides or perimeter contour, so that the sheet will take the form of the forming tube, for example, quadrangular or cylindrical.

Also, if the vertical (or horizontal) machine produces stable bottom flexible containers, in addition to the English fold, it will also generate:
at least one sealed fold with its longitudinal sealing line in at least one of the vertical edges or/ and areas contiguous to it of at least one of the generated side faces of the pre-container, in which, preferably, four of these folds and edge sealing lines are generated, two on the left side and another two parallel on the right side: obtaining,
a more stable, consistent pre-container or container with a support side that makes the base wider and flatter.

A second stage, in which the wrapper advances down the forming tube and will stop just after passing the sealing and cutting jaws, preferably rectilinear and arranged horizontally and,
followed by the sealing and cutting jaws:
- if the vertical packaging machine produces pillow type containers, the sealing and cutting jaws will only be closed (without generating any folds or flaps),
   transversely trapping, clamping and blocking part of the wrapper, in such a way that it will be stretched or in tension in at least the area of the gap between the sealing and cutting jaws and the forming tube arranged vertically, where a previous pre-container is defined.
- if the vertical machine is producing an English fold or stable bottom type container: while the sealing and cutting jaws are being closed, the English fold flaps, characteristic of these two types of containers are generated [preferably at each of the four corners of the container (left or/and right) or / and (top or/and bottom)], by means of a mechanical mode such as a triangular shaped impact body (arranged horizontally), that, when introduced inside every lateral side or lateral face of the pre-container (which is being formed in the vertical machine) it generates the English fold at the bottom of the pre-container, and, at the top of the container, the English fold is generated in the same way but with the impact body being of a geometric quadrangular shape (arranged vertically). In this way, both impact bodies displace part of the sheet on the side face of the container near the apex of the corner inwards, thus generating two parallel triangular flaps folded inwards and which, in the case of being generated by the triangular impact body, the two parallel triangular flaps will be positioned horizontally, forming in turn, between both flaps: a larger triangular flap, as well as forming in the external side area of the container: a narrow gap/cavity or slot arranged horizontally; and, with the quadrangular impact body, two triangular flaps are also generated, folded inwards but, in this case, arranged diagonally separated from each other, so that both
   in turn form in the outer lateral area of the container: an irregular triangular shape (in which its lateral sides are curved) with a cavity or hole; obtaining:
   a flat or additional side on the bottom of the container or pre-container that is on top of the sealing and cutting jaws, which serves as a base for the container to stand upright.

In both cases, the wrapper on top of the sealing and cutting jaws cannot be blocked or loose because the 3D plus flaps of the invention will be generated later, in which the wrapper goes down (the proportional part depending on the size of the width and height of the plus flap to be generated) by folding part of the bottom of the lateral side of it onto at least another part of the wrapper of the flat support side.

A third stage, in which the sealing and cutting jaws must preferably remain closed throughout the transformation process of the 3D plus system and that, depending on the container model to be obtained, one can choose to generate one or more of the plus flaps and/or triangular bodies of the invention, as well as manipulate or transform, by means of a mode, the flaps, triangular body flaps, plus flaps or burr plus flaps that are generated.

The 3D plus procedure consists of or includes the following two steps:

### First step

Press in the direction of the inner seal of the pre-container or container, using at least one rigid or semi-rigid plus impact body [or, e.g., by means of a push mode such as directed air] on / against / with / between / in at least one part [or, also, e.g., against / with / between / in the intermediate area, partial area, complete area] of at least one lateral side or lateral face of the pre-container or / and container (preferably, of an area closer to the sealing and cutting jaws) or area of two or more sides or lateral sides (preferably, of an area closer to the sealing and cutting jaws) contiguous to one end or apex of the pre-container or / and container; so that part of the fluid is displaced towards the contour of the container, increasing the pressure inside the container, as well as producing a local inflation effect, thus obtaining:
at least one wider and flatter supporting or additional side in at least the area or side of the pre-container or container with which the impact body impacts, allowing it to remain stable and upright, as well as modifying the geometric shape of the container or pre-container and,
[at least one plus flap {English fold plus flap (mounted to an English fold), stable bottom plus flap (mounted to an English fold and to at least one lateral side edge flap)} and/or at least one burr plus flap {English fold burr plus flap (mounted to an English fold), stable bottom burr plus flap (mounted to an English fold and to one lateral side edge flap)] or / and [at least one triangular body flap or / and at least one flap or manipulated triangular flap, by means of a 3D compack transformation mode such as, for example, folded on itself {this circumstance means that, prior to folding the flap (15) on itself, the clamp (1a; 1b) has to be opened at least enough so that it can be released and thus the part of the flap (15; 11; 12) be able to move or rotate, or the part of the wrapper, film, sheet, tube or semi-tube, which is or is held, rammed or blocked by the clamp (1a; 1b) when it is in the closed position} or, if not, sealing and cutting the flap (15a) in the form of a strip flap (13)].] on the support side or additional side, or the area limited by a support contour or additional side.

### Second step

Seal, by means of a heat source mode such as a resistor or by ultrasound, at least part of at least one side with at least one sealing line of [at least one plus flap or / and at least one burr plus flap] or / and [at least one triangular body flap or / and at least one manipulated triangular body flap, e.g. folded on itself], defined in the previous step; obtaining:
at least one sealing line that will keep at least one of the support sides or additional side, or the area limited by a support contour or additional side, permanently stable as well as keeping the English fold plus flap, stable bottom plus flap, English fold burr plus flap, stable bottom burr plus flap, triangular body flap, triangular body flap folded over itself or manipulated triangular body flap permanently stable.

**Also, without pretending to be limiting** as to the scope of protection of the invention, the different types of plus flaps and, preferably, the triangular body flap or pre-cut triangular body flap and/or subsequently, can be manipulated by choosing randomly and in combination and/or repetitively, for example, from among at least one or more of any of the options (of the 3D compack flexible packaging transformation system) for manipulating a flap described below:
- seal at least once at least part of at least one side of the triangular body flap or plus flap.
- fold or bend the triangular body flap or plus flap over itself and seal at least once at least part of at least one side of it;
- fold or bend the triangular body flap or plus flap over itself {this circumstance means that, prior to folding the flap (15) on itself, the clamp (1a; 1b) has to be opened at least enough so that it can be released and thus the part of the flap (15; 11; 12) be able to move or rotate, or the part of the wrapper, film, sheet, tube or semi-tube, which is or is held, rammed or blocked by the clamp (1a; 1b) when it is in the closed position} and seal it at least once, at least part of it, and also cut off at least once at least part of the remaining triangular body flap or resulting plus flap;
- seal at least once at least part of one side of the triangular body flap or plus flap, fold it or bend it over itself and seal at least part of it once;
- seal at least once at least part of one side of the triangular body flap or plus flap, fold it or bend it over itself and seal it at least once, at least part of at least a side of it, and also cut off at least once at least part of the remaining triangular body flap or resulting plus flap;
- seal at least once at least part of one side of the triangular body flap or plus flap, and cut off at least once at least part of it;
- seal at least once at least part of one side triangular body flap or plus flap, of the and cut off at least once at least part of it, fold it or bend it and seal it at least once, at least part of it, or also join the rest of the resulting flap or plus flap: to the rest of the container by means of a way to adhere it, as for example, with contact glue, a staple or a strip of tape;
- fold the triangular body flap or plus flap;
- fold the triangular body flap or plus flap and join it to the rest of the container by means of an adhesion mode such as, for example, contact glue, a staple or a strip of tape; and
- seal at least once at least part of at least one side triangular body flap or plus flap; fold it and, optionally, join it with the rest of the container at least once at least part of it, by means of an adhesion mode such as, for example, contact glue, a staple or a strip of tape.

A fourth and last stage, in which, first, the product to be packaged falls from the weighing machine or weighing hopper -- which is located on top of the vertical packaging machinethrough the forming tube into the previous pre-container located in the space between the sealing and cutting jaws and the forming tube of the vertical packaging machine and,
then the sealing and cutting jaws seal (it can also be sealed in earlier stages, once the sealing and cutting jaws are closed) and transversely cut, at the same time, the previous pre-container and the following pre-container (both of which are located on top and under the sealing and cutting jaws) and,
finally, the sealing and cutting jaws are open, returning to the start position or the stop position: obtaining,
   on the one hand, a flexible container with a three-dimensional geometric shape or a geometric body that has been transformed in the vertical machine (or horizontal or, for example, diagonally), as well as it can be sealed and closed in its entirety or open on at least one side and,
   on the other hand, a non-individual and unfinished three-dimensional flexible previous pre-container without sealing or cutting on at least one side or the top part.

Next, a new manufacturing or processing cycle begins for the containers or pre-containers, so the wrapper will move downwards, sliding down the forming tube, a distance that depends on the size in height that one wants to give to the pre-container or container which is to be processed or manufactured: the greater the height of the container, the greater the distance or time that the wrapper moves forward.

**A second object of the invention,** is to protect the invention as a device or devices for application and installation in any of the vertical (or horizontal or diagonally inclined) flexible packaging machines that are already operating in the market today or, on the contrary, are to be manufactured.

The devices are the following:
Device to generate and seal at least one plus flap, burr plus flap, triangular body flap of a flexible pre-container or container of a vertical (or horizontal) packaging machine with a forming tube for flexible film type containers in rolls, sheets, tubes or semi-tubes.

This device is installed in an area around and next to the following pre-container and previous pre-container ((preferably without still containing anything inside of the product to be packaged - especially if it is not a liquid product - as well as not being completely closed, by keeping at least one side unsealed)) which is held and delimited between the sealing and cutting jaws -- which hold it and/or block it -- and the forming tube of the vertical machine.

This device will preferably be fixed to the sealing and cutting jaws, but it can also be fixed to a support (fixed in turn to the vertical machine) or to another element or part of the vertical machine, or it can also be fixed to the floor.

Likewise, the device of the invention is applicable both in a container (an individual unit, this being closed in its entirety or open on at least one side, in which it can be inside the vertical or horizontal machine, or be outside it) like in a previous or following pre-container (the one that is unfinished as it has not been completely transformed and still remains in the vertical or horizontal machine, as well as it may contain the packaged product inside or, preferably, it is empty). Therefore, any one of the transformation devices of the 3D plus system will preferably be fixed on top or / and on the bottom of the sealing and cutting jaws, and to [(left or / and right) or / and (in front or / and behind)] of the previous pre-container and the following pre-container.

Therefore, the three-dimensional transformation of the 3D plus system can be done completely, both at the top and bottom half of the containers or pre-containers, generating at least one flap, triangular bodies or burr (on the edges and/or lateral sides, or areas that are contiguous to these), although the result is not exactly the same in terms of appearance, because the original pre-container or container -before the transformation-- is not the same in appearance either, since the bottom side and the lateral sides from the middle down of the container or pre-container are flat and, from the middle up, they are not flat both on the top side and on the lateral sides where the wrapper is pushed inwards to form a nonhomogeneous, irregular hole. For this reason, the plus flaps generated and sealed (by means of the 3D plus transformation) on the bottom of the pre-container or container will have a uniform, smooth and homogeneous appearance, without protruding peaks, and the plus flaps on the top of the pre-container or container will be more irregular as they contain some folds, as well as this one of a triangular configuration protruding outwards in the form of a peak.

The 3D plus device, is equipped with at least one impact body driven by a mode, for example, of mechanical displacement of at least one linear or swivel cylinder (the most optimal, because the rotation striking action is carried out from top to bottom and, also, because it is easier to locate), where the impact body is fixed to its rod, as well as at least one sealing (or cauterization) system unit by means of a heat source such as that of at least a resistance or by ultrasound, in which this can be arranged or fixed to the (most optimal) impact body or / and to the vertical machine's sealing and cutting jaws; aiming at,
first, to generate with the impact body on the edges or areas contiguous to the shaped or unfinished container: a flap, triangular body or burr and,
second, seal at least once on at least part of one side of the triangular body flap, English fold plus flap or burr flap generated.

On the other hand, the plus flap, burr plus flap or, above all, the triangular body flap that is generated from a pre-container or flexible pillow type container or half English fold or stable bottom and half pillow type containers: can also be manipulated or transformed by means of other devices, procedures or methods of the 3D compack system described above in 5 Patent Applications also of my invention:
[PCT / ES2012 / 000261-WO201303903; PCT / ES2014 / 000041 - WO2014140464;
PCT / ES2015 / 000131 - WO2016042176A1; PCT / ES2015 / 000174-WO2016087690A1;
PCT/ ES2016 /000085 - WO2017021570A1].

A choice can be made, without claiming to be restrictive as to the extent of the protection, in a random, combined and/or repetitive manner from among at least one or more of any of the following options for handling a flap:
- seal at least once at least part of at least one side of the triangular body flap or plus flap.
- fold or bend the triangular body flap or plus flap over itself and seal at least once by at least one sealing line on at least one side {this circumstance means that, prior to folding the flap (15) on itself, the clamp (1a; 1b) has to be opened at least enough so that it can be released and thus the part of the flap (15; 11; 12) be able to move or rotate, or the part of the wrapper, film, sheet, tube or semi-tube, which is or is held, rammed or blocked by the clamp (1a; 1b) when it is in the closed position}

- fold or bend the triangular body flap or plus flap over itself and seal it at least once at least part of it, and also cut at least once with at least part of the rest of the resulting triangular body flap or plus flap;
- seal at least once at least part of one side of the triangular body flap or plus flap, fold it or bend it over itself and seal at least part of it once;
- seal at least once at least part of one side of the triangular body flap or plus flap, fold it or bend it over itself and seal at least once at least part of at least one side of it and also cut at least once at least part of the rest of the triangular body flap or the resulting plus flap;
- seal at least once at least part of one side of the triangular body flap or plus flap, and cut at least once at least part of it;
- seal at least once at least part of one side of the triangular body flap or plus flap, and cut at least once at least part of it, fold it or bend it and seal at least part of it once, or also join the rest of the resulting flap or plus flap: to the rest of the container by means of a way of adhering it such as contact glue, a staple or a strip of tape;
- fold the triangular body flap or plus flap;
- fold the triangular body flap or plus flap and put it together with the rest of the container by means of a way of adhering it such as contact glue, a staple or a strip of tape; and
- seal at least once at least part of at least one side of the triangular body flap or plus flap; fold it and, optionally, put it together with the rest of the container at least once at least part of it by means of a way of adhering it such as contact glue, a staple or a strip of tape.

### Device to stretch the wrapper by means of arms or blades before the flap, triangular body. English fold or burr plus flap is generated

A device to widen and stretch the wrapper of the pre-container lengthways (forward and backward) or / and widthwise (towards the sides) of the area, nearby area or area further up from where the flaps are generated (flap, triangular body flap, English fold plus flap, stable bottom plus flap, burr flap or burr plus flap), by means of a support body mode such as arms or blades as tensioners ((they can also be extendable and/or telescopic) that are fixed to the forming tube and remain inside the wrapper; in such a way that it will produce an effect in the area of expansion or configuration of the shape of the container to be obtained, prior to being sealed and/or if the pre-container is an individual unit sealed or not tightly.

This device will be arranged or located at the height (or approximately) of the pre-container: intended to facilitate, on the one hand, the formation of the geometric shape of the container or pre-container in the optimum dimensions (especially in a pillow type container) and, on the other hand, to prevent the formation of folds in the area where the flap, second flap over English fold, triangular body or, for example, the burr of the 3D plus system is to be generated.

### Device to insufflate at least one fluid into the pre-container before the flaps of the invention are generated

A device to widen and inflate the wrapper of the pre-container but, above all, by the area, nearby area or area further up from where the flaps of the invention are generated (triangular body flap, English fold plus flap, stable bottom plus flap, burr flap or burr plus flap), by means of a way to insufflate a fluid such as air and/or gas; in such a way that a general inflation effect will be produced (or / and inflation aimed at specific areas where the flap, triangular body, English fold or burr plus flap of the pre-container is generated) or configuration of the shape of the container to be obtained, before being sealed and/or if the pre-container is an individual unit sealed or not tightly.

This device will be arranged or located inside the wrapper and fixed to the forming tube, as well as optionally at least one air blowing tube can be directed (e.g. with at least one air blowing tube hinged so that it can be bent) by positioning it right inside the wrapper of the pre-container in the position and/or at the height (or approximate) where the flap, triangular body, English fold or burr plus flap is generated: intended to
on the one hand, enable the geometrical shape of the container or pre-container to be formed in the optimum dimensions (especially in a pillow type container) and,
on the other hand, that no folds are formed in the area where the flap, second flap over English fold, triangular body is to be generated

### Device to stretch the wrapper by means of suction cups before the flap, triangular body. English fold or burr plus flap is generated

A device to widen and stretch the wrapper of the pre-container lengthways (forward and backward) or / and widthwise (towards the sides) of the area, nearby area or area further up from where the flap, triangular body, second flap over English fold or burr plus flap is generated, by means of a mode of at least one suction cup, with or without air aspiration.

These will be fixed outside the wrapper to at least one element or part of the packaging machine, as well as, optionally, at least one suction cup can be fixed to the rod of a linear or rotating cylinder to approach the wrapper; in such a way that it will produce an effect in the area of expansion or configuration of the shape of the container to be obtained, prior to being sealed and/or if the pre-container is an individual unit sealed or not tightly.

### Conical Flap Removal Device

This device will act, before at least one flap is generated (plus flap; burr plus flap, triangular body flap; manipulated triangular body flap (15) to the left and right of the top of the following pre-container, a cone-shaped flap without folds will be generated, by means of a conical flap removal device, in such a way that it will facilitate the following generation in / on this conical flap: at least one flap (plus flap; burr plus flap, triangular body flap; manipulated triangular body flap (15) without folds, wider or broader.

The device consists of the following elements or parts:
- On the one hand, at least one support body such as a blade, arm, claw or even a chest of drawers. These are driven mechanically, e.g. by a rotary or swivel actuator or at least a linear cylinder, in which the support bodies are located on the left and/or right, preferably from the middle or middle down of the side face of the following pre-container or, in the case of the drawer unit, it will be fixed right below the following pre-container so that the same can be pushed in, from the middle down (or approximately).

These device elements will preferably be fixed to the axis of a rotary or swivel actuator or to the rod of a linear cylinder (if the following pre-container is to be pushed or moved from the sides and/or from the bottom); intended to:
in the case of being attached to a rotary actuator, flip over to the left or / and the right side the following pre-container which is secured transversely at the top by the sealing and cutting jaws (1), and
in the case of being fixed to a linear cylinder, move, preferably, laterally or laterally upwards, or diagonally upwards; and,
   - on the other hand, of at least one swivel (or rotary) actuator or of at least one pneumatic or electric linear cylinder, fixed to a support mode facing at least one lateral side or that of the front or back side of the pre-container or container, and on which its axis is arranged at a height right over the middle or middle down (or approximately) of the pre-container, and facing the front and back sides of the pre-container or container;

The device is preferably fixed under the sealing and cutting jaws (1) in front of the following pre-container, and at the middle or the middle down the front or back side of the following pre-container (located under the sealing and cutting jaws (1)), and secured transversely by the same at the top of the pre-container: intended to
move the pre-container or container with a pendular (or linear) movement to the left and / or right and in a rotation degree between 1° and 90° (or approximately), with 45° being the most optimal but that, in any case, depending on the dimensions, volumetry and the quantity of fluid packed inside (more fluid, less swivel or rotation degrees); in such a way that, when turning, pressure will be exerted by impacting into the pre-container {the bottom part of the sealing and cutting jaws} with {the part from the middle up, apex or area of a forth up from the top (or approximately) towards where the pre-container is directed with the pendulum movement; producing a local inflation area in the area of a forth up from the top (or approximately) of the pre-container that has not been impacted by the sealing and cutting jaws (1);obtaining:
at least one support side or additional transitional side in the area of the pre-container with which the sealing and cutting jaws impact (1) and,
a flap with an inflated conical configuration, without folds, in the {apex area or quarter area (or approximately) of the top part of the pre-container} opposite {to the other part of a quarter from the top of the pre-container that has been impacted by the sealing and cutting jaws (1).

### Pressing Platform or Pressing Drawer Device

This device will be located right under the following pre-container that is found under the sealing and cutting jaws of the vertical packaging machine.
- It consists of a support base (adjustable), preferably with a drawer, where the part from the middle down (or approximately) of the following pre-container will be inserted inside the pressing drawer or will rest on the pressing platform: intended to press the following pre-container that is located between the pressing platform and the surface under the sealing and cutting jaws, upwards: obtaining
   a following pre-container that has been crushed and widened from three fifths to the top (or approximately), to facilitate the generation of wider plus flaps in relation to the side or lateral side of the pre-container, and the pre-container will acquire a cubic shape from the middle up (or approximately).
- The pressing platform or drawer will be moved upwards, by means of a mechanical mode such as a linear cylinder actuator arranged in a vertical position (from the bottom up) and fixed to a support, where the underside of the pressing platform or drawer is fixed to the actuator's rod: intended to push the following pre-container upwards, until it is crushed against the underside of the sealing and cutting jaws (1).

### Ramming Device immobilizer of the support side of the previous pre-container

This device will be located under the forming tube and/or preferably inside and under the whole forming tube.

The device comprises the following elements:
- an impact body by means of a rammer mode, preferably flat and of the same geometrical shape as that of the support side that acts as a base, preferably square or circular, but that in any case, this impact body will be defined by a perimeter structure (preferably quadrangular or circular), as a chassis, which is hollow in the area right under (or approximately) the forming tube, to allow the product to be packed to fall down the forming tube into the previous pre-container, without any part of the rammer intervening.

The rammer may be smaller or narrower on at least one of its sides (or the perimeter outline) so as to free up space in the area between the outer perimeter of the previous pre-container support side and the lateral sides or the outer perimeter of the rammer, so as to allow the plus impact bodies, when operated, to fold at least part of the bottom area of the wrapper of at least one side or lateral side: over at least part of at least one side or outermost area of the wrapper of the supporting side, thus generating at least one plus flap, and
- a drive mode by mechanical means such as a linear actuator or pneumatic or electric linear cylinder, on whose rod is fixed to the rammer at at least one point.

This device is intended to ram and immobilize with the impact body rammer: the support side or face that acts as a base of the previous pre-container, blocking the wrapper which is between the rammer (located on top) and the surface (preferably flat) of the top part of the sealing and cutting jaws, located under the wrapper.

The procedure for the ramming device is the following:
A first step, in which the wrapper, that wraps the forming tube, advances until it surpasses the sealing and cutting jaws; then, it is closed by trapping and holding the wrapper and, at the same time, optionally, the English fold flaps and/or the flat English fold flaps can be generated or not.

A second step, where the rammer impact body is operated, which is fixed inside the forming tube and is therefore also located inside the following pre-container (the wrapper in an initial three-dimensional geometric body shape that is between the sealing and cutting jaws and the forming tube): thus blocking and immobilizing part of the base side so that the pre-container does not move, shift or lift, thus making it easier to optimally generate the plus flaps at a later date.

A third step, in which at least one plus impact body is operated from on top and/or under the sealing and cutting jaws, where there is also a pre-container secured and trapped by the sealing and cutting jaws: obtaining
at least one plus flap, because at least part of at least one side or face of the lower part of the previous pre-container wrapper has been folded: in at least part of the contour or perimeter area and/or the area contiguous to the perimeter (or outer or borderline area) of the inner side of the supporting side, thus generating at least one plus flap.

A third step, in which once one or more of the plus flaps have been generated, the rammer impact body returns to the initial standing position and,
the sealing and cutting jaws, seals and cuts or just cuts (since it has been previously sealed once the sealing and cutting jaws were closed):
the lower part of the previous pre-container and
the lower part of the following pre-container.

The sealing and cutting jaws are then opened and the processing cycle for the flexible 3D plus containers begins again.

### Extendable and Retractable Forming Tube Device

This device has two forming tube sections (preferably square or cylindrical), one of which is underneath the other, this being the one that is mobile, driven by means of a mechanical mode such as: that of at least one linear cylinder, which is fixed to the inner side of the forming tube at the top, which is stationary and fixed to the vertical machine.

The mobile forming tube will extend or move downwards: a distance or length less than the gap between the lowest part of the mobile forming tube itself and the radius of action of the impact bodies ( ) of the invention that generate the plus flaps; in such a way that it will allow these impact bodies to rotate completely until they reach the sealing and cutting jaws (1) without the mobile forming tube blocking their passage. Likewise, when the plus impact body ( ) is completely rotated, the wrapper must be able to move downwards to form the fold of the plus flap generated, so that the wrapper that is on top of the sealing and cutting jaws (1), which is in the closed position: must be loose so as to allow the plus impact bodies of the invention to move completely without tearing the wrapper, and finally be able to generate from the plus flaps, as it can be inserted into the said gap by folding part of the side wrapper over another part of the wrapper on the flat support side (or side acting as a base) of the bottom part of the previous pre-container.

The mobile forming tube, is therefore intended to facilitate, on the one hand, that the wrapper of the previous pre-container is widened from the bottom and, on the other hand, that the wrapper is kept taut or stretched to prevent folds from forming, facilitating the optimal folding of the wrapper when the plus flap is generated.

The procedure is the following:
Once the wrapper of the previous pre-container is secured and blocked by the sealing and cutting jaws (1) and preferably before the previous pre-container is filled with the product to be packaged and the plus flaps are generated:
the mobile forming tube, will be moved downwards and parallel to the fixed tube, by means of a linear cylinder which is fixed to the inner side of the forming tube and to which the mobile forming tube is fixed on its rod,
then, at least one of the sealing and cutting jaws (1) is operated, driven by the rotary actuator, generating a plus flap. This plus flap is also sealed immediately afterwards,
next, immediately afterwards, the impact body plus flap and the mobile forming tube returns to the initial starting point and,
finally, the inside of the previous pre-container is filled with the contents to be packed, that fall from a multi-head dosing or weighing machine located on top of the two forming tubes ( ).

Next, the following processes of the transformation process of the 3D plus system of the invention will be given.

**A third object of the invention,** is that of a vertical packaging machine for pre-containers or flexible containers (in film on a roll or, for example, laminates, in tube or semi-tube) with more different applications that add to the characteristics of the vertical machine itself or, likewise, that of perfecting or improving a vertical packaging machine that produces (forming a three-dimensional shape, filling and sealing) pre-containers or flexible containers (in film on a roll or, for example, laminates or in tube or semi-tube). These machines make or produce flexible containers or pre- containers, for example, English fold, stable bottom, pillow, English fold and pillow, stable bottom or pillow or stand up.

**The pre-container**, is the flexible container that still remains in the vertical packaging machine, being processed and/or transformed not yet being an individual container unit as it has not been completely closed or tightly sealed, as well as not having been sealed or cut at least one of its sides. There are two types of pre-containers:
A- The previous pre-container is part of the wrapper, film, sheet, tube or semi-tube that is of a three-dimensional tubular geometric shape, as well as remaining open in the vertical packaging machine on at least one side. It is located between the forming tube and between the sealing and/or cutting jaws in the closed position, which has not yet acquired the final intended geometrical shape, and the pre-container may or may not contain the product to be packaged inside.
B- The following pre-container or post-container is part of the wrapper, film, sheet, tube or semi-tube that is of an unfinished geometric body shape, or finished, that remains closed in the vertical (horizontal or, for example, inclined or diagonal) packaging machine, and is located right under the sealing and cutting jaws that hold it in place when operated in the closed position. It has not been cut yet, so it is not a single packaging unit. The post-container may or may not contain the product to be packaged inside.

The container, is the one that has been cut and is not part of the wrapper since this is an individual flexible packaging unit, which has acquired the intended geometric body shape.

There are two types of containers:
A- The container sealed on all sides and closed in its entirety.
B- The container open on at least one of its sides or closed in its entirety: intended to be an empty container that will be taken to the production plants to be filled with the product to be packaged and sealed tightly.

**Next, different machines of the invention are exposed** depending on the type of forming tube and of the model of the final container that is intended to be obtained:
Vertical packaging machine for flexible containers of. for example, the English fold, stable bottom or pillow type, consisting mainly of a forming tube (e.g.. of a square or cylindrical shape), of at least one set of sealing and cutting jaws, of a device of at least one impact body to generate (at least one plus flap of the invention and/or at least one triangular body flap) and/or burr plus flap, as well as of at least one heat source for sealing.

The invention involves a refinement and improvement of these vertical (or, for example, horizontal or diagonally inclined) packaging machines for flexible containers which contain at least one fluid and, optionally or additionally, may contain, for example, solids or / and (granules or / and powders), Therefore, the invention is applicable as a device or devices to install and couple to vertical (or, for example, in horizontal or diagonal) machines already existing in the market, which can be new (in-plant manufacturing) or also vertical machines that are already operating in production plants; in both cases these machines comprise:
- means of generating container bodies, such as a square or cylindrical forming tube, and
- a method of filling the contents to be packaged into the container, such as a dosing weighing machine, and
- at least one jaw device or set of two parallel jaws with which flexible containers are transversely and horizontally (top and bottom) sealed and cut, and
- optionally or additionally, a sealing mode intended to seal lengthwise, at least once, the wrapper or sheet that wraps the forming tube by adopting its shape, and
- optionally or additionally, means of generating at least one English fold type flap of a triangular configuration;
where the machine is characterized because it has:
- at least one **3D plus device of the invention,** intended to hit, by means of an impact body mode, at least part of at least one side or lateral side or edge, or area contiguous to the edge, or also area of a apex or area of two sides or contiguous sides of the container or pre-container: generating a flap ( ), triangular body flap ( ), plus flap, burr plus flap ( ) or cut triangular body flap. The plus impact body must be fixed, for example, to the sealing and cutting jaws, to a support fixed to the machine or to at least one component or part of the machine, and must be arranged so that the rod or the impact body reaches the side or lateral side of the pre-container, and
- at least one **sealing system** {one for each plus flap (), burr plus flap, triangular body flap () or triangular body flap in the form of a strip (23) longitudinal to the middle of the flap}, by means of a heat source such as a resistance, laser or ultrasound; arranged close to the top or bottom of the side or lateral side, as for example, more optimally, is attached to the same impact body, that generates the plus flap or triangular body flap, as well as may be attached to the sealing and cutting jaws. Likewise, it can also be fixed to the surface or side, preferably flat on the top and/or bottom of the sealing and cutting jaws: intended to
   seal at least once with at least one sealing line at least part of at least one side of at least one English fold plus flap, stable bottom plus flap, burr plus flap, triangular body flap or strip flap, defined in the previous step; obtaining:
   at least one sealing line that will permanently keep at least one of the support sides or additional side, or the area limited by a support contour or additional side, stable as well as permanently keeping the English fold plus flap, stable bottom plus flap, English fold burr plus flap, flap plus stable bottom burr plus flap or triangular body flap, stable.

**Optionally, the vertical packaging machine for flexible containers** can also have the following elements, devices, procedures or processes:
1.- a device designed to provide a sealed burr around the entire perimeter of at least one of the lateral sides of the so-called stable-bottomed containers, located on the sides of the forming tube, preferably square; in which, first, by a means such as a mechanical method, at least one edge fold will be generated on at least one lateral side of the pre-container or container and, second, at least one sealing system, by means of a heat source such as a resistor or by ultrasound, to seal at least part of the edge or area of the edge generated.
2.- A device intended to widen and stretch the wrapper of the pre-container lengthways (forward and backward) or / and widthwise (towards the sides) of the area, nearby area or area further up from where the English fold plus flap, stable bottom plus flap, burr plus flap, triangular body flap, triangular body flap folded or bent over itself, burr flap, triangular body flap cut and sealed in a strip are later generated.

The devices are the following, without claiming to be restrictive as to the scope of protection of the invention:
2.1 at least one system of rods or frame as a tensioner (may be extendable and/or telescopic), which are fixed to the inner side of the forming tube remaining inside the wrapper and of the previous pre-container, which is secured on the sealing and cutting jaws, and which has not yet been sealed or cut by the upper part of the pre-container, by means of a cutting mode.
2.2 At least one system of suction cups to stretch the wrapper from the outside, with or without air suction, or also by means of air directed into the previous pre-container (e.g. from the inside of the forming tube by means of at least one air tube (hinged or not) connected to an air pump; in such a way that it will produce an effect, in the area or in the pre-container, of three-dimensional inflation and pre-forming of the intended geometrical shape.

This device is to be arranged or located at the height (or approximately) of the pre-package: it is intended to facilitate, on the one hand, the formation of the geometrical shape of the container or pre-container in the optimum dimensions (especially in a pillow type container) and, on the other hand, to prevent the formation of folds in the area where the plus flaps of the invention are to be generated.

3.- The vertical (or, for example, horizontal) packaging machines that produce flexible pillow type containers or also hybrid flexible containers, English type from the middle down and pillow type from the middle up, there will be a device to fold or bend at least once at least part of a triangular body flap (or strip) over at least part of another part of it. The procedure involves the following steps:
- a first step, optional and before the flap, triangular body () or strip () [the strip is generated by sealing and cutting at least part of at least two segments of the flap or triangular body on the left and right side] is folded or bent over itself. The following will be done:
   at least part of at least one side of at least one sealing line ( ) through at least one side of the triangular body flap ( ) or strip ( ), in such a way that it will subsequently facilitate the folding or bending of the triangular body flap ( ) or strip () by at least any one of the sealing lines ( ) which have been intended to be made and,
- a second step, once the flap or triangular body () or strip () has been folded or bent at least once over itself:
   seal at least once on at least one side of at least part of the edge and/or contiguous area to the edge that has been generated by folding or bending the flap, triangular body flap or strip at least once over itself, in such a way that it will cause the flap, triangular body flap () or strip () to be permanently held in place folded or bent at least once over itself.

4.- Any other device, procedure, process or, likewise, different ways of manipulating the flap, triangular body or edge of the 3D plus system, reflected and protected in four Patents of Invention prior to this Description of the Invention Report; they are the following: PCT / ES2012 / 000261 - WO201303903; PCT / ES2014 / 000041 - WO2014140464; PCT / ES2015 / 000131 - WO2016042176A1; PCT / ES2015 / 000174 - WO2016087690A1; PCT / ES2016/000085 - WO2017021570A1.

**A forth object of the invention,** the different and unique types of flaps generated on the pre-containers or containers; these are the following:
- **English fold plus flap,** it has a triangular trapezoid shape, and is generated in the area or contiguous area (on top or / and under) or / and (to the left or / and right) of the lateral face or side of the pre-container or container in which, previously, an English fold vertical flap has been generated, this is of a triangular configuration shape arranged in a sloping plane (or curvilinear sloping) position.

Subsequently, this English fold plus flap is preferably sealed at least once on at least one side of at least one sealing line, by means of a heat source such as a resistor.

Also, optionally, the flap may be adhered by means of a method such as contact glue or by means of grippers).
- **flat English fold plus flap,** it has a rectangular trapezoid shape, and is generated in the area or contiguous area of (on top or / and under) or / and (to the left or / and right) of the lateral face or side of the pre-container or container, preferably on the lateral side of the bottom. This English fold plus flap is made on English fold type pre-containers or containers or also those that are English fold from the middle down and pillow from the middle up. In any case, this flap is generated in an area on the lateral side or nearby area, preferably in the lowest part of the pre-container or container, where the English fold has been previously generated and also, at the same time, a folded flap with a triangular configuration has been generated in a horizontally oriented plane, in which the flap, starting from the outermost side, is inserted into the pre-container or container, right on top of the lower end of the side that acts as a support side. Subsequently, this flat English fold plus flap is sealed on at least part of at least one side of at least one sealing line.

Also, optionally, the flap may be adhered by means of a method such as contact glue or by means of grippers).
- **stable bottom plus flap,** this flap and sealing line is generated in the same way and in the same area as the flap and sealing line generated in the English fold plus flap. The only thing that changes is that, previously, it has been generated longitudinally in at least part of the wrapper of at least one of the four edges and/or contiguous zones to the same, defined by the forming tube:
   at least one fold of at least part of the adjoining wrapper of two contiguous sides forming an edge, by means of a mechanical folding method, and
   at least part of at least one side of at least one sealing line in the fold, by means of a heat source such as a resistor.

The fold and the seal sealing line will be carried out at the same time, continuously and simultaneously, as the wrapper advances down the forming tube, in this case, quadrangular.

Therefore, when the stable bottom plus flap and its corresponding sealing line are generated, it is going to be done (both at the top and at the bottom of the container) on this fold and vertical edge sealing line that partially or perimetrically borders the lateral side, and this I will call **lateral side vertical edge flap:** obtaining
a side that makes a wider and more square base, as well as produces a greater consistency, rigidity and stability of the pre-container or container. This fold and sealing line of this lateral side vertical edge when the English fold flap is generated: will be arranged in a curved position, but then it turns into a vertical or vertical inclined inwards position.
- **flat stable bottom plus flap,** this flap and the corresponding sealing line is generated in the same way and in the same area as the flap and sealing line generated in the flat English fold plus flap. The only thing that changes is, that at least one vertical edge flap has also been generated on the lateral side.

This lateral side vertical edge flap is preferably made on the entire two vertical edges of the lateral side that wraps the forming tube of the vertical machine so that when the container or pre-container is closed or sealed on top and underneath: a vertical edge flap is obtained on the entire perimeter of the lateral side; so that, when the flat English fold plus flap is generated, in the area of the pre-container or container where it is widened and the English fold is generated horizontally: the fold and sealing line of this lateral side vertical edge will also be in a horizontal position, but will then turn into a vertical or vertical inclined inwards position.

Therefore, when the flat stable bottom plus flap and its corresponding sealing line are generated: this will be made (in the upper part or / and in the lower part of the container) on this fold and vertical edge sealing line arranged in at least part or all of the lateral side perimeter, as well as on the triangular shaped flap arranged inside the container, which is optionally generated when making the English fold: obtaining a side that makes a wider and more square base.
- **English fold burr plus flap,** it is of a rectangular trapezoid shape, and it is made on at least one edge or area contiguous to it generated (on the front side or / and the back side) or / and (on top or / and under) the pre-container or container but which, in turn, has also been generated on the sides or lateral sides of the container or pre-container and on top or / and under: at least one flat or inclined English fold plus flap.

The burr flaps of the lower and upper front and back side of the pre-container or container make the container or pre-container more stable and consistent. Also, the burrs on the top side can be in turn sealing lines, which can be removed by pulling on at least part of the wrapper from the side containing the English fold burr plus flaps.

This burr flap is generated in two steps, first, the area or contiguous area on the upper and lower side of the edge is crushed or joined: generating a fold and, second, at least one side of at least part of at least one sealing line is sealed by a heat source such as a resistor.

Also, this flap can be generated after or before the flaps on the side of the pre-container or container are generated.
- **stable bottom burr plus flap,** this flap and sealing line is generated in the same way and in the same place and area as the one generated in the English fold burr plus flap. The only thing that changes is that a vertical edge flap has also been generated on at least one of the lateral sides of the pre-container or stable bottom type container.
- **burr flap,** this flap and sealing line is generated in the same way and in the same place and area as the one generated in the English fold burr plus flap. The only thing that changes is that it is generated in a pre-container or pillow type container, or half pillow type and half English fold or stable bottom, so it will be generated next to the lateral side where a triangular body flap, manipulated triangular body flap, or a flap folded over a triangular body is generated. Likewise, a triangular body can also be considered as a burr flap with its corresponding sealing line: if it is made, for example, in the middle of the edge or the front or back side of the top or / and bottom of the pre-container or container, since this is not made by mounting on top or on at least part of the flap or the fold of the: English fold flap, flat English fold plus flap and a flap on a English fold bottom.
- flap, it is not of a triangular shape, and preferably it is of a trapezoid shape because it has been cut and sealed, for example, from a triangular flap.

The resulting flap will preferably be sealed. The flap can also be adhered by means of a method such as contact glue or by means of grippers.
- **triangular body flap,** it is of a triangular shape and is generated, by means of an impact body, when this hits on the side or lateral side (left or / and right) or / and (on top or / and bottom) of a pre-container or container, for example, of a pillow type or also mixed: half English fold or stable bottom type and the other half pillow.

Optionally, at least part of at least one side can be sealed by at least one sealing line of the triangular body flap, preferably at the intersection of the flap and the rest of the body of the container or pre-container.
- **manipulated triangular body flap,** it is the same as the triangular body flap, being sealed or not, but, in this case, it will be manipulated, by means of a 3D or 3D plus compack mode, being able to choose in a random and combined and / or repetitive way from at least one or more of any of the following options:

[Not intended to be limiting as to the scope of protection of the invention]
fold and adhere the flap by means of a way such as contact glue or by means of grippers; seal only; fold and seal; seal, fold and seal; seal and glue; seal, fold and glue; seal and cut; seal, cut and glue; cut, seal and glue; fold or fold on itself and glue; seal, fold or fold over itself and glue; fold or fold over itself and seal; seal, fold or fold over itself and seal; seal, fold or fold on itself, seal and cut; fold or fold on itself, seal and cut; fold or fold on itself, seal and glue; seal, fold or fold on itself, seal and glue; seal and cut, fold or fold on itself; seal and cut, fold or fold on itself and glue; seal and cut, fold or fold on itself and seal.
- **triangular body flap folded over itself,** it is a manipulated triangular body flap that is generated, in a preferential way, by folding or bending at least once at least part of this triangular body flap (sealed or not previously) over at least part of another part of it.

**A fifth object of the invention,** are the different and unique sealing lines applied to the different types of flaps of the invention generated from a flexible container (sealed on all its sides, as well as closed in its entirety by all of the external contour) or flexible pre-container (it has not been sealed in its entirety and still remains in the vertical packaging machine as part of the wrapper that goes down the forming tube, as well as it has almost completely acquired the intended geometric body shape but still remains open at the top, so as to subsequently be filled inside with the product to be contained).

They are applied right after the impact body upon impact generates at least one flap on at least one side or lateral side of the top and bottom part of the container or pre-container, e.g. English fold or stable bottom type.

Different sealing lines can be distinguished:

### - English fold plus flap sealing line (25a)

This is done on top and/or under a plus flap generated on the English fold, which is positioned vertically (or, e.g., inclined, curved or diagonally) and not in a horizontal plane, since the pre-container or container does not rest or sit on the flat surface of the side on top of and under the sealing and/or cutting jaws: obtaining, a permanent English plus flap, which is either rectangular-triangular or rectangular in shape, depending on the verticality or inclination of how the English plus flap is located prior to generating the English plus flap, as well as the side or lateral side area of this plus sealing line, an oval-triangular cavity or hole is formed.

### - Flat English fold plus flap sealing line (25b)

This is done on top and/or under a plus flap generated on the English fold, which is positioned horizontally, because the pre-container or container rests or sits on the flat surface of the upper and lower side of the sealing and/or cutting jaws: obtaining a permanent English fold plus flap, which is of a rectangular shape, as the area of the side or lateral side contiguous to this flat English plus fold sealing line, is of a flat shape arranged vertically.

### - Stable bottom plus flap sealing line (25c)

It is made in the same way and produces the same effect as the one made in the English fold plus flap sealing line but, in this case, this sealing line can also be mounted on top (if it is made on the top side or on the inside one) and arranged below (if made on the bottom side or on the outside one) of the lateral side vertical edge flap previously generated on at least one lateral side of the pre-container or container.

### - Flat stable bottom plus flap sealing line (25d)

It is made in the same way and produces the same effect as the one made in the flat English fold plus flap sealing line, but, in this case, this sealing line can also be mounted on top (if it is made on the top side or on the inside one) and arranged below (if made on the bottom side or on the outside one) of the lateral side vertical edge flap previously generated on at least one lateral side of the pre-container or container.

### - English fold burr plus flap sealing line (26a)

It is made on the edge (or / and contiguous area to it) of the bottom (or support) side or / and top of the front or back side of the pre-container or container, in which this edge is more optimal when it is previously arranged with the sides or contiguous sides at right angles, because it has been generated when the lower part of the pre-container or container was sitting horizontally: on the sealing and / or cutting jaws.

Also, this plus sealing line will be made on at least part of the English fold flap, as well as sealed at least once by at least one plus sealing line: the entirety of this edge or English fold burr plus flap that has been previously generated.

### - Stable bottom burr plus flap sealing line (26b)

It is made in the same way and produces the same effect as the one made in the English fold burr plus flap sealing line but, in this case, this sealing line will in turn be mounted on top (if it is made on the top side or on the inside one) and arranged below (if made on the bottom side or on the outside one) of the lateral side vertical edge flap previously generated on at least one lateral side of the pre-container or container.

The sealing of the different types of sealing lines is done by means of a heat source mode such as resistance or ultrasound, as well as the sealing of: at least part of at least one side of at least one sealing line of any one of the plus flaps, burr flaps, triangular flaps or manipulated triangular flaps.

These sealing lines can be made in different ways, the most significant being those described below but which, in any case, are not intended to be restrictive as regards the scope of protection of the invention:
on at least part or all of the area of intersection of the plus flap and the remainder of the container or pre-container, or
on at least one part of the flap with at least one sealing line perpendicular to the plus flap or lateral side, apex or the area contiguous to this o, for example, making
at least one sealing line in the apex forming the top and lateral sides of the plus flap, so that at least part of two contiguous faces are sealed, or this sealing line carried out in the apex and in turn at least part of a sealing line in the area of intersection of the plus flap and the container; or, for example,
on at least part of at least one side of the plus (English fold and/or burr) flap of at least one sealing line in the form of a circle, a square or in diagonal.

In order for these sealing lines to be carried out, the following two steps must first be taken:
a first step, in which the English fold flap is generated [two folds of a triangular configuration parallel in the direction of the inside of the container and which can be arranged in a horizontal plane or in an inclined plane depending on the shape of the container or pre-container or if the latter, for example, is of the English fold or of a stable bottom type in the upper and/or lower part of the pre-container or container: obtaining an inflation effect in which the pre-container or container acquires a three-dimensional rectangular prism or a parallelepiped geometric body shape and,
a second step, of impacting by means of an impact body in / between / on at least part of at least one side face or lateral side, or, the contiguous area / area around / area of the contiguous side face / intersection area of the lateral side (optionally, at least part of at least one contiguous side can also be added): containing the English type flap or English fold.

It is optimized the most when the sealing is carried out, preferably, in the intersection area of the generated flap and the rest of the pre-container's (the one that has not yet been tightly sealed) or container's (a completely sealed individual unit) body.

This sealing line, of the invention of the English fold plus flap, flat English fold plus flap, stable bottom plus flap and flat stable bottom plus flap, English fold burr plus flap and stable bottom burr plus flap, gives the container or pre container a greater stability, consistency and rigidity, due to the following three reasons:
- when the trapezoid - triangular or trapezoid - rectangular flap is generated, it makes the container or pre-container widen even more, and it also makes the lower side, that serves as a support base, more square.
- by sealing, preferably, in the intersection area of the generated flap and the rest of the container body, it makes this area of the wrapper harden because of the thermoplastic reaction due to the effect of the heat.
- by making the sealing line in the middle of the lower side, the one that acts as a base {generated by making the English fold, this being the sealing line that materializes when the pre-container is tightly sealed on the lower side, and which is now located in the middle of the lower side that acts as a base}: it remains permanently attached to the rest of the container without protruding outwards, so that a completely flat side is permanently obtained, as well as it being innocuous since, in some cases, contact glue is used to produce the same effect by gluing the top part of the wrapper which is folded into a sheet to one side.

**A sixth object of the invention,** is a container obtainable, in accordance with the methods proposed above, as well as the preferential realizations of such methods of container processing, comprising a first stage of pressing to define the flap and, subsequently, optionally, at least another manipulation stage of at least one flap of at least one container or at least one pre-container, in which one is to choose, for example, a random and combined and/or repetitive manipulation mode from among at least one or more of any of the following options:
fold and adhere the flap using a method such as contact glue or by using grippers; seal only; fold and seal; seal, fold and seal; seal and glue; seal, fold and glue; seal and cut; seal, cut and glue; cut, seal and glue; fold or fold over itself and glue; seal, fold or fold over itself and glue; seal, fold or fold over itself and seal; seal, fold or fold over itself, seal and cut; fold or fold over itself, seal and cut; fold or fold over itself, seal and glue; seal, fold or fold over itself, seal and glue; seal and cut, fold or fold over itself and glue; seal and cut, fold or fold over itself and seal.

All of the containers of the invention may contain at least one fluid and, optionally or additionally, may also contain, for example, at least one solid or solids, granules or powders. For example: [(air or / and gas) or / and (liquid or / and paste)] or / and [(solid/solids or / and granules) or / and powders)].

The invention is applicable to either containers or pre-containers, closed or sealed in their entirety along the entire contour, lateral side or perimeter area, as well as to containers or pre-containers open or not sealed in their entirety along the entire contour, lateral side or perimeter area.

Once the container of the invention has been manufactured and the product to be packed is inside it, optionally, it is also possible to extract gaseous fluid (air or / and gas) before being closed or / and sealed in its entirety, in order to obtain a container that will take up less space.

According to the preferential object of the invention, the containers of the invention have the common denominator of containing:
[at least one English fold plus flap or/and at least one flat English fold plus flap. These are made in the area or contiguous area of the lower or / and higher part and to the left or / and right: of the side / lateral side or edge of the pre-container or container on the left and right side of the container] or / and
[at least one stable bottom plus flap / and at least one flat stable bottom plus flap. These are made in the area or contiguous area of the lower or / and higher part and to the left or / and right of the side / lateral side or edge of the pre-container or container] or / and
[at least one English fold burr plus flap or English fold burr plus flap. These are made in the area or contiguous area of the lower or / and higher part and to the left or / and right: of the side / lateral side or edge of the pre-container or container].

The containers are of many different shapes, and of different uses or characteristics, depending on the following factors: [Not being restrictive as to the scope of the invention]
1) Type of pre-container, following pre-container or container from which we start to transform, by means of the 3D plus system or/and 3D compack, as for example: the pillow type, pillow pack, stand up, English type or English fold, stable bottom type or, likewise, mixed containers in which half or part is English fold or stable bottom and the another half or part is pillow. Or also, any of the above described to which, previously or subsequently, at least part of at least one lateral side or lateral face has been sealed and cut.
2) The number of flaps generated, that determine the three-dimensional geometric shape of the container, previous pre-container or following pre-container; the most representative are:
   the rhomboid pyramid (one flap is generated), the cylinder (four convex flaps are generated),
   the inverted trapezoid (two flaps are generated), the rectangular trapezoid (cube container,
   rectangular prism and parallelepiped with a dosing neck in which three flaps are generated),
   the cube, rectangular and parallelepiped prism (in all three, 4 flaps are generated), the irregular polyhedrons (any of the above containers whose shape is altered by means of at least one cut and/or sealing of at least one side of the container or pre-container), the modified geometric bodies (any of the abovementioned containers or pre-containers), which,
   once at least one of the flaps has been generated, are modified into irregular shapes by making at least one sealing line in different inclination planes, and not in a straight line or in a horizontal or vertical plane, such as curved or semi-circular lines or in an inclined or diagonal plane.
3) The number or/and/ type of flap(s) generated (randomly and in combination) on a container or pre-container, such as the English fold flap, flat English fold flap, stable bottom flap, flat stable bottom flap, triangular body flap, manipulated triangular body flap, triangular body flap folded over itself, vertical edge flap, burr flap or, for example, any of the plus flaps described above.

**It is another additional object of the invention,** that any one of the containers of the invention of this Description report, as well as of the previous ones, at least one of its sides, especially those of a cubic form, rectangular prism or parallelepiped, may generate at least one **opening and closing lid by** from where the product packed inside can be accessed and served, preferably, the side from the top or the front or the back of the container.The lid can be generated:
either by folding {at least part of at least one edge or area contiguous to the edge of at least one side of the container or pre-container} and sealing {at least once at least one side of at least one sealing line by means of a heat source such as a resistor}: obtaining, a burr plus flap (English fold burr plus flap or stable bottom burr plus flap) that, when pulled, detaches, creating an opening or lid through which to serve or access the packaged contents inside the container;
or, by means of delimiting or tracing {in an area of at least one side, edge or area contiguous to the edge of at least one side or face of the container, or also at the level of the entire perimeter, for example, at the same height below the flaps generated on the top of the container}:
   at least one laser pre-cut (easy-to-open) line of about 7 microns (or approximately) made (by the wear or roughing technique) on at least one layer of the wrapper or, for example, plastic sheet; and on which this can be delineated by a pre-cut, for example: of a square, rectangle or circle.

**Next, also object of the invention,** the most representative and relevant flexible packaging of the invention are described, which are not intended to be restrictive as to the scope of protection of the invention.
**A)** Any of the flexible 3D plus containers or of the invention, characterized because it has at least one **English fold plus flap,** as well as at least part of at least one side towards at least one direction of at least one sealing line on the English fold plus flap.
**B)** Any of the flexible 3D plus containers or of the invention, characterized because it has at least one **flat English fold plus flap,** as well as at least part of at least one side towards at least one direction of at least one sealing line on the flat English fold plus flap.
**C)** Any of the flexible 3D plus containers or of the invention, characterized because it has at least one **stable bottom plus flap,** as well as at least part of at least one side towards at least one direction and on a plane or on an inclined plane: of at least one sealing line on the stable bottom plus flap.
**D)** Any of the flexible 3D plus containers or of the invention, characterized because it has at least one **flat stable bottom plus flap,** as well as at least part of at least one side towards at least one direction and on a horizontal plane or on an inclined plane: of at least one sealing line on the stable bottom plus flap.
**E)** Any of the flexible 3D plus containers or of the invention, characterized because it has at least one **English fold plus flap,** and
   at least part of at least one side in at least one direction and on a plane or on an inclined plane of at least one sealing line in the English fold plus flap; just as
   at least part of at least **one triangular body flap folded or bent over itself** at least once over at least part of another part of it, and
   at least part of at least one side towards at least one direction and on a plane or on an inclined plane: of at least one sealing line on at least part of at least one side of the triangular body's folded flap.
F) Any of the flexible 3D plus containers or of the invention, characterized because it has at least one **flat English fold plus flap,** and
   at least part of at least one side in at least one direction and on a plane or on an inclined plane of at least one sealing line in the English fold plus flap; just as
   at least part of at least **one triangular body flap folded or bent over itself** at least once over at least part of another part of it, and
   at least part of at least one side towards at least one direction and on a plane or on an inclined plane: of at least one sealing line on at least part of at least one side of the triangular body's folded flap.
G) Any of the flexible 3D plus containers or of the invention, characterized because it has at least one **stable bottom plus flap,** and
   at least part of at least one side in at least one direction and on a plane or on an inclined plane of at least one sealing line in the English fold plus flap; just as
   at least part of at least **one triangular body flap folded or bent over itself** at least once over at least part of another part of it, and
   at least part of at least one side towards at least one direction and on a plane or on an inclined plane: of at least one sealing line on at least part of at least one side of the triangular body's folded flap.
H) Any of the flexible 3D plus containers or of the invention, characterized because it has at least one **flat stable bottom plus flap,** y
   at least part of at least one side in at least one direction and on a plane or on an inclined plane of at least one sealing line in the English fold plus flap; just as
   at least part of at least **one triangular body flap folded or bent over itself** at least once over at least part of another part of it, and
   at least part of at least one side towards at least one direction and on a plane or on an inclined plane: of at least one sealing line on at least part of at least one side of the triangular body's folded flap.
**I)** Any of the flexible 3D plus containers or of the invention, characterized because it has at least one **English fold plus flap,** as well as at least part of at least one side in at least one direction of at least one sealing line in the English fold plus flap; and
   at least one **English fold burr plus flap** or / and at least part of at least one **burr flap** made in the middle of the side or edge; and at least part of at least one side of at least one sealing line, by means of a heat source such as a resistor.
**J)** Any of the flexible 3D plus containers or of the invention, characterized because it has at least one **flat English fold plus flap,** as well as at least part of at least one side in at least one direction of at least one sealing line in the flat English fold plus flap; and
   at least one **English fold burr plus flap** or at least part of at least one **burr flap** made in the middle of the side or edge; **just as** at least part of at least one side of at least one sealing line of the English fold burr plus flap, by means of a heat source such as a resistor.
**K)** Any of the flexible 3D plus containers or of the invention, characterized because it has at least one **stable bottom plus flap,** as well as at least part of at least one side in at least one direction of at least one sealing line in the stable bottom plus flap; and
   at least one **stable bottom burr plus flap** or at least part of at least one **burr flap** made in the middle of the side or edge; and at least part of at least one side of at least one sealing line, by means of a heat source such as a resistor.
**L)** Any of the flexible 3D plus containers or of the invention, according to the flexible container of the letter E characterized because it additionally comprises at least one burr flap, as well as at least part of at least one side of at least one sealing line, by means of a heat source such as a resistor.
**M)** Any of the flexible 3D plus containers or of the invention, according to the flexible container of the letter F characterized because it additionally comprises at least one burr flap, as well as at least part of at least one side of at least one sealing line, by means of a heat source such as a resistor.
**N)** Any of the flexible 3D plus containers or of the invention, according to the flexible container of the letter G characterized because it additionally comprises at least one burr flap, as well as at least part of at least one side of at least one sealing line, by means of a heat source such as a resistor.
**O)** Any of the flexible 3D plus containers or of the invention, characterized by having at least one **pre-cut line** in at least part of a layer of the wrapper (approximately 7 microns) or in at least one side of the container, made by means of a laser sealing device or system mode.
**P)** Flexible container of the invention, that has a cubic, rectangular or parallelepiped prism shape (or also cubic, rectangular or parallelepiped prism but with at least one of its faces, edges or sides not parallel, perpendicular or in a horizontal plane, but rather the opposite: not parallel, oblique, diagonal and in inclined planes, characterized by having at least one **pre-cut line** in at least part of a layer of the wrapper (approximately 7 microns) or in at least one side of the container, made by means of a laser sealing device or system mode.
**Q)** Flexible container of the invention that has a cylindrical shape, characterized by having at least one **pre-cut line** in at least part of a layer of the wrapper (approximately 7 microns) or in at least one side of the container, made by means of a laser sealing device or system mode.

Next, also object of the invention are the following flexible containers, which are the most unique and representative of this Description report, without claiming to be restrictive in terms of the scope of protection of the invention.

**1a)** English fold type flexible container, with no defined flat English fold flap both on the left and right and on the bottom and top, also, the container can be closed or open on at least one of the sides so that the product to be packaged can subsequently be filled on the production lines, **characterized** because **it has** two plus flaps [(one English fold plus flap on the left and one on the right) from the bottom or top of the lateral side of the pre-container or container], as well as at least part of at least one side towards at least one direction of at least one sealing line on each English fold plus flap.

The container or pre-container of a rectangular prism or parallelepiped geometric body shape, where in addition the top or / and bottom or / and left or / and right can be broader, wider or square: depending on the width and length of the flaps generated on the lateral sides of the container.

Optionally, it can also contain at least one English fold burr plus flap or / and burr flap: on top and / or under the front or / and back part of the closed or open container.

**1b)** English fold type flexible container, with no defined horizontal flat English fold flap both on the left and right and on the bottom and top of the closed or open container on at least one side (not tightly sealed), **characterized because it has** two plus flaps [(one English fold plus flap on the left and one on the right) from the bottom or top of the lateral side of the pre-container or container], as well as at least part of at least one side towards at least one direction of at least one sealing line on each English fold plus flap; and
one English fold plus flap to the left or right of the top (or bottom) of the lateral side of the pre-container or container, as well as at least part of at least one side in at least one direction of at least one sealing line in the English fold plus flap.

The container or pre-container has a rectangular trapezoid geometric shape with a cone-shaped dispensing neck at the top, where in addition the top or / and bottom or / and left or / and right can be broader, wider or square: depending on the width and length of the flaps generated on the lateral sides of the container.

Optionally, it can also contain at least one English fold burr plus flap or / and burr flap: on top and / or under the front or / and back part of the closed or open container.

**1c)** English fold type flexible container, in which there is no defined flat English fold flap both on the left and right and on the bottom and top of the closed or open container on at least one side (not tightly sealed), **characterized because it has** two plus flaps [(one English fold plus flap on the left and one on the right) from the bottom or top of the lateral side of the pre-container or container], as well as at least part of at least one side towards at least one direction of at least one sealing line on each English fold plus flap; and
two plus flaps [(one English fold plus flap on the left and one on the right) from the bottom or top of the lateral side of the pre-container or container], as well as at least part of at least one side towards at least one direction of at least one sealing line on each English fold plus flap.

The container or pre-container has a cubic, rectangular or parallelepiped prism geometric body shape where, in addition, the top or / and bottom or / and left or / and right can be broader, wider or square: depending on the width and length of the flaps generated on the lateral sides of the container.

Optionally, it can also contain at least one English fold burr plus flap or / and burr flap: on top and / or under the front or / and back part of the closed or open container.

**1d)** English fold type flexible container, in which there is no defined flat English fold flap both on the left and right and on the bottom and top of the closed or open container on at least one side (not tightly sealed), **characterized because it has** one English fold plus flap both on the left or right from the top or bottom of the lateral side of the pre-container or container, as well as at least part of at least one side in at least one direction of at least one sealing line in the English fold plus flap.

The container or pre-container has a rectangular or parallelepiped prism geometric body shape but is wider and more volumetric in 3D in the area or area contiguous to the generated flap, where in addition the top or / and bottom or / and left or / and right part can be broader, wider or square: depending on the width and length of the flap generated on the lateral side of the container.

Optionally, it can also contain at least one English fold burr plus flap or / and burr flap: on top and / or under the front or / and back part of the closed or open container.

**1e)** English fold type flexible container, in which there is no defined flat English fold flap both on the left and right, on the bottom and top of the closed or open container on at least one side (not tightly sealed), **characterized because** i**t has** one English fold plus flap to the left or/and right of the bottom (or/and top) part of the pre-container or container, as well as at least part of at least one side in at least one direction of at least one sealing line in the English fold plus flap; and
one English fold plus flap on the opposite lateral side (left or right) of the top lateral side part from where the English fold plus flap of the bottom (or top) part of the pre-container or container is generated, as well as at least part of at least one side in at least one direction of at least one sealing line in the English fold plus flap.

The container or pre-container has a parallelepiped geometric body shape where the two top sides are parallel and the two lateral sides are parallel but in diagonal and, also, the volumetry of the container is reversed from the middle up compared to the middle down: in one it widens to the left and down and the other widens to the right and up, in which the wider or longer the flaps generated the more it widens.

Optionally, it can also contain at least one English fold burr plus flap or / and burr flap: on top and / or under the front or / and back part of the closed or open container.

**2a)** English fold type flexible container, in which at least one flat English fold flap is defined on both the left and the right from the top or bottom of the lateral side of the container or pre-container, closed or open on at least one side, **characterized because it has** two plus flaps [two flat English fold plus flaps], or one English fold plus flap and one flat English fold plus flap] to the left and right of the bottom (or top) part of the pre-container or container, as well as at least part of at least one side of at least one sealing line on each flat English fold plus flap or English fold plus flap.

The container or pre-container has a rectangular or parallelepiped prism geometric body shape where, in addition, the top or / and bottom or / and left or / and right part can be broader, wider or square: depending on the width and length of the flaps generated on the lateral sides of the container.

Optionally, it can also contain [(at least one English fold burr plus flap or / and at least one English fold burr plus flap) or / and at least one burr flap]: on top and / or underneath the front or / and behind the closed or open container.

**2b)** English fold type flexible container, in which at least one flat English fold flap is defined on both the left and the right from the top or bottom of the lateral side of the container or pre-container, closed or open on at least one side, **characterized because it has** two plus flaps [two flat English fold plus flaps], or, one English fold plus flap and one flat English fold plus flap] to the left and right of the bottom (or top) part of the pre-container or container, as well as at least part of at least one side of at least one sealing line on each flat English fold plus flap or English fold plus flap; and
one English fold plus flap on the left or right from the top (or bottom) of the lateral side of the container or pre-container, as well as at least part of at least one side in at least one direction of at least one sealing line in the English fold plus flap.

The container or pre-container has a rectangular trapezoid geometric figure shape with a cone-shaped dispensing neck at the top, where in addition the top or / and bottom or / and left or / and right part can be broader, wider or square: depending on the width and length of the flaps generated on the lateral sides of the container.

Optionally, it can also contain [(at least one English fold burr plus flap or / and at least one English fold burr plus flap) or / and at least one burr flap]: on top and / or underneath the front or / and behind the closed or open container.

2c) English fold type flexible container, in which at least one flat English fold flap is defined on both the left and the right from the top or bottom of the lateral side of the container or pre-container, closed or open on at least one side, **characterized because it has** two plus flaps [two flat English fold plus flaps], or one English fold plus flap and one flat English fold plus flap] to the left and right of the lateral side of the bottom (or top) part of the pre-container or container, as well as at least part of at least one side in at least one direction of at least one sealing line on each flat English fold plus flap or English fold plus flap; and
two plus flaps [(two flat English fold plus flaps), or (one English fold plus flap and one flat English fold plus flap)] to the left and right of the top (or bottom) of the sides of the pre-container or container, as well as at least part of at least one side of at least one sealing line on each English fold plus flap.

The container or pre-container has a cubic, rectangular or parallelepiped prism geometric body shape where, in addition, the top or / and bottom or / and left or / and right part can be broader, wider or square: depending on the width and length of the flaps generated on the lateral sides of the container.

Optionally, it can also contain [(at least one English fold burr plus flap or / and at least one English fold burr plus flap) or / and at least one burr flap]: on top and / or underneath the front or / and behind the closed or open container.

**2d)** English fold type flexible container, in which at least one flat English fold flap is defined on both the left and the right from the top or bottom of the lateral side of the container or pre-container, closed or open on at least one side, **characterized because it has** one plus flap [one flat English fold plus flap or an English fold plus flap] to the left or right of the upper or lower side of the pre-container or container, as well as at least part of at least one side in at least one direction of at least one sealing line in the flat English fold flap or in the English fold plus flap.

The container or pre-container has a narrow volumetric rectangular prism or parallelepiped geometric body shape, but being wider and volumetric in 3D in the area or area contiguous to the generated flap where, in addition, the top or / and bottom or / and left or / and right can be broader, wider or square: depending on the width and length of the flaps generated on the side of the container.

Optionally, it can also contain [(at least one English fold burr plus flap or / and at least one English fold burr plus flap) or / and at least one burr flap]: on top and / or underneath the front or / and behind the closed or open container.

**2e)** English fold type flexible container, in which at least one flat English fold flap is defined on both the left and the right from the top or bottom of the lateral side of the container or pre-container, closed or open on at least one side, **characterized because it has** one flat English fold plus flap or one English fold plus flap, to the left or right of the bottom (or top) part of the lateral side of the pre-container or container, as well as at least part of at least one side in at least one direction of at least one sealing line in the flat English fold plus flap or English fold plus flap; and
one English fold plus flap on the opposite lateral side (left or right) of the bottom (or top) lateral side from where the flat English fold plus flap of the pre-container or container is generated, as well as at least part of at least one side in at least one direction of at least one sealing line in the English fold plus flap.

The container or pre-container has a parallelepiped geometric shape, where the two top sides are parallel and the two lateral sides are parallel but in diagonal, and the volumetry of the container is reversed from the middle up to the middle down: in one it widens to the left and down and in the other it widens to the right and up, in which the wider or the longer the flaps generated are on the lateral sides, the more it widens.

Optionally, it can also contain [(at least one English fold burr plus flap or / and at least one English fold burr plus flap) or / and at least one burr flap]: on top and / or underneath the front or / and behind the closed or open container.

**3a)** English fold type flexible container, in which at least one flat English fold flap is defined on both the left and the right from the top or bottom of the lateral side of the container or pre-container, closed or open on at least one side, and there is a definition in at least one vertical / inclined and not horizontal edge, at least part of at least one lateral side vertical edge flap (24), **characterized because it has** two plus flaps [two flat stable bottom plus flaps, or one flat stable bottom plus flap and one stable bottom plus flap] to the left or right of the bottom (or top) part of the pre-container or container, as well as at least part of at least one side in at least one direction of at least one sealing line in each flat stable bottom plus flap or stable bottom plus flap.

The container or pre-container has a rectangular or parallelepiped prism geometric body shape, where in addition the top or / and bottom or / and left or / and right part can be broader, wider or square: depending on the width and length of the flaps generated on the sides of the container.

Optionally, it can also contain [(at least one stable bottom burr plus flap or / and at least one stable bottom burr plus flap) or at least one burr flap on top and / or underneath the front or / and behind the closed or open container.

**3b)** English fold type flexible container, in which at least one flat English fold flap is defined on both the left and the right from the top or bottom of the lateral side of the container closed or open on at least one side, and there is a definition in at least vertical / inclined and not horizontal edge, at least part of at least one lateral side vertical edge flap (24), **characterized because it has** two plus flaps [two flat stable bottom plus flaps, or one flat stable bottom plus flap and one stable bottom plus flap] to the left or right of the bottom (or top) part of the pre-container or container, as well as at least part of at least one side in at least one direction of at least one sealing line in each flat stable bottom plus flap or stable bottom plus flap; and
one English fold plus flap to the left or right of the top (or bottom) part of the lateral side of the pre-container or container, as well as at least part of at least one side in at least one direction of at least one sealing line in the English fold plus flap.

The container or pre-container has a rectangular trapezoid geometric body shape with a cone-shaped dispensing neck at the top, where in addition the top or / and bottom or / and left or / and right part can be broader, wider or square: depending on the width and length of the flaps generated on the lateral sides of the container.

Optionally, it can contain [(at least one stable bottom burr plus flap or / and at least one English fold burr plus flap) or English fold burr plus flap or / and at least one burr flap on top and / or underneath the front or / and behind the closed or open container.

**3c)** English fold type flexible container, in which at least one flat English fold flap is defined on both the left and the right from the top or bottom of the lateral side of the container, closed or open on at least one side, and there is a definition in at least one vertical / inclined and not horizontal edge, at least part of at least one lateral side vertical edge flap (24), **characterized because it has** two plus flaps [two flat stable bottom plus flaps, or one flat stable bottom plus flap and one stable bottom plus flap] to the left and right of the bottom (or top) part of the pre-container or container, as well as at least part of at least one side in at least one direction of at least one sealing line in each flat stable bottom plus flap or stable bottom plus flap; and
two plus flaps [two flat stable bottom plus flaps, or one flat stable bottom plus flap or one stable bottom plus flap] to the left and right of the top (or bottom) of the lateral side of the pre-container or container, as well as at least part of at least one side in at least one direction of at least one sealing line in the flat stable bottom plus flap or stable bottom plus flap.

The container or pre-container has a cubic, rectangular or parallelepiped prism geometric body shape, where in addition the top or / and bottom or / and left or / and right part can be broader, wider or square: depending on the width and length of the flaps generated on the sides of the container.

Optionally, it can contain [(at least one stable bottom burr plus flap or / and at least one English fold burr plus flap) or English fold burr plus flap or / and at least one burr flap on top and / or underneath the front or / and behind the closed or open container.

**3d)** English fold type flexible container, {in which at least one flat English fold flap is defined on both the left and the right from the top or bottom of the lateral side of the pre-container or container, and there is a definition in at least one vertical / inclined and not horizontal edge, at least part of at least one lateral side vertical edge flap (24), **characterized because it has** one flat stable bottom plus flap or one flat stable bottom plus flap to the left or right of the bottom (or top) part of the pre-container or container, as well as at least part of at least one side in at least one direction of at least one sealing line in each flat stable bottom plus flap or stable bottom plus flap.

The container or pre-container has a rectangular or parallelepiped prism geometric body shape but being wider and more volumetric in 3D in the area or area contiguous to the generated flap, where in addition the top or / and bottom or / and left or / and right can be broader, wider or square: depending on the width and length of the flaps generated on the side of the container.

Optionally, it can also contain (at least one stable bottom burr plus flap or / and at least one English fold burr plus flap) or/and at least one burr flap on top and / or underneath the front or / and behind the closed or open container.

**3e)** English fold type flexible container, {in which at least one flat English fold flap is defined on both the left and the right from the top or bottom of the lateral side of the container, closed or open on at least one side, and there is a definition in at least one lateral side vertical edge flap (24) on each side or lateral side, **characterized because it has** one flat stable bottom plus flap, or one flat stable bottom plus flap to the left and right of the bottom (or top) part of the pre-container or container, as well as at least part of at least one side in at least one direction of at least one sealing line in each flat stable bottom plus flap or stable bottom plus flap; and
one stable bottom plus flap on the opposite lateral side, to the left or right, of the lateral side of the bottom (or top) part from which the stable bottom plus flap or flat stable bottom plus flap of the container is generated, as well as at least part of at least one side in at least one direction of at least one sealing line in the stable bottom plus flap.

The container or pre-container has a parallelepiped geometric body shape where the two top sides are parallel and the two lateral sides are parallel but in diagonal and, also, the volumetry of the container is reversed from the middle up compared to the middle down: in one it widens to the left and down and the other widens to the right and up, in which the wider or longer the flaps generated the more it widens.

Optionally, it can also contain (at least one stable bottom burr plus flap or / and at least one English fold burr plus flap) or/and at least one burr flap on top and / or underneath the front or / and behind the closed or open container.

**4a)** Flexible container, half English fold type (in which there is no defined flat English fold flap) and the other half, pillow type. The closed or open container or pre-container (at least one of the sides to be filled with the product to be packaged later), **characterized because** it **has** two plus flaps, one English fold plus flap on the left and the other on the right from the bottom or top of the lateral side of the pre-container or container, as well as at least part of one side towards at least one direction of at least one sealing line on each English fold plus flap.

The container has a rectangular or parallelepiped prism geometric body shape, where also the top or / and bottom or / and left or / and right part can be broader, wider or square: depending on the width and length of the flaps generated in the container.

Optionally, it can also contain at least one English fold burr plus flap or / and burr flap: on top and / or underneath the front or / and behind the closed or open container.

**4b)** Flexible container, half English fold type (in which there is no defined flat English fold flap) and the other half, pillow type. The closed or open container or pre-container (at least one of the sides to be filled with the product to be packaged later), **characterized because it has** two plus flaps, one English fold plus flap on the left and the other on the right from the bottom or top of the lateral side of the pre-container or container, as well as at least part of one side towards at least one direction of at least one sealing line on each English fold plus flap; and
a triangular body flap folded back on itself at least once over at least part of another part of it, on the left or right side of the top part of the container, and
at least part of at least one side in at least one direction and on a plane or on an inclined plane of at least one sealing line: on at least part of at least one side of the triangular body flap folded back on itself.

[At least one triangular body flap of this flexible container, as another option other than folding or bending at least once over itself, can also be manipulated to choose, for example, in a random and combined and/or repetitive manner from among at least one or more of any of the following options:
fold and adhere the flap using a method such as contact glue or grippers; seal only; fold and seal; seal, fold and seal; seal and glue; seal, fold and glue; seal and cut; seal, cut and glue; cut, seal and glue; fold or fold over itself and glue; seal, fold or fold over itself and glue; fold or fold over itself and seal; seal, fold or fold over itself and seal; seal, fold or fold over itself, seal and cut; fold or fold over itself, seal and cut; fold or fold over itself, seal and glue; seal, fold or fold over itself, seal and glue; seal and cut, fold or fold over itself and glue; seal and cut, fold or fold over itself and seal]

The container has a rectangular trapezoid geometrical shape with a cone-shaped dispensing neck at the top where, in addition, the top or / and bottom or / and left or / and right part can be broader, wider or square: depending on the width and length of the flaps generated on the sides of the container.

Optionally, it can also contain at least one English fold burr plus flap or / and burr flap: on top and / or underneath the front or / and behind the closed or open container.

**4c)** Flexible container, half English fold type (in which there is no defined flat English fold flap) and the other half, pillow type. The closed or open container or pre-container (at least one of the sides to be filled with the product to be packaged later), **characterized because it has** two plus flaps, one English fold plus flap on the left and on the right from the bottom or top of the pre-container or container, as well as at least part of one side in at least one direction of at least one sealing line on each English fold plus flap; and
on the left and right side at the top (or bottom): a triangular body flap folded over itself at least once over at least part of another part of it, and
at least part of at least one side in at least one direction and on a plane or on an inclined plane of at least one sealing line: on at least part of at least one side of each of the triangular body flaps folded or bent over itself.

[At least one triangular body flap of this flexible container, as another option other than folding or bending at least once over itself, can also be manipulated to choose, for example, in a random and combined and/or repetitive manner from among at least one or more of any of the options described above at the end of paragraph **4b)]**

The container has a rectangular or parallelepiped prism geometric body shape, where also the top or / and bottom or / and left or / and right part can be broader, wider or square: depending on the width and length of the flaps generated in the container.

Optionally, it can also contain at least one English fold burr plus flap or / and burr flap: on top and / or underneath the front or / and behind the closed or open container.

**4d)** Flexible container, half English fold type (in which there is no defined flat English fold flap) and the other half, pillow type. The closed or open container or pre-container (at least one of the sides to be filled with the product to be packaged later), **characterized because it has** one English fold plus flap on the left and on the right from the top or bottom of the lateral side of the pre-container or container, as well as at least part of at least one side in at least one direction of at least one sealing line in the English fold plus flap.

The container has a cubic, rectangular or parallelepiped prism geometric body shape, but is wider and more volumetric in 3D in the area or area contiguous to the generated flap, where in addition the top or / and bottom or / and left or / and right part can be broader, wider or square: depending on the width and length of the flap generated on the lateral side of the container.

Optionally, it can also contain at least one English fold burr plus flap or / and burr flap: on top and / or underneath the front or / and behind the closed or open container.

**4e)** Flexible container, half English fold type (in which there is no defined flat English fold flap) and the other half, pillow type. The closed or open container or pre-container (at least one of the sides to be filled with the product to be packaged later), **characterized because it has** one English fold plus flap on the left and on the right from the top or bottom of the lateral side of the pre-container or container, as well as at least part of at least one side in at least one direction of at least one sealing line in the English fold plus flap; and
one triangular body flap folded over itself at least once on at least another part of it, on the opposite lateral side [to the left or right side of the bottom (or top) part of the pre-container or container]: on the lateral side from where the English fold plus flap of the pre-container or container is generated, and
at least part of at least one side in at least one direction and on a plane or on an inclined plane of at least one sealing line: on at least part of at least one side of the triangular body flaps folded over itself.

[At least one triangular body flap of this flexible container, as another option other than folding or bending at least once over itself, can also be manipulated to choose, for example, in a random and combined and/or repetitive manner from among at least one or more of any of the options described above at the end of paragraph **4b)]**

The container has a parallelepiped geometric shape where the two top sides are parallel and the two lateral sides are parallel but in diagonal, and the volumetry of the container is reversed from the middle up in comparison to the middle down: in one it widens to the left and down and in the other it widens to the right and up, in which the wider or the longer the flaps generated are on the lateral sides, the more it widens.

Optionally, it can also contain at least one English fold burr plus flap or / and burr flap: on top and / or underneath the front or / and behind the closed or open container.

**5a)** Flexible container, half English fold type (in which at least one flat English fold flap is defined) and the other half, pillow type. The closed or open container or pre-container (at least one of the sides to be filled with the product to be packaged later), **characterized because it has** two flaps [one or two flat stable bottom plus flap/s, or one flat stable bottom plus flap and one stable bottom plus flap] on the left and on the right of the bottom (or top) part of the container, as well as at least part of at least one side in at least one direction of at least one sealing line in every flat stable bottom plus flap or stable bottom plus flap.

The container has a rectangular or parallelepiped prism geometric body shape where also the top or / and bottom or / and left or / and right part can be broader, wider or square: depending on the width and length of the flaps generated in the container.

Optionally, it can also contain [(at least one stable bottom burr plus flap or / and at least one stable bottom burr plus flap) or at least one burr flap]: on top and / or underneath the front or / and behind the closed or open container.

**5b)** Flexible container, half English fold type (in which at least one flat English fold flap is defined) and the other half, pillow type. The closed or open container or pre-container (at least one of the sides to be filled with the product to be packaged later), **characterized because it has** two flaps [one or two flat stable bottom plus flap/s, or one flat stable bottom plus flap and one stable bottom plus flap] on the left and on the right of the bottom (or top) part of the container, as well as at least part of at least one side in at least one direction of at least one sealing line in every flat stable bottom plus flap or stable bottom plus flap; and
a triangular body flap folded back on itself at least once over at least part of another part of it, to the left or right of the top (or bottom) part of the container, and
at least part of at least one side in at least one direction and on a plane or on an inclined plane of at least one sealing line: on at least part of at least one side of the triangular body flaps folded over itself.

[At least one triangular body flap of this flexible container, as another option other than folding or bending at least once over itself, can also be manipulated to choose, for example, in a random and combined and/or repetitive manner from among at least one or more of any of the options described above at the end of paragraph **4b)]**

The container has a rectangular trapezoid geometric shape with a cone-shaped dispensing neck at the top where, also the top or / and bottom or / and left or / and right part can be broader, wider or square: depending on the width and length of the flaps generated on the lateral sides of the container.

Optionally, it can contain (at least one stable bottom burr plus flap or / and at least one English fold burr plus flap) or English fold burr plus flap) or/and at least one burr flap: on top and / or underneath the front or / and behind the closed or open container.

**5c)** Flexible container, half English fold type (in which at least one flat English fold flap is defined) and the other half, pillow type. The closed or open container or pre-container (at least one of the sides to be filled with the product to be packaged later), **characterized because it has** two flaps [one or two flat stable bottom plus flap/s, or one flat stable bottom plus flap and one stable bottom plus flap] on the left and on the right of the bottom (or top) part of the container, as well as at least part of at least one side in at least one direction of at least one sealing line in every flat stable bottom plus flap or stable bottom plus flap; and
on the left and right side at the top (or bottom) of the container: a triangular shaped flap folded over itself at least once on another part of the container, and
at least part of at least one side in at least one direction and on a plane or on an inclined plane of at least one sealing line: on at least part of at least one side of the triangular body flaps folded over itself.

[At least one triangular body flap of this flexible container, as another option other than folding or bending at least once over itself, can also be manipulated to choose, for example, in a random and combined and/or repetitive manner from among at least one or more of any of the options described above at the end of paragraph **4b)]**

The container has a cubic, rectangular or parallelepiped prism geometric body shape where also the top or / and bottom or / and left or / and right part can be broader, wider or square: depending on the width and length of the flaps generated in the container.

Optionally, it can contain (at least one stable bottom burr plus flap or / and at least one English fold burr plus flap) or English fold burr plus flap) or/and at least one burr flap: on top and / or underneath the front or / and behind the closed or open container.

5d) Flexible container, half English fold type (in which at least one flat English fold flap is defined) and the other half, pillow type. The closed or open container or pre-container (at least one of the sides to be filled with the product to be packaged later), characterized because it has [one flat English fold plus flap or one English fold plus flap] on the left and on the right of the bottom (or top) part of the lateral side of the container, as well as at least part of at least one side in at least one direction of at least one sealing line in the flat English fold plus flap or English fold plus flap.

The container has a narrow volumetric rectangular prism or parallelepiped geometric body shape, but being wider and volumetric in 3D in the area or area contiguous to the generated flap where, in addition, the top or / and bottom or / and left or / and right can be broader, wider or square: depending on the width and length of the flaps generated on the side of the container.

Optionally, it can also contain (at least one stable bottom burr plus flap or / and at least one English fold burr plus flap) or / and at least one burr flap: on top and / or underneath the front or / and behind the closed or open container.

**5e)** Flexible container, half English fold type (in which at least one flat English fold flap is defined) and the other half, pillow type. The container or pre-container can be closed or open (at least one of the sides to be filled with the product to be packaged later), **characterized because it has** [one flat English fold plus flap or one English fold plus flap] on the left and on the right of the bottom (or top) part of the lateral side of the container, as well as at least part of at least one side in at least one direction of at least one sealing line in the flat English fold plus flap or English fold plus flap; and
a triangular body flap folded back on itself at least once over at least part of another part of it, on the opposite side [to the left or right of the top (or bottom) part of the container]: on the lateral side where the flat English fold plus flap or English fold plus flap is generated from the bottom (or top) of the container, and
at least part of at least one side in at least one direction and on a plane or on an inclined plane of at least one sealing line: on at least part of at least one side of the triangular body flaps folded over itself.

[At least one triangular body flap of this flexible container, as another option other than folding or bending at least once over itself, can also be manipulated to choose, for example, in a random and combined and/or repetitive manner from among at least one or more of any of the options described above at the end of paragraph **4b)]**

The container has a parallelepiped geometric shape where the two top sides are parallel and the two lateral sides are parallel but in diagonal, and the volumetry of the container is reversed from the middle up in comparison to the middle down: in one it widens to the left and down and in the other it widens to the right and up, in which the wider or the longer the flaps generated are on the lateral sides, the more it widens.

Optionally, it can also contain (at least one stable bottom burr plus flap or / and at least one English fold burr plus flap) or / and at least one burr flap: on top and / or underneath the front or / and behind the closed or open container.

6a) Flexible container, half of which is of the stable bottom type or English fold type {in which at least one flat English fold flap is defined} and the other half is of the pillow type. The container or pre-container can be closed or open (at least one of the sides so that, later, once the container is manufactured, it can be filled with the product to be packaged), and there is also a definition in at least one lateral side vertical edge flap (24) [minus one fold and at least one edge sealing line in the perimeter area of the lateral side of the container] on both sides or lateral sides of the container, **characterized because it has** two flaps [two flat stable bottom plus flaps, or one flat stable bottom plus flap and one stable bottom plus flap] to the left or right of the bottom (or top) part of the container, as well as at least part of at least one side in at least one direction of at least one sealing line in each flat stable bottom plus flap or stable bottom plus flap.

The container has a rectangular or parallelepiped prism geometric body shape, where also the top or / and bottom or / and left or / and right part can be broader, wider or square: depending on the width and length of the flaps generated.

Optionally, it can also contain [(at least one stable bottom burr plus flap or / and at least one flat stable bottom burr plus flap) or / and at least one burr flap]: on top and / or underneath the front or / and behind the closed or open container.

**6b)** Flexible container, half of which is of the stable bottom type or English fold type {in which at least one flat English fold flap is defined} and the other half is of the pillow type. The container or pre-container can be closed or open (at least one of the sides so that, later, once the container is manufactured, it can be filled with the product to be packaged), and there is also a definition in at least one lateral side vertical edge flap (24) on both sides or lateral sides of the container, **characterized because it has** two flaps [two flat stable bottom plus flaps, or one flat stable bottom plus flap and one stable bottom plus flap] to the left or right of the bottom (or top) part of the container, as well as at least part of at least one side in at least one direction of at least one sealing line in each flat stable bottom plus flap or stable bottom plus flap; and
a triangular body flap folded over itself at least once in at least one direction over at least another part of it, to the left or right of the top (or bottom) of the pre-container or container, and
at least part of at least one side in at least one direction and on a plane or on an inclined plane of at least one sealing line: on at least part of at least one side of the triangular body flap folded over itself.

[At least one triangular body flap of this flexible container, as another option other than folding or bending at least once over itself, can also be manipulated to choose, for example, in a random and combined and/or repetitive manner from among at least one or more of any of the options described above at the end of paragraph **4b)]**

The container has a rectangular trapezoid geometric shape with a cone-shaped dosing neck at the top where, in addition, the top or / and bottom or / and left or / and right part can be broader, wider or square: depending on the width and length of the flaps generated on the lateral sides of the container.

Optionally, it can also contain [(at least one stable bottom burr plus flap or / and at least one flat stable bottom burr plus flap) or / and at least one burr flap]: on top and / or underneath the front or / and behind the closed or open container.

**6c)** Flexible container, half of which is of the stable bottom type or English fold type {in which at least one flat English fold flap is defined} and the other half is of the pillow type. The container or pre-container can be closed or open (at least one of the sides so that, later, once the container is manufactured, it can be filled with the product to be packaged), and there is also a definition in at least one lateral side vertical edge flap (24) on both sides or lateral sides of the container, **characterized because it has** two flaps [two flat stable bottom plus flaps, or one flat stable bottom plus flap and one stable bottom plus flap] to the left or right of the bottom (or top) part of the container, as well as at least part of at least one side in at least one direction of at least one sealing line in each flat stable bottom plus flap or stable bottom plus flap; and
to the left and also to the right of the top (or bottom) part of the container:
a triangular body flap folded over itself at least once over at least part of another part of it, and
at least part of at least one side in at least one direction and on a plane or on an inclined plane of at least one sealing line: on at least part of at least one side of each triangular body flap folded over itself.

[At least one triangular body flap of this flexible container, as another option other than folding or bending at least once over itself, can also be manipulated to choose, for example, in a random and combined and/or repetitive manner from among at least one or more of any of the options described above at the end of paragraph **4b)]**

The container has a cubic, rectangular or parallelepiped prism geometric body shape where, in addition, the top or / and bottom or / and left or / and right part can be broader, wider or square: depending on the width and length of the flaps generated on the lateral sides of the container.

Optionally, it can also contain [(at least one stable bottom burr plus flap or / and at least one flat stable bottom burr plus flap) or / and at least one burr flap]: on top and / or underneath the front or / and behind the closed or open container.

6d) Flexible container, half of which is of the stable bottom type or English fold type (in which at least one flat English fold triangular configuration flap is defined) and the other half is of the pillow type. The container or pre-container can be closed or open (at least one of the sides so that, later, once the container is manufactured, it can be filled with the product to be packaged), and there is also a definition in at least one lateral side vertical edge flap (24) on both lateral sides of the container, **characterized because it has** [one flat stable bottom plus flap or one stable bottom plus flap] to the left or right of the bottom (or top) part of the container, and also
at least part of at least one side in at least one direction and on a plane or in an inclined plane of at least one sealing line on each flat stable bottom plus flap or stable bottom plus flap.

The container has a rectangular or parallelepiped prism geometric body shape but being wider and volumetric in 3D in the area or area contiguous to the generated flap, where in addition the top or / and bottom or / and left or / and right can be broader, wider or square: depending on the width and length of the flaps generated.

Optionally, it can also contain [(at least one flat stable bottom burr plus flap or / and at least one stable bottom burr plus flap) or / and at least one burr flap]: on top and / or underneath the front or / and behind the closed or open container.

6e) Flexible container, half of which is of the stable bottom type or English fold type {in which at least one flat English fold flap is defined} and the other half is of the pillow type. The container or pre-container can be closed or open (at least one of the sides so that, later, once the container is manufactured, it can be filled with the product to be packaged), and there is also a definition in at least one lateral side vertical edge flap (24) on both lateral sides of the container, **characterized because it has** [one flat stable bottom plus flap or one stable bottom plus flap] to the left or right of the bottom (or top) part of the container, and
at least part of at least one side in at least one direction and on a plane or in an inclined plane of at least one sealing line on each flat stable bottom plus flap or stable bottom plus flap; and
one triangular body flap folded over itself at least once on at least part of another part of it: on the opposite side {(left or right) of the top (or bottom) part of the container} from where (left or right) the flat stable bottom plus flap or stable bottom plus flap on the bottom (or top) part of the container is generated, and
at least part of at least one side in at least one direction and on a plane or in an inclined plane of at least one sealing line: on at least part of at least one side of the triangular body flap folded over itself.

[At least one triangular body flap of this flexible container, as another option other than folding or bending at least once over itself, can also be manipulated to choose, for example, in a random and combined and/or repetitive manner from among at least one or more of any of the options described above at the end of paragraph **4b)]**

The container has a parallelepiped geometric shape where the two top sides are parallel and the two lateral sides are parallel but in diagonal, and the volumetry of the container is reversed from the middle up in comparison to the middle down: in one it widens to the left and down and in the other it widens to the right and up, in which the wider or the longer the flaps generated are on the lateral sides, the more it widens.

Optionally, it can also contain [(at least one stable bottom burr plus flap or / and at least one flat stable bottom burr plus flap) or / and at least one burr flap]: on top and / or underneath the front or / and behind the closed or open container.

7a) Flexible container, half of which is of the stable bottom type or English fold type {in which at least one flat English fold flap is defined} and the other half is of the pillow type. The container or pre-container can be closed or open (at least one of the sides so that, later, once the container is manufactured, it can be filled with the product to be packaged), and there is also a definition in at least one lateral side vertical edge flap (24) on at least one of the sides or lateral sides of the container, **characterized because it has** two flaps to the left and right of the bottom part of the container, and:
- in the case of having defined only one flat English fold flap, [(one flat stable bottom plus flap and one English fold plus flap), or (one stable bottom plus flap and one flat English fold plus flap)] will be made to the left and right of the bottom (or top) part of the container or pre-container and,
   at least part of at least one side in at least one direction and on a plane or in an inclined plane of at least one sealing line on each flat stable bottom plus flap, stable bottom plus flap, English fold plus flap, flat English fold plus flap: and
- in the case of having defined two English fold triangular configuration folded flaps, [one flat English fold plus flap and one flat stable bottom plus flap] will be made to the left and right of the bottom (or top) part of the container or pre-container and,
   at least part of at least one side in at least one direction and on a plane or in an inclined plane of at least one sealing line on each flat stable bottom plus flap and flat English fold plus flap.

The container has a rectangular or parallelepiped prism geometric body shape where, in addition the top or / and bottom or / and left or / and right part can be broader, wider or square: depending on the width and length of the flaps generated on the sides of the container.

Optionally, it can also contain the following burrs:
in the case of having defined only one English fold triangular configuration folded flap, it may contain none or randomly, combined and/or repetitively contain at least one or more of: the stable bottom burr plus flap, flat stable bottom burr plus flap, English fold burr plus flap, English fold burr plus flap, and at least one burr flap; and,
in the case of having defined two English fold triangular configuration folded flaps, it may contain [(at least one flat stable bottom burr plus flap) or / and (at least one English fold burr plus flap) or / and at least one burr flap]: on top and / or under the front or / and back part of the closed or open container.

7b) Flexible container, half of which is of the stable bottom type or English fold type {in which at least one flat English fold flap is defined} and the other half is of the pillow type. The container or pre-container can be closed or open (at least one of the sides so that, later, once the container is manufactured, it can be filled with the product to be packaged), and there is also a definition in at least one lateral side vertical edge flap (24) on at least one of the sides or lateral sides of the container, **characterized because it has** two flaps to the left and right of the bottom part of the container or pre-container, and:
- in the case of having defined only one flat English fold flap, [(one flat stable bottom plus flap and one English fold plus flap), or (one stable bottom plus flap and one flat English fold plus flap)] will be made to the left and right of the bottom (or top) part of the container or pre-container and,
   at least part of at least one side in at least one direction and on a plane or in an inclined plane of at least one sealing line on each flat stable bottom plus flap, stable bottom plus flap, English fold plus flap, flat English fold plus flap; and
- in the case of having defined two English fold flaps in a horizontal plane, [one flat English fold plus flap and one flat stable bottom plus flap] will be made to the left and right of the bottom (or top) part of the container or pre-container and,
   at least part of at least one side in at least one direction and on a plane or in an inclined plane of at least one sealing line on each flat stable bottom plus flap and flat English fold plus flap; y,
   one triangular body flap folded over itself at least once on at least one other part of it, to the left or right of the top (or bottom) part of the container, and
   at least part of at least one side in at least one direction and on a plane or in an inclined plane of at least one sealing line: on at least part of at least one side of the triangular body flap folded over itself.

[At least one triangular body flap of this flexible container, as another option other than folding or bending at least once over itself, can also be manipulated to choose, for example, in a random and combined and/or repetitive manner from among at least one or more of any of the options described above at the end of paragraph **4b)]**

The container has a rectangular trapezoid geometrical shape with a cone-shaped dispensing neck at the top, where in addition the top or / and bottom or / and left or / and right can be broader, wider or square: depending on the width and length of the flaps generated on the sides of the container.

Optionally, it can also contain the following burrs:
in the case of having defined only one English fold triangular configuration folded flap, it may contain none or randomly, combined and/or repetitively contain at least one or more of: the stable bottom burr plus flap, flat stable bottom burr plus flap, English fold burr plus flap, English fold burr plus flap, and burr flap; and,
in the case of having defined two English fold triangular configuration folded flaps, it may contain [(at least one flat stable bottom burr plus flap) or / and (at least one English fold burr plus flap) or / and at least one burr flap]: on top and / or under the front or / and back part of the closed or open container.

**7c)** Flexible container, half of which is of the stable bottom type or English fold type {in which at least one flat English fold flap is defined} and the other half is of the pillow type. The container or pre-container can be closed or open (at least one of the sides so that, later, once the container is manufactured, it can be filled with the product to be packaged), and there is also a definition in at least one lateral side vertical edge flap (24) on at least one of the sides or lateral sides of the container, **characterized because it has** two flaps to the left and right of the bottom part of the container, and:
- in the case of having defined only one flat English fold flap, [(one flat stable bottom plus flap and one English fold plus flap), or (one stable bottom plus flap and one flat English fold plus flap)] will be made to the left and right of the bottom (or top) part of the container or pre-container and,
   at least part of at least one side in at least one direction and on a plane or in an inclined plane of at least one sealing line on each flat stable bottom plus flap, stable bottom plus flap, English fold plus flap, flat English fold plus flap; and
- in the case of having defined two English fold flaps in a horizontal plane, [one flat English fold plus flap and one flat stable bottom plus flap] will be made to the left and right of the bottom (or top) part of the container or pre-container and,
   at least part of at least one side in at least one direction and on a plane or in an inclined plane of at least one sealing line on each flat stable bottom plus flap and flat English fold plus flap; and
   on the left and also on the right of the top (or bottom) part of the container: a triangular shaped body flap folded or bent over itself at least once over at least part of another part of the container, and
   at least part of at least one side in at least one direction and on a plane or in an inclined plane of at least one sealing line: on at least part of at least one side of each triangular body flap folded over itself.

[At least one triangular body flap of this flexible container, as another option other than folding or bending at least once over itself, can also be manipulated to choose, for example, in a random and combined and/or repetitive manner from among at least one or more of any of the options described above at the end of paragraph **4b)]**

The container has a cubic, rectangular or parallelepiped prism geometric body shape where, in addition the top or / and bottom or / and left or / and right part can be broader, wider or square: depending on the width and length of the flaps generated on the sides of the container.

Optionally, it can also contain the following burrs:
- in the case of having defined only one English fold triangular configuration folded flap, it may contain none or randomly, combined and/or repetitively contain at least one or more of: the stable bottom burr plus flap, flat stable bottom burr plus flap, English fold burr plus flap, English fold burr plus flap, and burr flap; and,
- in the case of having defined two English fold triangular configuration folded flaps, it may contain [(at least one flat stable bottom burr plus flap) or / and (at least one English fold burr plus flap) or / and at least one burr flap]: on top and / or under the front or / and back part of the closed or open container.

**7d)** Flexible container, half of which is of the stable bottom type or English fold type {in which at least one flat English fold flap is defined} and the other half is of the pillow type. The container or pre-container can be closed or open (at least one of the sides so that, later, once the container is manufactured, it can be filled with the product to be packaged), and there is also a definition in at least one lateral side vertical edge flap (24) on at least one of the sides or lateral sides of the container, **characterized because it has** one flap to the left and right of the bottom part of the container, and:
- in the case of having defined only one flat English fold flap, [(one flat stable bottom plus flap and one English fold plus flap), or (one stable bottom plus flap and one flat English fold plus flap)] will be made to the left and right of the bottom (or top) part of the container or pre-container and,
   at least part of at least one side in at least one direction and on a plane or in an inclined plane of at least one sealing line on each flat stable bottom plus flap, stable bottom plus flap, English fold plus flap, flat English fold plus flap; and
- in the case of having defined two English fold flaps in a horizontal plane, [one flat English fold plus flap or one flat stable bottom plus flap] will be made to the left and right of the bottom (or top) part of the container or pre-container and,
   at least part of at least one side in at least one direction and on a plane or in an inclined plane of at least one sealing line on each flat stable bottom plus flap and flat English fold plus flap.

The container has a rectangular or parallelepiped prism geometric body shape but is wider and more volumetric in 3D in the area or area contiguous to the generated flap, where in addition the top or / and bottom or / and left or / and right part can be broader, wider or square: depending on the width and length of the flap generated.

Optionally, it can also contain the following burrs:
in the case of having defined only one English fold triangular configuration folded flap, it may contain none or randomly, combined and/or repetitively contain at least one or more of: the stable bottom burr plus flap, flat stable bottom burr plus flap, English fold burr plus flap, English fold burr plus flap, and burr flap; and,
in the case of having defined two English fold triangular configuration folded flaps it may contain [(at least one flat stable bottom burr plus flap) or / and (at least one English fold burr plus flap) or / and at least one burr flap]: on top and / or under the front or / and back part of the closed or open container.

7e) Flexible container, half of which is of the stable bottom type or English fold type {in which at least one flat English fold flap is defined} and the other half is of the pillow type. The container or pre-container can be closed or open (at least one of the sides so that, later, once the container is manufactured, it can be filled with the product to be packaged), and there is also a definition in at least one lateral side vertical edge flap (24) on at least one of the sides or lateral sides of the container, **characterized because it has** one flap to the left and right of the bottom part of the container, and:
- in the case of having defined only one flat English fold flap, [(one flat stable bottom plus flap and one English fold plus flap), or (one stable bottom plus flap and one flat English fold plus flap)] will be made to the left and right of the bottom (or top) part of the container or pre-container and,
   at least part of at least one side in at least one direction and on a plane or in an inclined plane of at least one sealing line on each flat stable bottom plus flap, stable bottom plus flap, English fold plus flap, flat English fold plus flap; and
- in the case of having defined two English fold flaps in a horizontal plane, [one flat English fold plus flap or one flat stable bottom plus flap] will be made to the left and right of the bottom (or top) part of the container or pre-container and,
   at least part of at least one side in at least one direction and on a plane or in an inclined plane of at least one sealing line on each flat stable bottom plus flap and flat English fold plus flap; and
   one triangular body flap folded over itself at least once on at least another part of it, on the opposite lateral side {(to the left or right) of the top (or bottom) part of the container} from where the flat stable bottom plus flap or stable bottom plus flap is generated (left or right) at the bottom (or top) of the container, and
   at least part of at least one side in at least one direction and on a plane or in an inclined plane of at least one sealing line: on at least part of at least one side of a triangular body flap folded over itself.

[At least one triangular body flap of this flexible container, as another option other than folding or bending at least once over itself, can also be manipulated to choose, for example, in a random and combined and/or repetitive manner from among at least one or more of any of the options described above at the end of paragraph **4b)]**

The container has a parallelepiped geometrical shape where the two top sides are parallel and the two lateral sides are parallel but in diagonal, and the volumetry of the container is reversed from the middle up in comparison to the middle down: in one it widens to the left and down and in the other it widens to the right and up, in which the wider or the longer the flaps generated are on the lateral sides, the more it widens.

Optionally, it can also contain the following burrs:
in the case of having defined only one English fold triangular configuration folded flap, it may contain none or randomly, combined and/or repetitively contain at least one or more of: the stable bottom burr plus flap, flat stable bottom burr plus flap, English fold burr plus flap, English fold burr plus flap, and burr flap; and,
in the case of having defined two English fold triangular configuration folded flaps it may contain [(at least one flat stable bottom burr plus flap) or / and (at least one English fold burr plus flap) or / and at least one burr flap]: on top and / or under the front or / and back part of the closed or open container.

### ADVANTAGES OF THE INVENTION

- The integration and adaptability of the 3D plus system device to the vertical (or, for example, also horizontal) packaging machines is easy and straightforward.
- The application of the 3D plus transformation system directly on the vertical packaging machines for flexible containers means an enormous saving in costs and production time since it will be possible to manufacture by means of devices installed on the vertical packaging machine. All of the most significant 3D compack type containers can be obtained, e.g.: containers that are transformed by generating one, two, three or four flaps and, optionally, at least one burr flap or English fold burr flap on (the front and/or the back) and/or (the top and/or the bottom).
- It implements features to improve vertical (or, for example, horizontal) packaging machines, by enabling them to manufacture containers with greater stability, consistency, rigidity and with a more square configuration, as well as making it possible to manufacture other different models of containers as, for example, the cube or parallelepiped, or the English type or stable bottom containers which have been transformed into a cube, rectangular prism, cylinder or parallelepiped shape; or those transformed from a pillow type container or pre-container: into a cube, rectangular prism, cylinder or parallelepiped, or, in the same way the same transformation effect, into the containers which are English type from the middle down and pillow type from the middle up.
- To give the English fold type containers or those with a stable bottom, greater stability, consistency and rigidity, making them more practical and functional, for example, by widening and making the support side square or squarer or by dosing them better as they are more volumetric. It is very optimal for containers containing liquid.
- Because the 3D compack conversion process already produces the flattening effect on the top and bottom sides and because it also causes the containers to take on a cubic shape, further handling steps (e.g. on a linear or circular carousel) of the English fold or stable-bottom containers are avoided, once they have been manufactured and moved out of the vertical (or, for example, horizontal) packaging machines as is the case, for example, when the plastic legume containers or packages have the top and bottom side ironed to flatten and smooth them or they are folded and glued with contact glue, or as in the case of containers with a stable bottom with four seals (two on each lateral side) in which one third of the top part of the container: is folded once downwards and adhered with contact glue to the rest of the container, or because the bottom seal line (generated by the vertical or horizontal packaging machine) located halfway (or approximately) and across (facing the container from the front): it hinders the stability of the container as it is pulled out and this part is hardened by the heat of the container's sealing seam.
- It allows a saving in the film on a roll type wrapper, by being able to use films of a lower thickness or fewer layers, especially, in the English type or stable bottom containers because these are more stable, consistent and rigid due to the effect of the 3D plus transformation.
- The English fold flap and sealing line is currently the system that gives the greatest stability, consistency and rigidity to the English fold or stable bottom container transformed into a 3D compack, especially in the area of the base of the container. Likewise, the flap generated is very compact, resistant and does not protrude outwards, being therefore less deformable in comparison with the triangular shaped flap, also generated by the 3D compack system procedure; however, this flap does not allow the opening by it, not as it does happen with the triangular shaped flap that can be torn off and the container opened.
- The containers of the invention are very attractive visually and have beautiful and refined flaps and sealing lines in the finish, apart from being practical and functional, which make the containers a very competitive and ideal marketing product.

### EXPOSITION OF A WAY TO CARRY OUT THE INVENTION

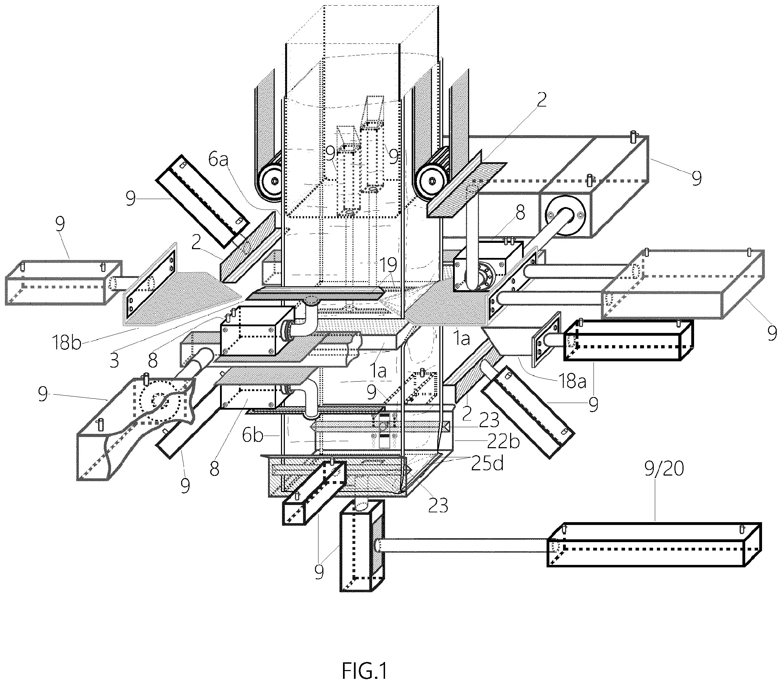

**Figure 1****:** shows a detailed view of the elevation of part of the elements or components of a vertical packaging machine of stable bottom (23) flexible containers, where the moment when the English fold flap (10) is generated can be seen as a triangular shaped impact body (17) is inserted into the side of the previous pre-container (6a), in this case with a stable four times sealed bottom (23). The sealing and cutting jaws (1) are arranged under the previous pre-container (6a), [in this case, the two jaws of this sealing and/or cutting jaw set (1) are moved by a linear drive] of the packaging machine, which is clamping and blocking the pre-container (6a), so that this jaw (1) also intervenes and participates to generate the flat stable bottom flap (or English fold) (12) and a flat support side (or base side) at the very bottom.

A fixed rotary actuator (8) can also be seen just on top the triangular configuration body (17), which in turn is fixed to its axis:
a rectangular shaped plus impact body (2) and, at the end of the same are two fixed resistors (4) as a heat source (4) to seal with two straight sealing lines in the intersection area of the flap that is generated and the rest of the pre-container's body; and,
in front of the pre-container and fixed on top of the sealing and cutting jaws (1), is another burr plus impact body (3) the same as the previous one but longer, thus arranged to generate and seal a stable bottom burr plus flap (16b) in the lower part of the front side of the previous pre-container (6a).
- In this case, as it is a pre-container in which an English fold flap is generated (10a), the plus impact (2) and sealing bodies (4) and also the burr plus impact body (3) will be activated once the English fold flap has been generated (10).

Underneath the sealing and cutting jaws (1), there are two linear plus impact bodies (2) on the left and right and two (one is not visible) burr plus impact bodies (3) attached to a turning cylinder.

The English fold (10) generated in the upper part (on the left and right) of the previous pre-container (6b), by means of two rectangular bodies (18) that are inserted into the sides or lateral sides of the upper part of the container (7) or previous pre-container (6b), right at the same time as the sealing and cutting jaws are closed (1) can also be seen.

At the bottom of this container or pre-container (6b), it can be seen that two English fold flaps (10a) have been previously generated at the bottom.

If we wanted to obtain a stable bottom container with four seals, this would then be finished and only the sealing and cutting step would remain over the top of the container would remain, which would be carried out by the sealing and cutting jaws (1) that can be seen from the vertical packaging machine. But, as in this case, the container will be transformed into a cube:
an English fold plus flap (13) will also be generated to the left and right of the top part of the pre-container (6b) or container (7), which is now arranged or positioned under the sealing and cutting jaws (1). The English fold plus flap (13) is generated by means of an impact body (2) attached to a linear cylinder (9) which will be fixed, in this case, to a support; so that when it is activated: it will hit the sheet or film in an inward and upward direction until it hits or it can go no further with the sealing and cutting jaws (1) from below: obtaining a widening of the wrapper, film or sheet in the upper part of the container (7) or pre-container (6b), making the container inflate at this part and acquire a cubic geometric body shape and, at the same time,
the English fold plus flap (13) will be sealed, in this case, on the underside, by means of a rectilinear resistor fixed to the end of the impact body (2).

In addition, in the upper central part of the machine there is a quadrangular forming tube (5) and two ramming impact bodies fixed to the inside of the forming tube (5), in which the rammer (19) is fixed to the rod of a linear actuator and is operated and moved to the most open position, so the impact body rammer (19) so the impact body rammer (19) is ramming and blocking the support side of the pre-container (6a) which is gripped and held at the bottom by the sealing and cutting jaws (1).

On the other hand, just underneath the pre-container (6) or container (7), there is a tray or platform where the pre-container is supported, arranged in this way so that it does not hang down and facilitates the generation of, on the one hand, the English fold flap (10) and, on the other hand, the English fold plus flap (13).

This tray can also be moved upwards as it is fixed to a linear cylinder, to make it even easier to generate the English fold plus flap (13).

In turn, on two of the parallel lateral sides of the tray there is a linear cylinder which will have the double function of, on the one hand, holding the container at a concentric point and, on the other hand, exerting pressure towards the inside of the container to facilitate the formation, without any folds, of the plus flaps which will be generated in the top part of the container (6b).

**Figure 2**: shows the same drawing as in figure 1 at the precise moment when a container (6a) with a stable bottom has been formed once the triangular shaped body (17) has emerged from the inside of the lowest part of the container (6a) that is located in the top part of the sealing and cutting jaws (1).

**Figure 3**: shows the same drawing as in figure 1 at the precise moment when the plus impact body (2) has been activated and has generated a plus flap, which is sealed by two sealing lines at the moment of being generated.

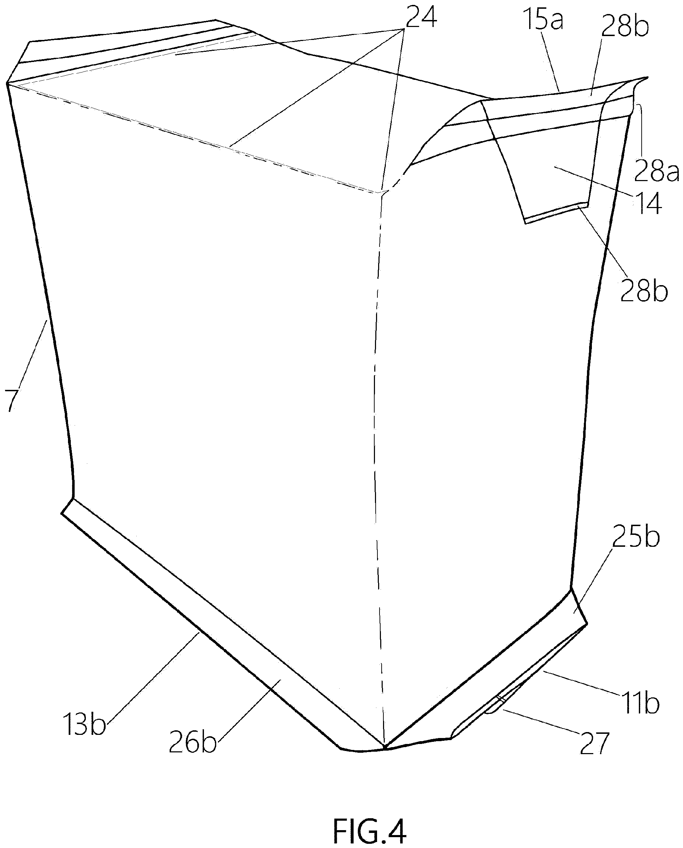

**Figure 4****:** shows a detailed view of the elevation of a cubic container (pillow type from the middle up and English fold type from the middle down), which
- at the bottom on all sides or faces, has been generated and sealed:
   two flat English fold plus flaps (11b) on the sides (one on the left and one on the right) and two flat English fold burr plus flaps (13b) (or flaps or burr flaps) on the front and back edge of the pre-container (6) or container (7) and,
- on the uppermost side (or on the uppermost lateral sides) on the left and right, are seen or are generated and sealed:
   two triangular body flaps which have subsequently been sealed with a transverse flap sealing line (18a) in the intersection area of the triangular body flap and the rest of the body of the pillow type container, as well as folded over itself (15b) in at least one direction {or at least part of the triangular body flap has been folded or bent over at least another part of it}; so that a fold (or flap) is generated which has also been sealed with at least one straight transverse sealing line (28b) in the entire transverse area of the intersection of the fold and the rest of the triangular body flap (14), which has also been folded inwards and sealed with a transverse flap sealing line (28b), and
- on the upper side, the following has been carried out perimeterally on three of its sides:
   a continuous pre-cut sealing line (24) of 7 microns on the outer layer of the wrapper (or sheet or film on a roll), by means of a laser system or device, so that when it is pulled from the side, a lid or opening will be generated through which the packaged product inside the container can be served or accessed (7).

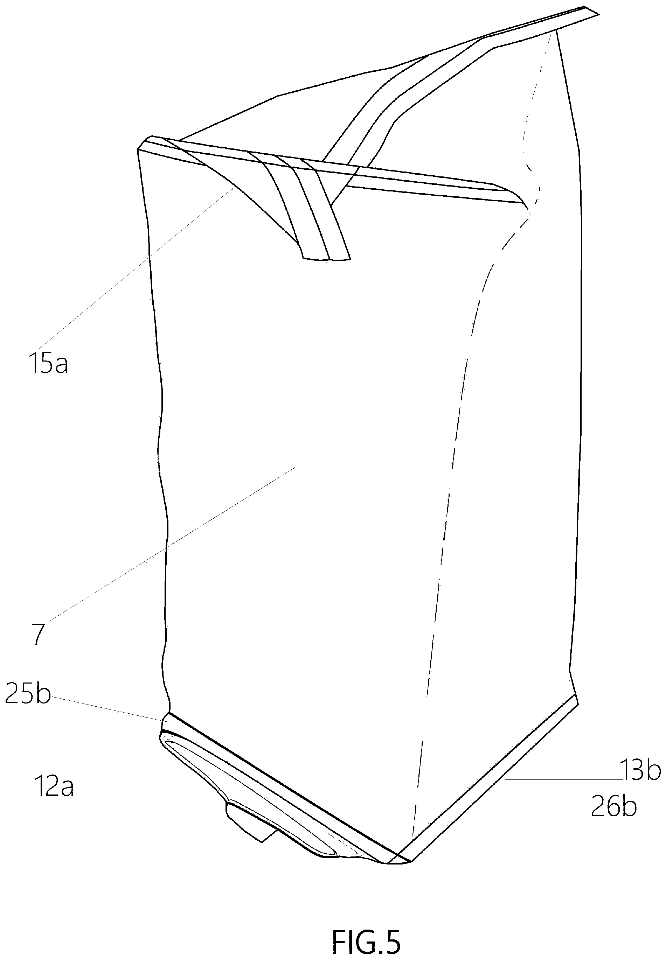

**Figure 5****:** shows a detailed view of the elevation of a stable bottom container, which has been transformed, by means of a 3D plus device, into a parallelepiped container with a dosing neck on one side of the uppermost half of the rectangular trapezoid container and the lower part of the container (7) has been generated and sealed:
two flat stable bottom plus flaps (12) [one on the left side or lateral side, and one on the right side or lateral side], and
two burr plus flaps (16a) [or edge flaps or burr flaps] on the front and back edge of the container and,
   - on the uppermost side (or in the upper part of the sides or lateral sides) and on the edge of one of the sides, by means of a 3D or / and 3D plus compack device located under the sealing and cutting jaws (1) of the vertical 3D plus machine, the following has been generated and sealed:
a triangular body flap (or a triangular body) which has subsequently been sealed with a sealing line in the intersection area of the triangular body and the rest of the container's body (7) and then folded on itself in at least one direction at least part of the triangular body (15) over at least another it; so that a fold (or flap) is generated, which has been sealed with at least one straight sealing line across the width of the intersection area of the fold and the rest of the flap: obtaining
a dosing neck in the form of an inclined cone, located on the upper side on the opposite side and in the opposite direction from the triangular body flap folded over itself, this neck has an inclination of 30° to 45° (approximately), rising from the edge or the upper part of the lateral side where the triangular body flap has been generated: to the apex or peak of the conical dosing neck on the opposite side of the top side of the container (7).

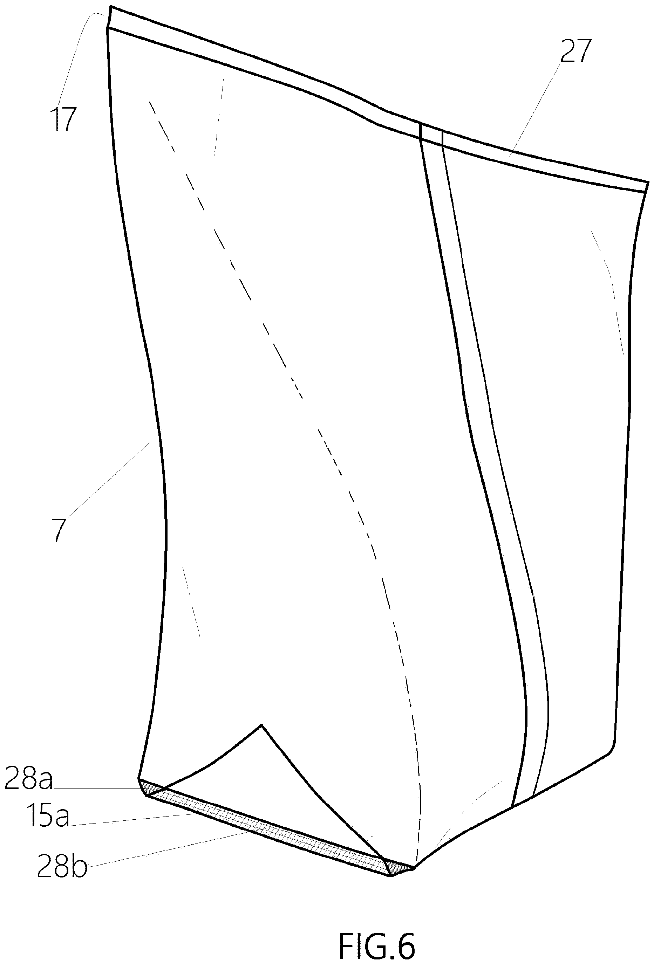

**Figure 6**: shows a detailed view of the elevation of a 3D flexible container in the form of an inverted trapezoid but with a flat, square base or supporting side, as well as the container gradually narrowing as it is lifted up and until, at the sealing line seam (27) at the top of the container is transversely flat.

Also, the 3D plus vertical packaging machine, on the lowest lateral side or lateral face of a pillow type pre-container (6) or container (7) has generated and folded:
a triangular body flap folded over itself (15a), and in the area of the fold generated in the flap, it has been subsequently sealed with a transverse flap sealing line (28b).

Also, before the triangular body flap is folded, it has been transversely sealed on the upper side with a flap transverse sealing line (28a) in the intersection area of the fold of the triangular body flap (14) with the body of the container.

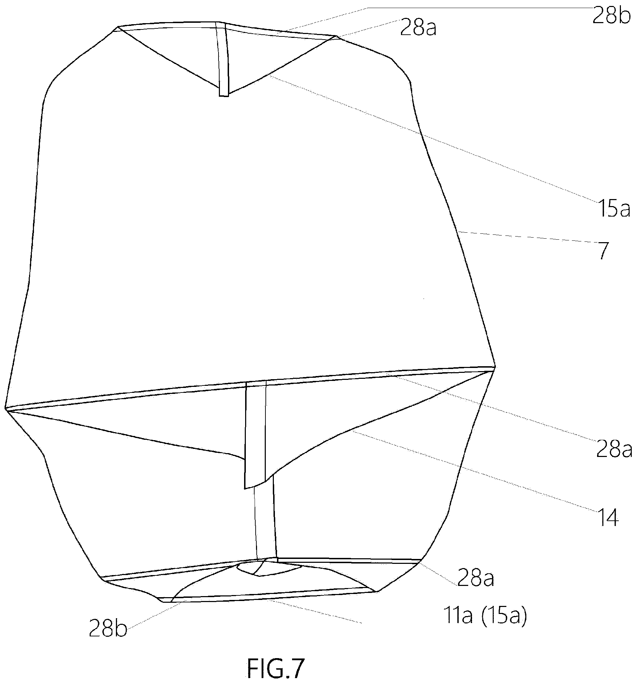

**Figure** 7: shows a detailed view of the elevation of a flexible 3D parallelepiped container arranged in a lying and upright position, in which four flaps have also been generated:
- on the lower left and right side, an **English type flap** (11a) which, first, has been sealed on the upper side by a transverse sealing line (28a) in the intersection area of the English type flap and the rest of the folded container; second, it has been folded over itself (15a) and, third, the generated fold has been sealed on the top side by a transverse sealing line (28b) in the intersection area of the fold and the rest of the folded English fold flap.
- at the top, on the extreme left, a triangular body flap (14) which has been folded - in this case - once onto itself (15a), as well as sealed on the top side by a transverse flap sealing line (28a) at the edge and contiguous area to this which has been generated in the folding of the triangular body flap (14).
- at the top, on the extreme right, the triangular body flap (14) has not been folded onto itself but has only been sealed on the top side by a transverse flap sealing line (28a) in the intersection area of the the triangular body flap (14) and the rest of the container (7) or pre-cotainer (6a; 6b).

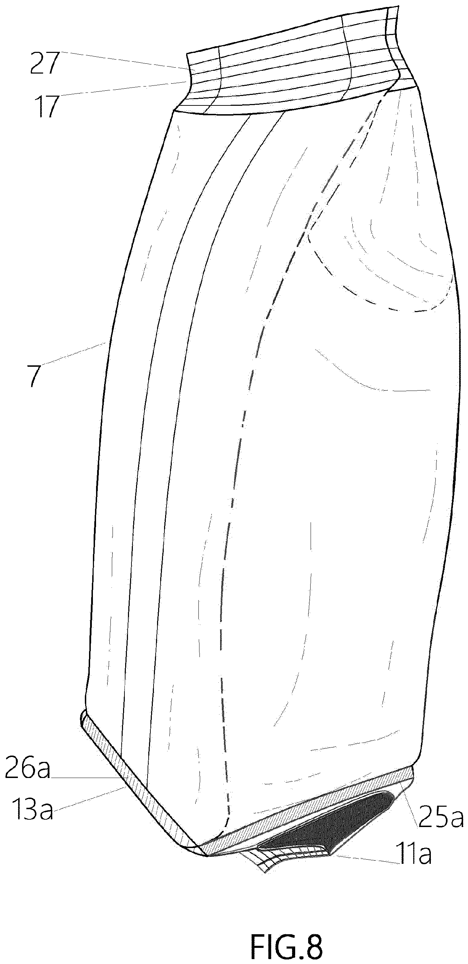

**Figure 8****:** shows a detailed view of the elevation of a flexible **English fold** type container **(vertical)** for which two English fold plus flaps (13) have been generated on the left and right side of the lowest part of the container.

The container (7), from the middle up, is triangular in shape when viewed from the side, and from the extreme left and right from the top of the sides or lateral sides close to the apex, one can see how the two parallel folded triangular flaps, characteristic of the English fold, and which in this case is **curvilinear** / **inclined** / **vertical** / **diagonal:** form an irregular hole or cavity (of a triangular or quasi-oval and curvilinear shape) in the lateral area of the top part of the container close to the apex, or the English fold transverse sealing line (27), as part of the side film from the top is folded and pushed inwards, and also part of this fold is permanently sealed by the English fold transverse sealing line (27).

On the other hand, the container is a rectangular prism from the middle down and the support side of the lower part that acts as a base is flat. This is because the following has been generated on the English fold flap on the lower left and right side or face:
an English fold plus flap (11a), which shows the corresponding sealing of, in this case, an English fold plus sealing line (25a).

Likewise, in the lower part of only the left side or face, an English fold burr plus flap (13a) has been generated transversely.

**Figure 9:** shows a detailed view of the elevation of a flexible mixed type container, **pillow** from the middle up, therefore, as can be seen in the image, there are no folds or bends in the film inwards, this makes this transverse sealing line at the top which closes the container, easy to open; and,

from the middle down, the container has a parallelepiped shape with a flat support side. This is due to two reasons:
- that, previously, when the **flat English fold** (7) type of container was produced, it was placed at the bottom of the lateral sides of the container: it has already acquired a parallelepiped shape with a flat support side, and
- that, subsequently, a flat English fold plus flap (11b) has been generated on the lower left and right lateral sides: with its corresponding, in this case, flat English fold sealing line (25b), in this case, on the top side of the flat English fold flap. This makes the container more stable, firm and consistent in its cubic or rectangular prismatic shape, and the support side sits better as it remains flatter.

**Figure 10:** shows a detailed view of the elevation of a **flexible, stable bottom-type container with four seams**, as can be seen in the picture, which are generated and arranged longitudinally and continuously on the four vertical edges of the four corners of the container.

On the lateral sides of the upper part of the container, one can see the characteristic inward gap previously created by making the **English fold or English fold flap** [also known as the vertical/diagonal/oblique/tilting English fold flap], as well as transversely on the top part of the container, the parallel transverse sealing lines (27) of the English fold transverse sealing flap (17) can be seen.

Also, on the lateral sides (left and right) of the underside of the container, there is a **flat English fold** flap - previously generated -:
a flat stable bottom plus flap (12a) that makes the container widen more than halfway down and that, in this case, has been sealed with a single flat stable bottom plus sealing line (25c), and, in this case, this sealing line is straight and not, for example, curved or diagonal / oblique.

Thus, the container is optimized by being more stable and consistent.

**Figure 11:** shows a detailed view of the elevation of a a **flexible mixed type container,** which from the transverse middle upwards is pillow type and from the transverse middle downwards is flat English fold type.

The container (7) has a horizontal rectangular prism shape and the following flaps or sealing lines have been generated:
- on the left and right of the bottom part of the lateral sides, there are two flat English fold plus flaps (11b) by means of a transverse sealing line (25b) on the underside, as well as part of the folded or bent transverse sealing flap (17) underneath the base or support side.
- at the top left and right of the lateral sides, there are two strip flaps (23), and one can see, in the intersection area between the strip flap (15b) and the rest of the container, as part of the sealing line of this flap, the transverse sealing line of the flap (28) which, in this case, has been made across the entire length.

On the other hand, in the upper transverse part of the front side, two pre-cutting lines (24) have been made by laser to generate -- together with the sealing lines of the strip flap (15b) -- an opening lid through which the packaged content inside the container (7) can be served.

**Figure 12:** shows a detailed view of the elevation of a **flexible vertical pillow type container** which, in this case, is of a rectangular or parallelepiped prism shape, and the side that serves as a base (or support) is flat. The following flaps have been generated on the container:
- at the bottom part of the lateral sides (left and right of the container) there is a triangular flap (14) folded over itself (15a) that, in this case, has been folded towards the flat side acting as a base or support. Also, the flap prior to being folded has not been sealed but, once folded over itself, has been sealed only by a transverse flap sealing line (28b) on the top side.
- at the top part of the lateral sides (left and right of the container) there is a triangular flap (14) folded over itself (15a) that, in this case, has been folded towards the lateral side. Also, the flap prior to being folded has not been sealed but, once folded over itself, has been sealed only by a transverse flap sealing line (28b) on the edge and contiguous area to it, and on the top side.

It can also be seen that when the flap is folded back on itself, the transversal closing flap (17) of the container has also been folded back in the same way.

On the other hand, just underneath the upper part of the front side there is a pre-cut line (24), which also continues the transverse totality of the two lateral sides contiguous to the front side.

**Figure 13:** shows a detailed view of the elevation of the same flexible container as in Figure 12 but, in this case, it is a view of one of the two lateral sides of the container. It can be seen how in the upper part there is a triangular body flap folded over itself (15a) towards the lateral face, and the detail of the sealing of only one transverse flap sealing line (28b) in the edge and contiguous area to it, as well as on the upper side of the flap.

Also, one can see the pre-cut line (24) made just below the top part of this lateral side and which, in this case, coincides with the flap (15a) arranged above it.

**Figure 14:** shows an oblique zenithal view of the same flexible container as in Figure 12 and 13 but in this case an opening lid can be seen on top of the container because the only pre-cut line (24), which is continuously included in both the front side and the two contiguous sides:
has been torn along the entire pre-cut line (24) by pulling just over this line (24), and by starting to pull (up and back) on one of the two top corners of the container that make up the contiguous front, top and lateral sides.

**Figure 15:** shows a detailed view of the elevation of a **lying horizontal flexible pillow type container,** of a rectangular or parallelepiped prism shape, where all its sides are flat and the lowest side acts as a base or a support side.

On the upper flat side there is a pre-cut line (24) arranged on the perimeter contour of three sides, the front side and two of the contiguous sides; this will generate an opening lid on the uppermost side.

Four identical triangular body flaps (14) have been generated in the container folded over themselves (15a) towards the contiguous lateral sides. These flaps have been sealed, first and before being folded: on the inner side and by a transverse sealing line (28a) in the intersection area between the flap and the rest of the container and, second and after being folded, it has been sealed on the inner side by a transverse flap sealing line (28b) on the edge and contiguous area to it.

It can also be seen that the transverse closing flap (17) is folded in the same way as the flap (14) folded over itself (15a).

Also, in the upper part of the transverse area of the front side, there is part of a pre-cut line (24), that continually proceeds in the in the perimeter contour of the entire two lateral sides of the flat face on top.

**Figure 16:** shows a detailed view of the elevation of the same container as in Figure 15 but, in this case, is a zenithal view of the upper side, where one can see in the upper part or in the upper side that there are three pre-cut lines (24) joined as one in the outer perimeter of three of the contiguous sides. This pre-cut line (24) will generate a container opening lid.

Also, we can see part of the two triangular body flaps folded onto themselves (15a) towards the lateral side on the left and right sides, and, also, we can see, on the upper side, the transverse flap sealing line (28b) on the edge and the area contiguous to it.

**Figure 17:** shows a detailed view of the elevation of the same container than that of Figure 15 and 16 but, in this case, it is an oblique zenithal view where it can be seen that an opening lid has been created on the top or on the upper side of the container to make use of the content packed inside it, because the only pre-cut line (24) runs continuously both on the front side and on the two sides contiguous to it:
this has been torn along the entire pre-cut line (24) by pulling just over this line (24), and by starting to pull (up and back) on one of the two top corners of the container that make up the contiguous front, top and lateral sides.

**Figure 18:** shows a detailed view of the elevation of a **lying horizontal flexible pillow type container** of a rectangular or parallelepiped prism shape, where all its sides are flat and the lowest side acts as a base or a support side.

At the top of the flat front side, there are two pre-cut lines (24), which continue at the same height distance along the entire outer perimeter of the container, so it will continue along the lateral sides and the back side, so that when pulling and tearing a corner just over this pre-cut line (24) made by laser, preferably 7 microns: an opening lid is generated through which the content packed inside can be served and that, in this case, the lid is detached or torn from the rest of the container.

Having one more pre-cut line (24) parallel right underneath the other makes it easier and more effective to tear the pre-cut line (24) located on top, because this area delimited by the two pre-cut lines is more consistent allowing better finger grip when pulling the wrapper to tear the pre-cut line, as well as preventing the wrapper, film or sheet from tearing in more places other than the pre-cut line (24).

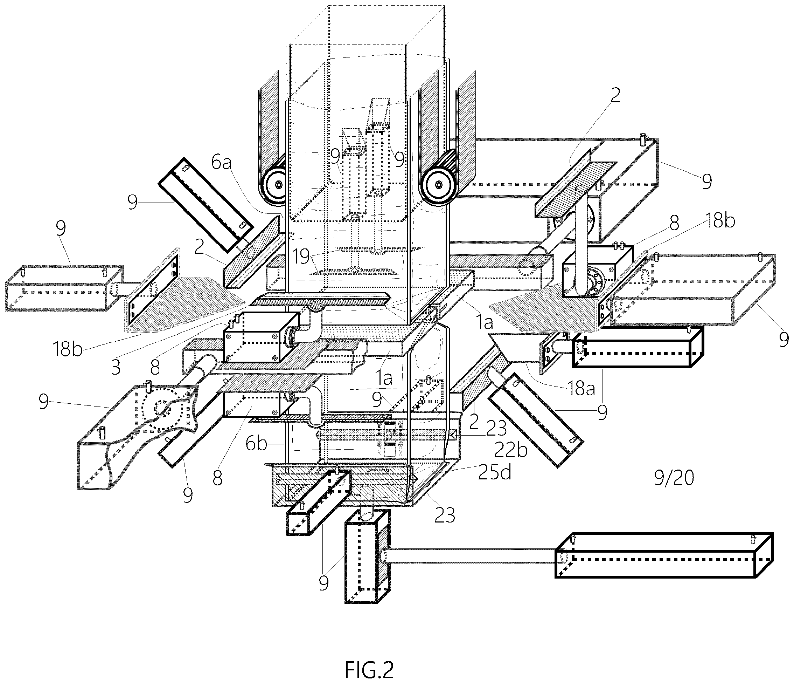

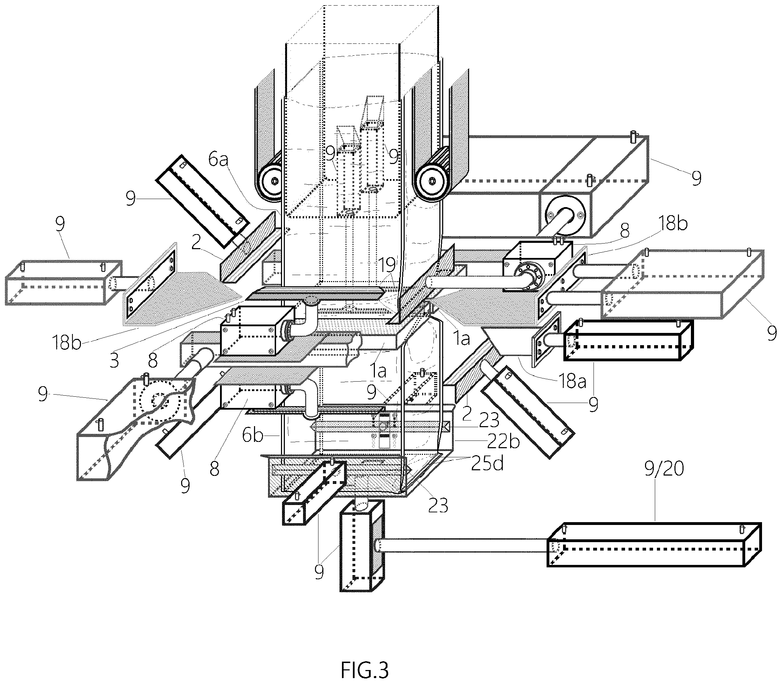

**Figure 19:** shows a detailed view of the elevation of the same machine as the one in Figure 1, 2 and 3 but, in this case, the machine also has or has installed a second sealing and/or cutting jaw (1b) over the sealing and/or cutting jaw (1a), also, the previous pre-container (6a) that is being developed or manufactured is of the mixed type, pillow type from the middle up and English fold type from the middle down (without vertical edge flaps) and, the following pre-container (6b) is an entirely English fold type of container where it can be seen that a flat English fold plus flap has been generated at the bottom (11b) and in the upper left and right side no plus flap has been generated, but a vertical (or, for example, diagonal or oblique) English fold flap has been generated by means of the impact body (18a). In this case, the machine will produce or manufacture two different containers in each production cycle.

The sealing and/or cutting jaw (1b) is operated in the closed position, where the support segments of the two jaws are in contact when closed.

**According to a first object of the invention**, a process for transforming an English fold type pre-container with a stable bottom is presented, in which an English fold flap arranged in a vertical (or curved, inclined or diagonal) plane is generated to the left and right of the top part of the pre-container (6b) and an English fold flap arranged in a horizontal plane is generated to the left and right of the bottom part of the pre-container (6a):

These pre-containers (6a; 6b), by means of the plus impact bodies (2; 3), will be transformed or widened into a cubic shape, generating a flat side in the upper part and a more stable and consistent side in the lower part or side, which will also have the function of a lid due to the fact that a 7 micron pre-cut line has been made in the outer layer of the sheet or film. Therefore, two flat English fold plus flaps (11a) [in horizontal plane] and two English fold plus flaps (11b) [indistinctly, I call it: in an inclined plane / vertical / diagonal] will generated and sealed. The Procedure comprises the following four Stages:

### First Stage

It is predisposed to the vertical packaging machine of the film type roll and that, in this case, is a two-layer polyethylene and polypropylene rolled sheet in the outer layer. The roll is introduced into the drum at the back of the machine and is unfolded on mechanical and nonmechanical rollers that redirect the sheet to the forming neck, where it is folded into a square shape, which as the sheet or film moves downwards will completely wrap the forming tube (5), in this case, rectangular. This sheet, at the same time that it advances moving downwards, will undergo the following two processes:
- a device arranged vertically and parallel to the side behind the forming tube (5), intended to seal with at least one continuous longitudinal sealing line, by means of a mechanical method such as that of a rotating wheel or disc, which in turn has a heat source mode on the outer perimeter contour: the two ends of the folded sheet overlap to form a rectangular tube, thus keeping the sheet permanently in the form of a tube, and
- a device arranged vertically located in at least part of the four corners of the rectangular tube, intended to continuously fold the four edges and/or at least part of the areas contiguous to these edges generated in the wrapper when wrapping the forming tube (5), by means of a method such as a clamp or a method of strangling the wrapper at two points distant from each edge, as well as intended to seal with at least one continuous longitudinal sealing line, by means of a mechanical mode such as a roller sealer which is in itself a heat source, or in its external contour has a heat source mode, so as to continuously seal the four stable bottom burr edged flaps generated on the four edges; obtaining four defined lateral sides that give the pre-container or container greater consistency and stability, and it will facilitate or be part of the process by which the horizontal English fold flap is generated.

Then, the sheet or film already in the form of a tube, will pass through the sealing and cutting jaws (1a), located right underneath the forming tube (5), which will be at a distance from the sealing and cutting jaws (1a) which is less than, equal to or greater than the length of the container (7) or pre-container (6a) to be produced but which, in any case, it will allow the wrapper to later flex so that the English fold flaps, plus flaps, burr plus flaps or triangular body flaps folded or bent over themselves are generated.

Next, the following step is taken simultaneously:
the sealing and cutting jaws (1a) are operated to close (mechanically driven by linear cylinders (9) to flatten and block the wrapper, and
at the same time, on the lowest part of the lateral sides of the wrapper, is to be pressed with a triangular shaped impact body (18b), which is to be inserted into the container horizontally, thus generating the English fold (10) but with the horizontal triangular shaped flap centered in the middle of the width of the flat side which is also generated, thus giving the previous pre-container (6a) {the one between the sealing and cutting jaws (1a) and the forming tube (5)} a support base, and the pre-container (6a) is widened at the bottom adopting a parallelepiped or cubic geometric figure shape.

### Second Stage

From here, the sealing and/or cutting jaws (1a) will be able to seal and cut the bottom part of the pre-container (6a). On the other hand, when the sealing and cutting jaws (1a) are operated and closed, they will more optimally form a flat and wide surface on both sides (top and bottom) so that the pre-container rests horizontally, which will subsequently make it easier to generate the plus flaps [or triangular body flaps] (14; 15a; 15b; 15c)], by knocking, folding and sealing at least part of the underside of the side or lateral side of the pre-container (6a) onto at least part of the supporting side or the one at the top. The procedure comprises the following steps:
- A first step, in which two flat stable bottom plus flaps (12b) {one on the left side and one on the right side} will be generated at the same time from the bottom or lowest part of the pre-container (6a), by means of an impact body (2) and a heat source (4) from a device located near the bottom of each lateral side (one on the left and one on the right) of the pre-container (6a; 6b).

This device, in this case, is fixed to the upper side or face of at least one of the two jaws (the two movable ones, or a movable one and a fixed one) which make up the sealing and/or cutting jaws (or jaw set) (1a). The device consists of:
a plus impact body (2) which is preferably of a rectangular shape and which is additionally attached to (or forms part of) an extension support arm such as a tube, rod or bar which is attached to the shaft or key of the actuator shaft (8), preferably a rotary or swivel type: intended to extend the radius of action by acting as an extension and positioning the actuator (8) at an operating distance from the lateral side of the pre-container (6a); the actuator may in turn be rectilinear or curvilinear or, for example, adjustable in rotation angle: thus improving striking efficiency by horizontally matching the impact body and the surface formed when the sealing and cutting jaws are in the closed position. When this surface is flat and there is the minimum gap or space between the two jaws that make up this jaw set (1a), it is optimized the most; and,
a heat source, preferably of a resistance (4) which is fixed to the plus impact body (2): intended to seal at least part of at least one side of at least one sealing line of, in this case, the flat stable bottom plus flap generated at the bottom part of the lateral side of the pre-container (6a); and
a pneumatic or electric rotary or swivel actuator (8 ) with a rotation, preferably, of 90°, which is fixed, preferably, on the upper part or side of the fixed jaw (1a) and in a position where its axis is horizontal and parallel to the jaw's axis (1a); in such a way that, when rotated by 90°, the plus impact body (2) will horizontally coincide with the flat surface of a side or upper side of at least part of one of the two jaws (1a, 1b) of the sealing and/or cutting jaws (1a).

The flap is generated when the impact body (2) strikes, crushes and folds the intended portion of at least part of at least one side or lateral side of the pre-container (6a): into at least part of at least another side or lateral side of the pre-container (6a). Also, the higher the impact body (2) hits (impacts) on the lateral side: the greater will be the flap generated, causing the inflation and widening of the impacted area of the pre-container (6a): obtaining
a pre-container (6a) transformed into a more three-dimensional geometric figure shape in which the pressure inside has been increased producing a local inflation effect, causing one quarter (or approximately) of the pre-container (6a), from which the flat stable bottom plus flap (12b) has been generated, to take on a cubic or rectangular prismatic shape.
- A second step, once these two flat stable bottom plus flaps (12b) have been generated, two flat stable bottom burr plus flaps (13d) will be generated instantly, one on the lowest part or on the edge of the front side and one on the back side, by means of the same procedure and the same device as that used to generate and seal the flat stable bottom plus flaps (12b), described above in the first step.

This device (3) is to be fixed, preferably, on the upper surface of the sealing and cutting jaws (1a; 1b): one in front of the front side and the other in front of the back side of the pre-container (6a) and at a distance equal to or less than the distance of the lateral devices (2).

Also, at least two, three or four or more devices (2, 3) can be operated at the same time to save time in the 3D plus transformation procedure.

For this purpose, the plus impact bodies (2, 3) involved must be narrower to allow the plus impact bodies (2, 3) to be mounted; so that:
either at least part of the left and/or right end of the burr plus impact body (3) in the middle is narrowed; or one or both plus impact bodies (2) or three of these lateral side plus impact bodies (2, 3) are narrowed.

### Third Stage

Once the plus flaps have been generated and sealed and the impact bodies (2, 3) have returned to the initial stop position, the next three steps will be taken:
- First, the pre-container (6a) is to be filled with the product to be packaged falling from the top of the machine where there is a multi-head weigher with flaps that, when opened, once the product to be packaged has been weighed, it falls down the inside of the forming tube (5) until it reaches the inside of the pre-container (6a) located above the sealing and cutting jaws (1).
- Second, the jaw (1a), seals and cuts, or only cuts, by means of a blade, because it has been sealed during the second stage once the jaw (1a) has been closed.
- Third, the sealing and/or cutting jaw (1a) opens and returns to the initial stop position.

Next, the pre-container (6a) together with the rest of the wrapper, will move downwards and stop right at the height required to give the pre-container (6a) once the sealing and/or cutting jaws (1a) have been passed; then, immediately, the sealing and/or cutting jaws (1a) will be completely closed, separating and holding: underneath the pre-container (6b) already completely formed and, on top, another pre-container (6a) belonging to a new packaging production cycle.

At the same time the sealing and/or cutting jaws (1a) close, as is the case with the lower part of the pre-container (6a) located at the top of the sealing and/or cutting jaws (1a), where the English fold flaps are generated (10):
the same process will be developed or carried out by which the English fold flaps are generated (10) but, in this case, on the top of the pre-container (6b) located under the sealing and cutting jaws (1a). Therefore, at the same time as the sealing and cutting jaws (1a) are closed, they will be inserted horizontally inwards both in the lower part of the upper pre-container (6a) and in the upper part of the pre-container (6b) of the jaw (1a):
an impact body (18a; 18b) on each lateral side of both pre-containers (6a, 6b), to thus generate two horizontal English fold flaps {at the bottom of the pre-container at the top of the jaw (1)} and two vertical English fold flaps (10b) (at the top of the pre-container at the bottom (6b) of the jaw (1a), as well as making the two pre-containers (6a, 6b) expand or acquire a cubic volumetry from the middle down (or approximately) of the top pre-container (6a) and from the middle down (or approximately) of the bottom pre-container (6b).

The two impact bodies (18) located under the jaw (1a) are preferably of a rectangular geometric shape, as well as the apexes that friction or contact with the wrapper are rounded to avoid damaging the pre-container (6b) or container (7).

These four impact bodies (18) are driven by means of a mechanical device such as a linear cylinder (9) and are fixed to its rod, as the actuator or linear cylinder is fixed to a support, which in turn is fixed to the vertical or horizontal machine.

Next, once the four English fold flaps have been generated and because in this case a cubic container is to be produced, the plus flaps will be generated simultaneously both in the upper part of the pre-container (6b) located under the sealing and/or cutting jaws (1a) and in the lower part of the pre-container (6a) located above the jaws (1a):

In the top pre-container, we will proceed in the same way and manner and with the same devices and procedure as the one described above in Stage two.

In the lower pre-container, we will proceed in the same way/ manner, same devices and procedure as the one described above in Stage two, but the devices are fixed in an inverted position underneath the sealing and/or cutting jaws (1a).

In addition, optionally, before each of the two stable bottom plus flaps (12a) are generated on the left and right side of the top of the pre-container (6b), a cone-shaped flap with no folds will be generated by means of a conical flap removal device with no folds to enable the stable bottom plus flap (12a), also with no folds and of greater width or broader, to be generated in an optimum manner at a later date; so, in the vertical packaging machine, a conical flap removal device is installed underneath the sealing and/or cutting jaws (1a), arranged right in front of the pre-container (6b) at a height, preferably, from the middle or middle down the front or back side of the pre-container (6b), located underneath the sealing and/or cutting jaws (1a), which holds it transversely by the front or back side.

This device has:
a pneumatic or electric rotary actuator (8) fixed in a support mode and located in front of the pre-container (6b) or container (7), where the axis of the same will be at a height right in the middle of the lower (or approximate) half of the container (7) or pre-container (6b), as well as facing the front and back sides of the pre-container (6b) or container (7), and
two support bodies, preferably in the form of a flat rectangular blade or platen, placed one on the left and one on the right of the middle or middle down of the lateral side of the pre-container (6b), and at an adjustable distance close to or in contact but it is not necessary for the two blades to exert pressure towards the inside of the pre-container (6b) in opposite directions. These two blades are attached to the key of the rotary actuator shaft (8) that drives them: intended to
turn the pre-container (6b) like a pendulum, from the sides or lateral sides from the middle to the bottom of the pre-container (6b) or container (7), which is held transversely from the top by the sealing and/or cutting jaws (1a), moving the pre-container (6b) or container (7) with a pendulum movement to the left and/or right and in a few rotation degrees between 1° and 90°(approximately), 45° being the most optimal but, in any case, this will depend on variables such as that of the dimensions, volumetry and the amount of fluid packaged inside the pre-container (the more fluid the less the rotation or turning degrees); so that, when turning, pressure will be exerted on impact towards the inside of the pre-container (6b) {the underside of the sealing and/or cutting jaws (1)} with {the part of one half of the top side, apex or area of one quarter of the top (approximately) towards which the pre-container (6b) is directed with the pendulum movement; producing a local inflation area in the area of a quarter of the top (approximately) of the pre-container (6b) that has not been impacted by the sealing and/or cutting jaws (1a); obtaining:
   at least one support side or additional transitional side in the area of the pre-container with which the sealing and cutting jaws impact (1a) and,
   a conical configuration flap, inflated and without folds, in the {apex area or quarter area (approximately) of the top part of the pre-container (6b)} opposite {the other quarter area of the top of the pre-container (6b) that has been impacted with the jaw (1a).

The procedure of the device is the following:
once the sealing and/or cutting jaws (1a) are closed and the top part of the pre-container (6b) or container (7), which is now under the jaws (1a), is held transversally, as well as the two horizontal (10a) and the two vertical (10b) English fold flaps, the following steps are taken:
   - a first step, optional, in which the conical flap removal device is operated by first making the turn to the right so that the blade located on the left side of the pre-container (6a): will push the pre-container (6b) making it turn to the right and upwards, as well as generating a conical flap in the area of the apex or of a quarter of the upper half of the left side of the pre-container (6b); then,
the plus impact body flap (2), located on the surface underneath the sealing and/or cutting jaws (1a) and close to the lateral side of the upper left side of the pre-container (6b), is operated, so the plus impact body flap (3), which is rectangular and wider than the width of the lateral side: will hit or impact, first, on the lateral side and, second, with the surface underneath the sealing and/or cutting jaws (1a), thus generating the stable bottom plus flap (12a) on the upper left side of the pre-container (6), and
of the same, it is instantly sealed, in this case, in the stable bottom plus flap (12a), preferably, in the intersection area of this flap and the rest of the pre-container's body: obtaining a more consistent and stable cubic container on the support side, by having: a broad, square flat side on the top side of the pre-container (6b), an inflated area with a cubic volumetry from the middle up of this pre-container, two stable bottom plus flaps and one stable bottom plus flap sealing line; and
   - a second step, once the two stable bottom plus flaps (12a) are generated at the top of the pre-container's lateral faces (6b), the sealing and/or cutting jaws (1a):
      seals and cuts or just cuts (because it has been sealed in a previous stage or step) at the same time the bottom part of the pre-container (6a) at the top and the top part of the pre-container (6b) located under the sealing and/or cutting jaws (1a). It is also possible to cut, previously, from the moment that the sealing and cutting jaws (1a) were closed the previous time, because the jaws (1a) hold and fasten the pre-container (6b)] and,
      finally, the sealing and cutting jaws (1) open and the container (7), already processed and transformed into a cubic geometric body shape, falls.

From here, the same stages and steps will be repeated to produce this same closed plus cubic container, in this case, in its entirety.

**According to a second object of the invention**, a machine is presented, or a refinement and improvement of vertical (or, for example, horizontal, inclined plane or diagonal) packaging machines for flexible containers such as the English fold, stable bottom, pillow or, also, half or one part pillow and half or one part English fold or stable bottom, which contains at least one fluid inside and, optionally or additionally, may contain at least one solid, e.g. (solids and/or granules) and/or (powders), which comprises:
- optionally, means of conducting or guiding and folding the sheet, film on a roll or wrapper, such as a forming neck and/or a forming tube, preferably square or cylindrical, and
- at least one jaw device or set of two parallel jaws with which the flexible pre-containers or containers are, preferably, transversely and horizontally sealed and cut (from both the top and the bottom), and
- optionally, means of conducting or guiding and folding the sheet, film (on a roll) or wrapper (tube or semi-tube), such as a forming neck and a forming tube, preferably square or cylindrical, and
- optionally or additionally, a means of sealing intended to seal longitudinally or at least part of at least one side by at least one sealing line: of at least part of two ends that meet and overlap of, for example, a sheet or film preferably wrapped around a forming tube, and
- optionally or additionally, a means of generating at least one fold and at least one means of sealing (preferably longitudinal and continuous) the fold (or at least part of at least one side by at least one sealing line of the fold): on at least one vertical edge of at least one side of the sheet or film (or of a wrapper in the shape of a tube or semi-tube) which, most optimally, is folded wrapping the forming tube and, preferably, four of these folds are generated with at least one continuous sealing line: two on each vertical edge perimeter (to the left and right) of both the left side and the parallel right side.
- optionally or additionally, a means of generating at least one fold such as the English fold or stable bottom type, and
- optionally or additionally, a means of manual, mechanical or automated filling of the content to be packaged inside the pre-container or container, such as that of a hopper, dosing machine or multi-head weigher;
where the machine is characterized because it has:
- at least a **3D plus device of the invention,** intended to hit or push, by means of an impact body mode or of a directed fluid (preferably air), to at least part of at least one face or side of the pre-container or container [for example: (to the left or / and right) or / and (in front or / and behind) from on top or / and underneath], preferably the area of the edge or contiguous area to it, but also the area of an apex or the area of two sides or contiguous sides):
   generating at least any one of the flaps as for example: plus flap (11a; 11b; 12a; 12b; 13a; 13b; 13c; 13d; 13e), the triangular body flap (14) or the manipulated triangular body flap (15a; 15b; 15c) by means of a mode such as the 3D compack system.

The plus impact body may be fixed to a support (itself fixed to the machine) or to at least one element or part of the machine, preferably, the sealing and cutting jaws (1), and
- at least one **sealing system,** by means of a heat source such as a resistance, laser or ultrasound; arranged close to at least one face or side of the pre-container or container [e.g. to the (left or / and right) or / and (front or / and back) from on top or / and underneath] and which, preferably, most optimally, will be attached to the same plus impact body (2, 3), which generates the plus flap, burr plus flap, triangular body flap or manipulated triangular body flap by means of a mode such as the 3D compack system. It can also be fixed to the sealing and cutting jaws (1), preferably to the flat surface on top and/or underneath the sealing and cutting jaws: intended to
   seal at least once with at least one sealing line at least part of at least one side of at least one English fold plus flap, stable bottom plus flap, burr plus flap, triangular body flap or manipulated flap, defined in the previous step; obtaining:
   at least one sealing line that will permanently keep at least one of the support sides or additional side, or the area limited by a support contour or additional side, and will also permanently keep the English fold plus flap, stable bottom plus flap, English fold burr plus flap, stable bottom burr plus flap, triangular body flap or manipulated triangular body flap stable.

**According to a third object of the invention**, a system is presented which comprises the ability to produce at least two containers (7) in each machine manufacturing cycle, by means of at least a second sealing and/or cutting jaw (1b), as well as to generate any one of the containers, preferably a mixed container, one half of which (preferably a transverse horizontal from the middle up) is of the pillow type and the other half of which is of the English fold or stable bottom type.

The following describes the procedure from the production or processing of the second cycle onwards, which contains the following steps:
A first stage, in which the wrapper, film, sheet, tube or semi-tube, by means of a mode as described in the first stage of Claim 1, is positioned or has passed {the last sealing and/or cutting jaws or also, the sealing and/or cutting jaws (1a) and/or jaws (1b)}: at least a distance equal to or greater than the length of the container (7) or pre-container (6a) or/and pre-container (6b) which is or are intended or wanted to be obtained.

A second stage, in which the procedure is the same as the one given in the second stage of Claim 1, and as in Claims 5 and 10. The following steps are taken:
A first step, in which the sealing and/or cutting jaw (1a) is closed, defining a pre-container (6a) open at the top and a pre-container (6b) closed at the top and at the bottom, and, depending on the intended container (7), a choice will be made from the following options:
- in the case of a mixed container, simultaneously, the sealing and/or cutting jaws (1a) will close at the same time as the impact bodies (18a; 18b) are operated, generating simultaneously two English fold type flaps both at the bottom of the pre-container (6a) and at the top of the pre-container (6b) and,
- in the case of a complete pillow container, the jaw (1a) will close in the manner of the pillow type container (where the impact bodies are not operated (18a; 18b)), thus generating a transverse pillow sealing flap (17a), in which the two sides of the film, sheet, tube or semi-tube that are brought together when the jaw is closed (1a): do not form overlapping layers or folds as in the case of an English fold or a stable bottom container and,
- in the case of a complete (or partial) English fold or stable bottom container, the impact bodies (18a; 18b) arranged on the left and on the right and on top and underneath the jaw (1a) are operated simultaneously [as another option, at least one (18a; 18b) is operated], thus generating on the left and/or on the right of the lower part of the pre-container (6a) and on the left and on the right of the upper part of the pre-container (6b): a flap (or at least a flap) of the English fold and/or of the stable bottom type.

A second step, in which, preferably, the pre-container (6a) is filled with the product to be packaged and then the sealing and/or cutting jaw (1b) is closed defining a pre-container (6a) also closed from the top and from the bottom and that, depending on the finished container (7) to be obtained, a choice will be made from the following options:
- in the case of a mixed container, the jaw (1b) will close in the manner of the pillow type container, where the impact bodies (18a; 18b) are not operated, thus generating a transverse pillow sealing flap (17a), in which the two sides of the film, sheet, tube or semi-tube that are brought together when the jaw is closed (1b): will not form overlapping layers or folds as in the case of an English fold or a stable bottom containers and,
- in the case of a complete pillow container, the jaw (1b) will close in the manner of the pillow type container described above and,
- in the case of a complete (or partial) English fold or stable bottom container, the sealing and/or cutting jaw (1b) closes in the manner of the English fold or stable bottom type container, so that simultaneously with the closing of the jaw (1b), at least one impact body (18a; 18b) arranged on the left and on the right and underneath the jaw (1b) will preferably be operated [as another option, at least one (18a; 18b) is operated], thus generating on the left and/or on the right of the top part of the pre-container (6b): one or two English fold and/or stable bottom type flaps.

Also, once the jaws (1a; 1b) are in the closed position, and depending on the container (7) to be obtained, it will be chosen, from any of the options or processes described in Claim 5, the option being the one that is most optimized when sealing and cutting in between the transverse sealing line carried out on the entire upper transverse part the pre-container (6a) or, also,
is cut or sealed and cut in front or behind, preferably, at least one transverse sealing line carried out on the entire upper transverse part the pre-container (6a), when it is desired to obtain a container that is open on at least one side, which will subsequently be used as a container to be filled and sealed, later, in a production plant.

Another option may also be given in which this jaw (1b) does not cut or seal, or only seals.

A third stage, in which the procedure is the same as in stage three of Claim 1 and stage four of Claim 2.

A forth stage, where the procedure is the same as in Claim 3.

**A** fifth stage, in which the sealing and/or cutting jaws (1a; 1b) are opened, thus obtaining:
- in the case where the two jaws (1a; 1b) cut the entire upper and lower transverse part the pre-container (6a; 6b), two finished containers (7) in each manufacturing cycle:
   an individual pre-container (6a) which has already been processed or converted into a container (7), where it will be picked up, for example, by a mechanical means such as a robot arm or gripper, or dropped onto a conveyor belt located underneath the machine, and
   an individual pre-container (6b) which has already been processed or converted into a container (7), where it will be picked up by a mechanical means such as a robot arm or gripper, or dropped onto a conveyor belt located underneath the machine.

Also, both the pre-container (6a) or/and the pre-container (6b), can be opened from the upper or/and lower transverse part (unsealed or completely unsealed and cut) or closed (fully sealed and cut), just as the cut can be made in between by at least one closing transverse sealing line of the pre-container (6a) or on the contrary, on top of or underneath the sealing line(s) made; and,
- if one of the sealing and/or cutting jaws (1b) does not cut, or does not cut completely across, only one finished container (7) is obtained:
   an individual pre-container (6b) which has already been processed or converted into a container (7), where it will be picked up by a mechanical means such as a robot arm or gripper, or dropped onto a conveyor belt located underneath the machine, and
   an individual pre-container (6a) which has not yet been processed or converted into a container (7), by remaining attached at the top to the wrapper, sheet, film, tube or semi-tube, which in the upper transverse area, before the jaw is opened (1b), can be either open (if it is not sealed or cut) or closed (if it is sealed at least in part, and not cut at least completely), just as, later, once the two jaws are opened, as the wrapper, film, sheet, tube or semi-tube advances again, the pre-container (6a) will become the pre-container (6b) as it is placed in its place, and
- in the case that at least the two sealing and/or cutting jaws (1a; 1b) do not cut, or do not cut the entire transverse area, no finished container (7) would be obtained, so it would be the same as the previous case described above but with the difference that, in addition, as the wrapper, film, sheet, tube or semi-tube advances, the pre-container (6b) will be left hanging and will now become a pre-container (6c): after the pre-container it was previously (6a) it has now become a pre-container (6b).

A sixth stage, in which, the wrapper, film, sheet, tube or semi-tube, once all the sealing and/or cutting jaws (1a; 1b) are activated or are in the open position:
preferably, the one between the jaws (1b) and the rest of the wrapper, advances, since pre-container (6a) and pre-container (6b) have previously been cut by the sealing and/or cutting jaws (1b), in the entire upper transverse section, and
stops, preferably, when it passes or travels a distance {to be counted from the jaw (1a)} which is at least equal to or greater than the length of the height of the sum of the pre-container (6a) plus the pre-container (6b), which are desired or intended to be obtained; so that, on top (or on one side) or underneath (or on the other side) of the sealing and/or cutting jaw (1a) and that the jaw is closed: a pre-container (6b) and a pre-container (6a) are defined.

## Claims

1. **Procedure** to transform at least one flexible container (7) or / and pre container (6a; 6b) manufactured from a film type wrapper in rolls, sheets, in a tube or semi-tube; which may be or are in the process of being made or are already made in any one of the vertical (or, for example, horizontal or in diagonal) filling and sealing packaging machines, that make or manufacture flexible containers from a film type wrapper in rolls, sheets, in a tube or semi-tube, as for example, those of the type English fold, stable bottom, pillow type, or mixed such as those combined half pillow type and half English type, or half stable bottom and half pillow type; the aforesaid container (7) or pre-container (6a; 6b) being provided with:
at least two sides that delimit an inner seal, which in turn, are delimited by an outer perimeter contour defined by at least one perimeter side, and/or
at least one sealing line or / and fold that partially closes the container, where the procedure can have:
- means of mobility or advancement of the wrapper such as film, sheet, tube or semi-tube.
- optionally, a mode of folding or forming such as that of at least one forming tube (5) and/or forming neck, so as to make the wrapper in the form of a tube or semi-tube, sheet or film: wrap or conform to the shape of the forming tube, preferably square or cylindrical, and in the case of a sheet or film it will also acquire a tubular shape,
- a way or means of forming or defining at least one three-dimensional shape or three-dimensional geometric shape, such as that of:
- a previous pre-container (6a), located on the sealing and/or cutting jaw (1a) and which, preferably, is open on at least one side, as well as can hold {preferably, just before the sealing and / or cutting jaw is open} at least one fluid and optionally or in addition may hold, for example, at least one solid or solids or / and (granules or / and powders), and / or
- a following pre-container (6b), located under the sealing and/or cutting jaw, which is preferably completely closed, as well as can hold at least one fluid and optionally or in addition may hold, for example, at least one solid or solids or / and (granules or / and powders), and / or
- a container (7), which is already made or finished therefore it is already an individualized container, just as it can be open on at least one side or, on the contrary, be completely closed.
- optionally or additionally, a sealing means to longitudinally seal the ends of the film or sheet that surrounds the forming tube (5), in order to permanently maintain the film or sheet in the tubular form, and
- optionally or additionally, means of generating and sealing at least one vertical edge flap (16) by means of a method of folding and sealing at least one edge generated at the perimeter contour of the wrapper (film, sheet, tube or semi-tube) surrounding the forming tube (5); so that at least part of one of the two sides or areas that are contiguous to one edge, is to be folded and sealed on / in at least part of another side or area that is contiguous to the same edge, so that the pre-container (6a; 6b) or container (7) will contain in at least one vertical edge of at least one side: a vertical edge flap (16) sealed by at least one longitudinal seam line, and
- optionally, means of generating at least one flap, for example of this type [English fold (vertical / curved / inclined / diagonal) (11a) or / and flat English fold (11b)] or / and [stable bottom (vertical / curved / inclined / diagonal) (12a) or / and flat stable bottom (12b)]; where the procedure is **characterized because it comprises** the following stages:

A first stage, in which the wrapper (for example, that of the tube or semi-tube type or that of a sheet or film), through a mode such as the mechanical one (or / and that of at least one robot):
will acquire a three-dimensional shape delimited by a volume, preferably, by wrapping at least one forming tube (5), preferably quadrangular or cylindrical, and this has been moved, by means of an advance mode, until it has passed through the last forming tube (5) or jaws (1a; 1b) or last jaw: a distance at least equal to or greater than the length of at least one container (7) or [at least one previous pre-container (6a) or / and at least a following pre-container (6b)] which or which ones are intended or want to be made.

Also, this wrapper, film or sheet that surrounds the forming tube (5), is preferably, open on at least one side, as well as in an optimized manner it is held unfolded, stretched, tensioned or hanging, by means of a clamping, gripping, holding or, for example, a blocking mode, as can be the neck of the forming tube (5) and/or at least a roller or clamp.

A second stage, in which this wrapper, sheet or film, by means of a mechanical mode such as that of at least one sealing and / or cutting jaw (1a; 1b) and that this is operated in the closed position:
at least once more, it is also clamped, gripped, held or put together preferably, transversely at least two of its sides by at least one other point, part or area away from the other point, part or area from which it is already or is clamped, gripped, held or put together described in stage 1; in such a way that, in an optimized way, they are defined or obtained in a three-dimensional form delimited by a volume (being or not an independent unit):
at least one previous pre-container (6a), preferably, open on the upper transverse side and closed at the bottom, as well as the rest of the contour of the pre-container, which is located or is between jaw (1a) and clamp (1b) or the forming tube (5) or / and
at least one following pre-container (6b), preferably closed both at the top and at the bottom, as well as the rest of the perimeter contour of the pre-container (6b), which is located or is under the jaw (1a).

A third stage, of pressing at least once in the direction of the inner seal of the pre-container (6a) or / and pre-container (6b), using at least one thrust mode such as that of at least one impact body or plus impact body (2, 3) or, for example, by means of a directed air blowing mode:
on / against / with / between / in at least one part (or, for example, the intermediate area, partial area, complete area, apex area or area of two or more sides or lateral sides) of at least one side or lateral side of the pre-container (6a) and/or container (6b), preferably of an area that is contiguous or close to the sealing and/or cutting jaw (1a):
will be folded on at least another part of the same or another face (or side) of the pre-container (6a; 6b), preferably, the lower (or supporting) side or the upper part of both the previous pre-container (6a) and the following pre-container (6b): obtaining,
at least one supporting or additional side, or, a wider supporting or additional side, that is more consistent and flat: in at least the area, side or face of the pre-container (6a; 6b) that has been pushed, preferably, by at least one impact mode or plus impact body (2, 3), as well as modifying the shape of the pre-container (6a; 6b) delimited by a volume, acquiring an initial shape or the intended geometric shape that is to be made / obtained, and
at least one of the flaps, such as:
the plus flap (11a; 11b; 12a; 12b; 13a; 13b; 13c; 13d; 13e) or / and the triangular body flap (14).

A fourth stage, optional, in which at least one of the flaps generated, by means of a consolidation or fixation mode, is to be kept permanently stable in the intended flap shape, preferably choosing from any one of the following options:
seal, by means of a heat source mode (4) such as that of a resistor (4a) or by ultrasound, at least once at least part of at least one side by at least one sealing line (for example, rectilinear or not rectilinear, curved, semicircular, discontinuous) of at least one flap such as: at least one plus flap (11a; 11b; 12a; 12b, 13a; 13b; 13c; 13d; 13e) or / and triangular body flap (14); obtaining,
at least one sealing line that permanently keeps at least one of the support sides or additional sides stable, as well as keep any of the generated flaps or plus flaps permanently stable; or / and,
adhere or join, by means of a mode such as the contact glue or clamp.

2-. **Procedure** to transform a flexible pre-container or container of any one of the vertical (or, for example, horizontal or in diagonal) machines, according to Claim 1, **characterized in that** it comprises a fifth and a sixth further stage; they are the following:
A fifth stage, wherein at least any one of the flaps (11a/b; 12a/b; 13a/b/c/d/e; 14) generated in the third stage of the previous claim,
will be manipulated, for example, by means of a transformation mode of the 3D compack system, preferably by generating a strip flap (15b) or by folding the flap (14; 11; 12; 13; 15b) onto itself: at least once for at least part of at least one side towards at least one direction on at least another part of itself: obtaining, a flap folded at least once on itself (15a; 11c).

An optional sixth stage, in which any one of the folded flaps described in the previous fifth stage, by means of a consolidation mode, will be kept permanently stable in the form of an intended folded flap, preferably choosing from one of the two options described in the fourth stage of Claim 1.

3-. **Procedure** for transforming a flexible pre-container or container from any of the vertical (or, for example, horizontal or inclined) machines, according to Claims 1 and 2, **characterized by** the fact that it is introduced, by means of a filling mode such as that of a dosing hopper or multi-head weigher:
the content of the product to be packaged inside the pre-container, preferably in the previous pre-container (6a), as well as once the third, fourth, fifth or sixth stage is completed.

4-. **Procedure** to transform a flexible pre-container or container of any one of the vertical (or, for example, horizontal or in diagonal) machines, according to the claims of any one of the Claims from 1 to 3, **characterized in that** the third and fourth stages will be given or will act on a container (7) which has already been produced and is individual, which is or is still in the vertical (horizontal or, for example, in diagonal) machine for filling and sealing flexible containers. The container (7), will preferably be immobilized and clamped or/ and supported on the jaw (1), in such a way that, when operated, at least one plus device and/or at least one 3D compack device will be generated and manipulated by at least one of the flaps described in the third and fourth stages of the first claim.

This container (7) will be previously elaborated or manufactured, either by any one of the machines of the invention, or by any of the vertical (or, for example, horizontal or in diagonal) filling and sealing machines on the market, that manufacture or produce flexible containers, which are going to be introduced, by means of a way of transporting or / and directing them, such as for example a robot claw or by means of a conveyor belt.

5-. **Procedure** to transform a flexible pre-container or container of any one of the vertical (or, for example, horizontal or in diagonal) machines, according to the claims of any one of the Claims from 1 to 4, **characterized by** the action of a second sealing and/or cutting jaw (1b), preferably of the same or similar characteristics in terms of components, shape, size and function as the other sealing and/or cutting jaw (1a). This jaw (1b) will be arranged or fixed on top of and/or underneath (or even beside) the other sealing and/or cutting jaw (1a) and at a distance at least equal to or greater than the length or height of the intended container (7) or pre-container (6a; 6b) to be obtained or processed: meant to be
closed and open, and optionally
seal or / and cut or, only cut, in any of the second, third and fourth stage, so when activated, it will grip, hold, clamp or block (preferably, transversely and horizontally): at least part of at least two sides {of the sheet, film or tube or semi-tube wrapper} that delimit a volume, obtaining:
- at least two sides or faces of the sheet, film or wrap joined in parallel and flat, without forming any inward fold or hem that causes parts of the film, sheet or wrap to overlap on top of each other, such as in the case of the English fold (or the English fold of the stable bottom type containers) in which three or four layers of film overlap at both ends, left and right, this circumstance means that, afterwards, the sealing requires seaming at a higher temperature, and these layers will stick and solidify with each other, making it difficult or impossible to open the container optimally (7) because of this sealing line used to close the container (7), and
- a pre-container (6a) or container (7) closed on at least one side, as well as this area or part of the wrapper, film or sheet that has been joined or closed:
preferably, at least once, at least part of at least one side is to be carried out by at least one horizontal and transverse seam or sealing line, as it is done in pillow-type containers.

Optionally or additionally, this second jaw (1b) can also have, or have fixed, at least one device from any of the flap generation and handling systems, such as:
at least one 3D compack system, preferably, folding and sealing the triangular body flap (14) at least once onto itself (15a), or, seal and cut the triangular body flap (14) into a strip flap shape (15b), or/and
at least one plus system of the invention, for example, using plus impact bodies (2; 3) to generate and seal plus flaps (11a; 11b; 12a; 12b; 13a/b/c/d/e) or/and
at least one system to generate at least one English fold (10a; 10b) or stable bottom flap (10c;10d), by means of at least one impact body (18a; 18b), or/and
at least one clamping jaw (23), fixed to the sealing and/or cutting jaws (1a; 1b) of the machine, in order to clamp, or hold, the container (7) or pre-container (6a; 6b), preferably, from the front and rear sides, as well as to apply pressure to the fluid contained inside towards the top of the container or pre-container, causing it to inflate so as to further facilitate the following generation of the optimum flap without overlapping folds.

6-. **Procedure** to transform a flexible pre-container or container of any one of the vertical (or, for example, horizontal or in diagonal) machines, according to the claims of any one of the Claims from 1 to 5, **characterized by the fact that** at the end of the fourth stage and that at least one manufacturing cycle has been previously completed, a fifth stage will take place, in which once the sealing and/or cutting jaw (1a) and jaw (1b) have been opened, if the latter were operated in the closed position:
the wrapper, film, sheet, tube, semi-tube or pre-container (6a) will:
preferably advance until the pre-container (6a) passes through or travels a distance that is at least equal to or greater than the length of the height size of the intended container (7) or pre-container (6b) to be obtained or processed. Also, the pre-container (6a) will now be the pre-container (6b) as it is positioned in its place, as well as the pre-container (6b), will preferably be an individual container (7), having been at least cut on two sides (top and bottom) thus completing a production cycle. Next,
the sealing and/or cutting jaw (1a) [optionally also the clamp (1b)] is closed, the top and the bottom (or one side or the other) of the jaw being defined (1a): a previous pre-container (6a) and / or a following pre-container (6b).

From here on, the third, fourth, fifth and sixth stages will take place again.

7-. **Procedure** to transform a flexible pre-container or container of any one of the vertical (or, for example, horizontal or in diagonal) machines, according to the claims of any one of the Claims from 1 to 6, **characterized in that** at least one of the two sets of sealing or sealing and / or cutting jaws (1a, 1b), in any one of the second, third, fourth or fifth stages:
it will seal, at least once on at least one side by at least one sealing line, by means of a heat source mode such as that of a resistor or by ultrasound: at least part of the [previous pre-container (6a) or / and following pre-container (6b)] or / and container (7) (preferably, transversely and horizontally), and / or,
it will cut, at least once, by means of a cutting device such as a blade, at least part of the [pre-container (6a) or / and pre-container (6b)] or / and container (7), preferably, transversely and horizontally.

The method preferably involves choosing from any one of the following options: cutting, cutting and sealing, sealing, sealing and cutting or neither cutting nor sealing.

Also, once the jaw is closed (1b) and depending on whether it is sealed and/or cut or just cut, the following container (7) or pre-container (6a) options can be obtained:
- a totally closed container (7), where both the clamp (1b) and the jaw (1a) seal at least once on at least one side by at least one sealing and cutting line or just a cutting line at least once through an intermediate transverse sealing area, so that two sealing lines are obtained: the one on the top will belong to the rest of the wrapper, film or sheet which will be the next pre-container (6a) and, the sealing that is at the bottom belongs to the pre-container (6a) or, also, it can already belong to a finished container (7) if the sealing and/or cutting jaw (1a), which is also holding this same pre-container (6a): also seals and cuts or just cuts, transversely and in its entirety, this pre-container (6a).
- a container (7) which is open on at least one side, in the event that at least the clamp (1b) or / and the jaw (1a): cut the entire cross-section in an area where no sealing has been made previously or subsequently, so the pre-container (6a) is open on at least one side.
- a totally closed pre-container (6a), in the event that the two jaws (1a; 1b) are closed.
- a totally closed pre-container (6a), in the event that the two jaws (1a; 1b) are closed and that the sealing has been made, both by the jaw (1a) and by the clamp (1b), of the entire cross section on top and under the pre-container (6a).
- a pre-container (6a) which is open on at least one side, in the event that at least the clamp (1b) or / and the jaw (1a): cut the entire cross-section in an area where no sealing has been made previously or subsequently, so the pre-container (6a) is open on at least one side.

8-. **Procedure** to transform a flexible pre-container or container of any one of the vertical (or, for example, horizontal or in diagonal) machines, according to the claims of any one of the Claims from 1 to 7, **characterized in that** the two support segments of the sealing and / or cutting jaws (1a; 1b) or the clamp (1a; 1b), all of itself, when closed or when remaining in friction: make up
a flat and wide surface, so as to optimally set or install, any one of the plus devices, such as for example the plus impact bodies (2; 3), or the devices of the 3D compack system, preferably those intended to fold and seal any of the flaps (10; 11; 12; 13; 14; 15b) at least part of at least one side in at least one direction in/on at least one other part of itself, such as:
- at least one thrust body such as that of a wire, preferably folded in the form of a fork, in which it is attached to the rod of the mini electric swing motor, which is fixed to the jaw (1a; 1b), in such a way that when operated it will turn and at the same time it will also turn the flap that is right on top or under the fork body, as well as this fork when it is not operated: it can be placed, so as not to protrude, in a slot, hole or groove provided on the top and/or bottom and left and/or right side of the jaw (1a; 1b), or
- at least one hole or slot enabled on the (preferably flat) side on top or under the jaw (1a; 1b), intended for inserting a cutting blade fixed in the impact body (2; 3) in order to generate, for example the strip flap (15b) or triangular flap, or
- at least one heat source as a resistor fixed on the surface (or inside behind an enabled hole or slot) on the side on top or under the jaw (1a; 1b): intended to seal the flaps (14; 15b) or the folded flap (10; 11; 12; 15a; 15c) which, by means of the impact body (2; 3), will insert the flap into the hole or slot by folding and sealing it.

9-. **Procedure** to transform a flexible pre-container or container of any one of the vertical (or, for example, horizontal or in diagonal) machines, according to the claims of any one of the Claims from 1 to 8, **characterized by** at least one set of sealing and/or cutting jaws (1a; 1b), preferably, rectilinear and arranged horizontally, as well as at least one of the two jaws of at least one set of sealing and/or cutting jaws (1a, 1b) is movable.

10-. **Procedure** to transform a flexible pre-container or container of any one of the vertical (or, for example, horizontal or in diagonal) machines, according to the claims of any one of the Claims from 1 to 9, **characterized by** simultaneously closing (preferably, at the third stage of Claim 1) the sealing and/or cutting jaws (1a, 1b), at least one impact body (18a) as a triangular-shaped plate arranged horizontally, and/or, at least one impact body (18b) as a quadrangular-shaped plate arranged vertically: which, by means of a mechanical mode such as that of a linear drive (9), when activated:
it will be moved to the inside of the lateral side of the pre-container (6a; 6b), preferably, in the longitudinal middle area of the lateral side, making the pre-container wrap, film, sheet, tube or semi-tube fold and insert in at least:
two folds (or a single well-defined fold, if it impacts on a longitudinal side of the side face) that are parallel where at least part of four parts of the film or sheet are superimposed, these are arranged horizontally, in the case of impacting the English-fold impact body (17) and, vertically, in the case of impacting the quadrangular English-fold impact body (18).

The impact bodies (17; 18) are preferably operated at the same time, on the one hand,
the impact body (18a) on the left and on the right side, arranged right on top of the sealing and / or cutting jaws (1a; 1b) and, on the other side, will be operated simultaneously
the impact body (18a) on the left and right side, arranged right under the sealing and / or cutting jaws (1a; 1b): obtaining,
by means of the impact body (18a), an English fold flap (10a) or a stable bottom flap (10c) and,
by means of the impact body (18b), a flat English fold flap (10b) or a flat stable bottom flap (10d).

11-. **Procedure** to transform a flexible pre-container or container of any one of the vertical (or, for example, horizontal or in diagonal) machines, according to the claims of any one of the Claims from 1 to 10, **characterized by** the fact that it comprises a step prior to the stage of generating at least one plus flap in the previous pre-container (6a), in which an immobilizer-stretcher rammer body (19), arranged under or in the lower part or /and inside of the forming tube (5): when activated it will
flatten, block or immobilize the face inside the support face or the face that makes the basis of the previous pre-container (6a), between the rammer (19) (located on top) and the surface of the face or top of the sealing and/or cutting jaws (1a; 1b), and it will widen the pre-container (6a), preferably the bottom part or from the middle down.

The procedure comprises the following steps:
A first step, in which the wrapper, that wraps the forming tube (5), advances until it exceeds the sealing and/or cutting jaws (1a; 1b); then, it is closed generating a pre-container (6a) or / and a pre-container (6b); as well as, when the sealing jaw (1a; 1b) closes, simultaneously and optionally, it will generate the English fold flap (10a), the flat English fold flap (10b), the stable bottom flap (10c) or the flat stable bottom flap (10d).

A second step, in which the impact body is operated by means of a rammer (19), preferably, until it travels a distance so as to flatten or block the face inside the supporting face or base face, without making contact with the supporting face or base face, in such a way that it will
widen the pre-container (6a) from the bottom or / and from the middle down (or there about), so that it can also widen the sides or lateral faces of the bottom of the pre-container (6a): intended to
facilitate the following generation, optimally, of any of the flaps, as for example: the triangular body flap (14), manipulated flap (15a, 15b, 15c) or plus flap (11a; 11b; 12a; 12b; 13a; 13b; 13c; 13d; 13e).

Optionally, the rammer body (19) may also be mechanically hinged in such a way that it can be turned upwards or to one side, preferably until it is positioned vertically, subsequently facilitating the filling of the contents to be packed inside the pre-container (6a) because it takes up less space in width.

A third step, in which at least one plus impact body (2, 3) is operated in order to generate the flaps at the top and/or bottom of the pre-container (6a; 6b) of the sealing and/or cutting jaws (1a; 1b): obtaining
at least one of the single ones such as: the plus flap (11, 12, 13), the triangular body flap (14) or the manipulated triangular body flap (15a; 15b; 15c).

A fourth step, in which, once at least one flap has been generated, the rammer impact body (19) returns to the initial standing position or, alternatively, to an intermediate position.

12-. **Procedure** to transform a flexible pre-container or container of any one of the vertical (or, for example, horizontal or in diagonal) machines, according to the claims of any one of the Claims from 1 to 11, **characterized by** the fact that it comprises a step prior to the stage of generating at least one of any of the flaps [plus flap (11; 12; 13), triangular body flap (14) or manipulated triangular body flap (15a; 15a; 15b)], in which there is a second expandable and retractable forming tube (5b) arranged at the bottom inside or as an extension of the forming tube (5a) and which, by means of a mechanical method such as that of at least one linear drive or linear cylinder, to which the forming tube (5b) is attached to its rod: when operated it will
flatten, block or immobilize the face inside the support face or the face that makes the basis of the previous pre-container (6a), between the rammer (19) (located on top) and the surface of the face or top of the sealing and/or cutting jaws (1a; 1b), and it will widen the pre-container (6a), preferably the bottom part or from the middle down.

The procedure is the same as that for the immobilizer-stretcher rammer (19) described in four steps in Claim 11.

13-. **Procedure** to transform a flexible pre-container or container of any one of the vertical (or, for example, horizontal or in diagonal) machines, according to the claims of any one of the Claims from 1 to 12, **characterized by** comprising a pressing platform (22a) or pressing drawer (22b), arranged vertically under the following pre-container (6b), these are fixed to the rod of at least one linear drive or cylinder (9) arranged vertically and this in turn is preferably to be fixed to the rod of another linear drive or cylinder (or rotary drive) arranged horizontally, in such a way that: when the pre-container (6b) is gripped or blocked by the clamp (1a), the pressing platform or drawer (which is located right underneath since, previously, the linear cylinder (9) in a horizontal plane, has been operated) is lifted upwards by the linear cylinder in a vertical plane, and presses and moves the pre-container (6b) upwards, causing it to flatten against the underside of the sealing and / or cutting jaw (1a). Then, once the pre-container (6b) from the top (or from the middle or 3/4 up) has been widened three-dimensionally into a rectangular cubic or prismatic shape and a flat face has been generated in the upper part of the pre-container, and the side faces are arranged at right angles to the flat top face: it activates
at least one impact body (2, 3) to generate at least one of the triangular body flaps (14), plus flaps (11; 12; 13) or manipulated triangular body flaps (15a; 15b; 15c). Once the flap(s) has (have) been generated, the cylinder in a vertical plane returns to the starting point, and the linear cylinder (9) then returns to the starting point, thus freeing the area underneath the pre-container (6b).

Optionally, the platform (22a) or pressing drawer (22b) can be fitted with a clamping, gripping or blocking system, such as a clamping jaw (22c), to stabilize and secure the container, preferably at a specific location or concentric point, and preferably by means of a method of exerting pressure such as two cylinders in parallel facing each other in the opposite direction, they will press at least one fluid contained within the container (7) or pre-container (6a, 6b), to thus facilitate the optimal generation of the flaps both in form and also by the fact that no overlapping folds are formed which will make sealing difficult.

14-. **Procedure** to transform a flexible pre-container or container of any one of the vertical (or, for example, horizontal or in diagonal) machines, according to the claims of any one of the Claims from 1 to 13, **characterized by** the fact that it comprises a conical flap removal system (21), located near and to the left and right of the top of the pre-container (6b; 6a), by which a flap will be generated in a quasi-cone shape in which there are no over-folds, so it will later facilitate the optimal generation (without folds and linear) of any one of the plus flaps (11; 12) or the triangular body flap (14). The procedure will take place once the sealing and/or cutting jaws (1a; 1b) has closed and is holding, gripping or blocking the top cross section of the pre-container (6b; 6a) or, similarly, the transverse sealing flap (17) generated, which is located just between the two support segments of the sealing and / or cutting jaws set (1a; 1b).

The container (7) or pre-container (6b; 6b), in turn, previously, may have generated (optional) an English fold type flap (10). The procedure comprises the following two steps:
A first step, in which the conical flap remover (21) that is fixed to a pneumatic or electric rotary drive, located in front of the previous pre-container (6b) or container is operated at least once, making a turn between 45 and 90 degrees (approximately) towards at least one of the sides (to the left and / or to the right), whereby at least one impact body, preferably in the form of a shovel (21a) or, for example, of a rectangular plate, fixed to the axis of the turning drive, located on the lateral side of the following pre-container (6b) or container contrary to the direction of the movement of the conical flap remover (21):
will push the following pre-container (6b; 6a) or container (7) causing it to flip or move to the right and upwards, causing one half (approximately) of the top of the following pre-container (6b; 6a) or container (7), to be crushed against the bottom surface of the sealing and/or cutting jaws (1a; 1b): generating,
a conical flap in the area of the apex or of a quarter of the top half of the side opposite of the flattened area of the following pre-container (6b; 6a) or container (7).

A second step, in which the procedure is the same as that described in the third and fourth stages of Claim 1 and in the fifth and sixth stage of Claim 2, but with the difference that, preferably, object of this Claim 14, at least the acting impact body (2) that is located close to the generated conical flap, will be triggered so that at least part of this conical flap will be generated in/on:
any of the flaps such as the plus flap (11, 12), triangular body flap (14) or manipulated triangular body flap.

Also, as another option, it will also be possible to generate these conical flaps by means of the sealing and/or cutting jaw (1a) [or successive jaws which may have been installed on the machine one after the other] which, by means of a mechanical method such as that of at least one linear drive located in front of at least the left and/or right side of the jaw (1a), in such a way that the head of the rod of this drive or linear cylinder is fixed in parallel:
to the side or side face of the sealing and/or cutting jaw (1a), where this linear cylinder (9) will preferably move or stop in two different ways depending on the intended container model (7) to be produced:
- if only one conical flap is to be generated at the top of the pre-container (6b), the linear cylinder rod (9) will travel two distances in two stops or positions:
- a first starting position where the cylinder (9) is in a stop or start position, and the jaw (1a) is located right under the forming tube (5) and, a second position, in which the rod advances forward so that the jaw (1a) will also advance forward, at least a distance until the conical flap is generated on the side face opposite to that of the top of the pre-container (6b) of the opposite side to the direction of the linear cylinder rod path (9) and,
- in the event that two conical flaps are to be generated at the top of the pre-container (6b), the linear cylinder rod (9) will move three distances in three stops: a first intermediate position, in which the cylinder (9) is in the stop or start position, and the jaw (1a) is located right under the forming tube (5) and, a second position, being the same as the one described in the previous case and, a third position, in which the rod will move a distance backwards so that the jaw (1a) will also move backwards at least one distance until it generates the other conical flap on the side opposite the other, where the rod has stopped at a position prior to the intermediate position, moving at least one distance until a conical flap is generated on the opposite lateral side of the top of the pre-container (6b) from the opposite side to the direction the linear cylinder rod (9) moves, so that the sealing and/or cutting jaw (1a) have stopped at a point or position behind the intermediate position.

It should also be added that more than one sealing and cutting jaw (1) can be cascaded one after the other on the same machine, so that once the wrapper, film, sheet, tube or semi-tube passes at least any number of jaw (1), and, by means of a dosing device, are filled with the contents to be packaged inside each pre-container (6) the jaw (1) are closed one after the other for which you have to start from the jaw (1) from the bottom up.

15-. **Procedure** to transform a flexible pre-container or container of any one of the vertical (or, for example, horizontal or in diagonal) machines, according to the claims of any one of the Claims from 1 to 14, **characterized by** comprising, before the flaps are generated, a system mode to insufflate at least one fluid (preferably air or / and gas) inside the previous pre-container (6a) or container (7), through a mechanical way such as a compressor and of at least one nozzle or / and pneumatic tube, in such a way that it will produce,
on the one hand, the widening and inflation of the pre-container (6a), preferably the area and contiguous sides where any of the flaps are generated (10; 11; 12; 13; 14; 15) and,

On the other hand, it will make the pre-container (6a) acquire a more defined three-dimensional geometrical shape of the container (7) or pre-container (6a) intended to be obtained.

This system, will preferably be located inside the wrapper and attached to the forming tube (5), as well as, optionally, at least one air blow tube can be directed (e.g. with at least one air tube articulated so that it can be flexed) by positioning it just inside the wrapper of the pre-container or previous pre-container (6a) in the position and/or at the height (or approximately) where the flaps are generated: intended to
enable any of the flaps (preferably triangular body flaps or English fold flaps) to be generated or formed subsequently in the previous pre-container (6a) in the optimum size and shape, because the wrapper, film, tube or semi-tube will be stretched and widened so that they do not form on folds or wrinkles.

16-. **Procedure** to transform a flexible pre-container or container of any one of the vertical (or, for example, horizontal or in diagonal) machines, according to the claims of any one of the Claims from 1 to 15, according to Claim 1, **characterized by** the fact that it comprises prior to the generation of at least one flap (triangular body flap (14); manipulated triangular body flap (15a; 15b; 15c); plus flap (11a; 11b; 12a; 12b; 13a; 13b; 13c; 13d; 13e), a suction cup system or suction cups (or also a robot claw or mechanical arm) to stretch and widen the pre-container's wrapper, pre-container (6a, 6b) or container (7) along (forward and backward) or / and across (to the sides) of the area, near area or area higher from where at least one flap is generated, by means of a suction or non-suction suction mode.

These are to be fixed on the outside of the wrapper to at least one element or part of the packaging machine, as well as, optionally, at least one suction cup may be fixed, for example, to the rod of a linear cylinder (9) or rotary drive (8) in order to approach the wrapper; in such a way that an effect will be produced in the widening or shaping area of the pre-container (6a, 6b) or container (7) to be obtained.

17-. **Procedure** to transform a flexible pre-container or container of any one of the vertical (or, for example, horizontal or in diagonal) machines, according to the claims of any one of the Claims from 1 to 16, characterized because it comprises, before at least one flap is generated, [triangular body flap (14); manipulated triangular body flap (15); plus flap (11, 12, 13)], at least one system of rods or frame as a tensioner (they may be extendable), which are fixed to the inner face of the forming tube (5), remaining inside the wrapper and of the pre-container or previous pre-container (6a), in such a way that it will widen the pre-container, previous pre-container (6a) or container (7) to facilitate the generation of the flap without folds and wider: obtaining
a container (7), pre-container or previous pre-container (6a) with a more three-dimensional shape.

18-. **Procedure** for transforming a flexible pre-container or container of any of the machines (e.g. vertical, horizontal or in diagonal), according to the claims of any one of the Claims from 1 to 17, **characterized in that** it comprises manipulating (15) at least one triangular body flap (14), generating a triangular body flap folded on itself (15a) and also a strip flap (15b; 15c). It includes the following steps:

A first step, in which at least one triangular body flap (14) is generated by at least one impact body or plus impact body (2), and

A second step, by means of a heat source such as a resistor, preferably fixed to the contact segment of the impact body or plus impact body (2), so that once the flap has been generated, simultaneously or just afterwards,
it will be sealed, at least once by at least one sealing line on at least part of one side, to keep the flap permanently stable, as well as
triangular body flap (14) before being folded (15a), optionally, it will be sealed, preferably, in the area of intersection of the flap and the rest of the pre-container/ container, or, in the area where subsequently the flap will be folded on itself (15a); and,
in the case of the triangular body flap (14), prior to generating a strip flap (15b) or strip flap (15c) folded on itself, two triangular segments will be sealed and subsequently cut on at least one side (preferably, of the same size and parallel) to the left and right of the longitudinal sealing line (27) that passes through the middle or through the middle of the flap (14) once it has been generated [this longitudinal sealing line is the same as the transverse sealing or sealing line {or also transverse flap closing container (17)} made in the upper and / or lower part of the pre-container or container (7) when this is to close it tightly]: obtaining,
a narrow strip or strip flap (15b), located in the longitudinal middle (or contiguous area of the flap (14), just as there is or contains it longitudinally in this longitudinal half, and on the outside face: the transverse flap (17) or the transverse sealing line for container closing (27).

19-. **Procedure** to transform a flexible pre-container or container of any one of the vertical (or, for example, horizontal or in diagonal) machines, according to the claims of any one of the Claims from 1 to 18, characterized because it includes manipulating any of the flaps (10, 11, 12, 13, 14), preferably, the triangular body flap (14), choosing in a random and combined and / or repetitive way from among at least one or more of any of the following options:
- seal at least once part of at least one face of the triangular body flap or plus flap.
- fold or bend the triangular body flap or plus flap over itself and seal at least part of at least one side of them;
- fold or bend the triangular body flap or plus flap over itself and seal at least part of at least part of it, and also cut at least part of the remaining triangular body flap or plus flap;
- seal at least part of at least one side of the triangular body flap or plus flap, fold it over itself and seal at least part of it;
- seal at least part of at least one side of the triangular body flap or plus flap, fold it or bend it over itself and seal at least part of at least one side of it and also cut at least part of the rest of the resulting triangular body flap or plus flap;
- seal at least part of at least one side of the triangular body flap or plus flap, and cut at least part of it once;
- seal at least part of at least one side of the triangular body flap or plus flap, and cut at least part of it off, fold it or bend it and seal at least part of it, or also join the rest of the resulting flap or plus flap: to the rest of the container by means of a way to adhere it, such as contact glue, a staple or a strip of tape;
- fold the triangular body flap or plus flap;
- fold the triangular body flap or plus flap and attach it to the rest of the container by means of a way to adhere it, such as contact glue, a staple or a strip of tape; and
- seal at least part of at least one side of the triangular body flap or plus flap, fold it and optionally, attach it to the rest of the container at least by means of a way to adhere it, such as contact glue, a staple or a strip of tape.

20-. **Procedure** to transform a flexible pre-container or container of any one of the vertical (or, for example, horizontal or in diagonal) machines, according to the claims of any one of the Claims from 1 to 19, **characterized by** the fact that it involves generating, by means of a plus 3D device, at least one **English fold plus flap** (11a), as well as carrying out the sealing of at least part of at least one side towards at least one direction of at least one plus English fold sealing line (25a) in the English fold plus flap (13), by means of a heat source such as that of a resistance (4).

21-. **Procedure** to transform a flexible pre-container or container of any one of the vertical (or, for example, horizontal or in diagonal) machines, according to the claims of any one of the Claims from 1 to 20, **characterized by** the fact that it involves generating, by means of a plus 3D device, at least one **flat English fold plus flap** (11b), as well as carrying out the sealing of at least part of at least one side towards at least one direction of at least one plus sealing line (25b) in the flat English fold plus flap (11b), by means of a heat source such as that of a resistance (4).

22-. **Procedure** to transform a flexible pre-container or container of any one of the vertical (or, for example, horizontal or in diagonal) machines, according to the claims of any one of the Claims from 1 to 21, **characterized by** the fact that it involves generating, by means of a plus 3D device, at least one **stable bottom plus flap** (12a), as well as carrying out the sealing of at least part of at least one side towards at least one direction of at least one stable bottom plus sealing line (25c) in the stable bottom plus flap (12a), by means of a heat source such as that of a resistance (4).

23-. **Procedure** to transform a flexible pre-container or container of any one of the vertical (or, for example, horizontal or in diagonal) machines, according to the claims of any one of the Claims from 1 to 22, **characterized by** the fact that it involves generating, at least one **flat stable bottom plus flap** (12b), as well as carrying out, by means of a heat source such as that of a resistance (4), the sealing of at least part of at least one side towards at least one direction of at least one flat stable bottom plus flap sealing line (12b), by means of a heat source such as that of a resistance (4).

24-. **Procedure** to transform a flexible pre-container or container of any one of the vertical (or, for example, horizontal or in diagonal) machines, according to the claims of any one of the Claims from 1 to 23, **characterized by** the fact that it involves generating, at least one **English fold plus flap** (11a) and carry out, by means of a heat source such as that of a resistance (4), the sealing of
at least part of at least one side towards at least one direction of at least one English fold plus sealing line (25a) in the English fold plus flap (11a); as well as
at least part of at least **one triangular body flap (14) is folded or bent over itself (15b)** at least once over at least another part of it, and also the sealing of
at least part of at least one side towards at least one direction of at least one sealing line of the triangular body flap folded over itself (15b), by means of a heat source such as that of a resistance (4).

25-. **Procedure** to transform a flexible pre-container or container of any one of the vertical (or, for example, horizontal or in diagonal) machines, according to the claims of any one of the Claims from 1 to 24, **characterized by** the fact that it involves generating, at least one **flat English fold plus flap** (11b) and carry out, by means of a heat source such as that of a resistance (4), the sealing of:
at least part of at least one side towards at least one direction of at least one plus sealing line (25b) in the flat English fold plus flap (11b); as well as
at least part of at least **one triangular body flap (14) is folded or bent over itself (15b)** at least once over at least another part of it, and also the sealing of
at least part of at least one side towards at least one direction of at least one sealing line of the triangular body flap folded over itself (15b), by means of a heat source such as that of a resistance (4).

26-. **Procedure** to transform a flexible pre-container or container of any one of the vertical (or, for example, horizontal or in diagonal) machines, according to the claims of any one of the Claims from 1 to 25, **characterized by** the fact that it involves generating, at least one **stable bottom plus flap** (12a) and carry out, by means of a heat source such as that of a resistance (4), the sealing of:
at least part of at least one side towards at least one direction of at least one stable bottom plus sealing line (25c) in the stable bottom plus flap (12a); as well as
at least part of at least **one triangular body flap (14) is folded or bent over itself (15b)** at least once over at least another part of it, and also the sealing of
at least part of at least one side towards at least one direction of at least one sealing line of the triangular body folded flap, by means of a heat source (4).

27-. **Procedure** to transform a flexible pre-container or container of any one of the vertical (or, for example, horizontal or in diagonal) machines, according to the claims of any one of the Claims from 1 to 26, **characterized by** the fact that it involves generating, at least one **flat stable bottom plus flap** (12b) and, by means of a heat source such as that of a resistance (4), seal
at least part of at least one side towards at least one direction of at least one flat stable bottom plus sealing line (25d) of the plus flap (12b); as well as generating
at least part of at least **one triangular body flap (14) is folded or bent over itself (15b)** at least once over at least another part of it and, by means of a heat source such as that of a resistance (4), seal
at least part of at least one side towards at least one direction of at least one sealing line in at least one triangular body flap folded or bent over itself (15).

28-. **Procedure** to transform a flexible pre-container or container of any one of the vertical (or, for example, horizontal or in diagonal) machines, according to the claims of any one of the Claims from 1 to 27, **characterized by** the fact that it involves generating, at least one **English fold plus flap** (11a) and, by means of a heat source such as that of a resistance (4), seal
at least part of at least one side towards at least one direction of at least one plus sealing line (25a) in the English fold plus flap (11a); as well as also generating
at least one **English fold burr plus flap** (13a) or / and at least one **burr flap** (13e) made in the middle of the side or edge, and seal at least part of at least one side towards at least one direction by at least one sealing line of the English fold burr plus flap (13a) and the burr flap (13e), by means of a heat source such as that of a resistance (4).

29-. **Procedure** to transform a flexible pre-container or container of any one of the (for example, vertical, horizontal or in diagonal) machines, according to the claims of any one of the Claims from 1 to 28, **characterized by** the generation of:
at least one **flat English fold plus flap** (11b), and also at least part of at least one side towards at least one direction of at least one flat English fold plus sealing line (25b) in the flat English fold plus flap (11b), by means of a heat source such as that of a resistance (4), and
at least one **English fold burr plus flap** (13a) or at least part of at least one **burr flap** (13e) made in the middle of the side or edge, and sea I at least part of at least one side towards at least one direction of at least one plus sealing line (26a) of the English fold burr plus flap (13a), by means of a heat source such as that of a resistance (4).

30-. **Procedure** to transform a flexible pre-container or container of any one of the (for example, vertical, horizontal or in diagonal) machines, according to the claims of any one of the Claims from 1 to 29, **characterized by** the generation of:
at least one **stable bottom plus flap** (12a) and also seal at least part of at least one side towards at least one direction of at least one stable bottom plus sealing line (25c) of the stable bottom plus flap (12a) generated, by means of a heat source such as that of a resistance (4), and
at least one **stable bottom burr plus flap** (13c) or at least part of at least one **burr flap** (13e) made in the middle of the side or edge, and seal at least part of at least one side towards at least one direction of at least one plus sealing line (26c) of the stable bottom burr plus flap (16b) or burr flap (16c), by means of a heat source such as that of a resistance (4).

31-. **Procedure** to transform a flexible pre-container or container of any one of the vertical (or, for example, horizontal or in diagonal) machines, according to the claims of any one of the Claims from 1 to 30, **characterized by** additionally generating at least one burr plus flap (13a; 13b; 13c; 13d) or / and burr flap (13e), as well as sealing, by means of a heat source such as that of a resistance (4), at least part of at least one side of at least one sealing line of the generated flap.

32-. **Procedure** to transform a flexible pre-container or container of any one of the vertical (or, for example, horizontal or in diagonal) machines, according to the claims of any one of the Claims from 1 to 31, characterized because it involves a process in which the sealing and / or cutting jaw (1a), by means of a mechanical drive mode such as that of an actuator, preferably linear:
will advance up and down, in such a way that when the actuator is operated, it will make the pre-container (6a), which is gripped or blocked by the jaw (1a) by the transverse sealing line (17) at the bottom of the pre-container (6a),
move upwards colliding with the underside of this jaw (1b), making the pre-container (6a) widen or inflate (preferably by 3/4 or halfway up from the top) in order to later facilitate, the optimal generation of the plus flaps or flaps, due to the fact that the top part of the pre-container, where the flaps are generated, is of a cubic or parallelepiped shape, as well as defining straighter and right-angled edges.

33-. **Procedure** to transform or develop a flexible pre-container or container of any one of the vertical (or, for example, horizontal or in diagonal) machines, according to the claims of any one of the Claims from 1 to 33, characterized because it involves a system with which to produce at least two containers (7) in each manufacturing cycle of the machine, by means of at least a second sealing and/or cutting jaw (1b), as well as also generating any one of the containers, preferably a mixed container, in which one half (preferably transverse-horizontal from the middle upwards) is of the pillow type and the other half is of the English fold or stable bottom type.

The following describes the procedure from the production or processing of the second cycle onwards, which includes the following stages:
A first stage, in which the wrapper, film, sheet, tube or semi-tube, as it is described in the first stage of Claim 1, is positioned or has passed through {the last sealing and/or cutting jaw or, similarly, the sealing and/or cutting jaw (1a) and/or jaw (1b)}: at least a distance equal to or greater than the length of the container (7) or pre-container (6a) and/or pre-container (6b) which is or are intended or want to be obtained.

A second stage, in which the procedure is the same as in the second stage of Claim 1, as well as in Claims 5 and 10. The following steps are given:
A first step, in which the sealing and/or cutting jaw (1a) is closed, defining a pre-container (6a) open at the top and a pre-container (6b) closed at the top and at the bottom, as well as, depending on the intended container (7), chose from the following options:
- in the case of a mixed container, the sealing and/or cutting jaw (1a) will close at the same time the impact bodies (18a; 18b) are operated, simultaneously generating two English fold type flaps both at the bottom of the pre-container (6a) and at the top of the pre-container (6b) and,
- in the case of an entirely pillow container, the jaw (1a) will be closed in the manner of the pillow-type container (where the impact bodies are not operated (18a; 18b)), thus generating a transverse pillow seal flap (17a), in which the two sides of the film, sheet, tube or semi-tube that are brought together when the jaw is closed (1a): do not form overlapping layers or folds as in the case of an English fold or a stable bottom and,
- in the case of a fully (or partially) English fold or stable bottom container, the impact bodies (18a; 18b) arranged on the left and right and on top and under the jaw (1a) are operated simultaneously, [as another option, at least one (18a; 18b) is operated], thus generating a left and/or right of the bottom part of the pre-container (6a) and a left and right of the top part of the pre-container (6b): a flap (or at least one flap) of the English fold and/or a stable bottom type.

A second step, in which, preferably, the pre-container (6a) is filled with the product to be packaged and, then, the sealing and/or cutting jaw (1b) is closed defining a pre-container (6a) also closed on top and at the bottom and which, depending on the finished container (7) to be obtained, will be chosen from the following options:
- in the case of a mixed container, the jaw (1b) will close in the manner of the pillow-type container, in which the impact bodies (18a; 18b) are not operated, thus generating a transverse sealing flap (17a) of the pillow-type, in which the two sides of the film, sheet, tube or semi-tube that meet when the jaw is closed (1b): will not form overlapping layers or folds as is the case with English fold or stable bottom type containers and,
- in the case of an entirely pillow type container, the jaw (1b) will be closed in the manner of the pillow type container described above and,
- in the case of a wholly (or partly) English fold or stable bottom type container, the sealing and/or cutting jaw (1b) is closed in the manner of the English fold or stable bottom type of container, whereby simultaneously with the clamp (1b) being closed, at least one impact body (18a; 18b) arranged to the left and right and under the clamp (1b) will preferably be operated [as another option, at least one is operated (18a; 18b)], thus generating on the left and/or right of the top of the prepackage (6b): one or two English fold and/or stable bottom type flaps.

Also, once the jaws (1a; 1b) are in the closed position, and depending on the container (7) to be obtained, a choice will be made from any of the options or processes described in Claim 5, the option being the most optimised when sealing and cutting in between the transverse sealing line carried out on the whole of the transverse part on top of the pre-container (6a) or, alternatively,
it is cut or sealed and cut in front or behind, preferably, at least one transverse sealing line carried out in all of the transverse area on top of the pre-container (6a), when it is desired to obtain a container that is open on at least one side, which will subsequently be used as a container to be filled and sealed, later, in a production plant.

Another option can also be given where this jaw (1b) does not cut or seal, or only seals.

A third stage, in which the procedure is the same as that for the third stage of Claim 1 and the fourth stage of Claim 2.

A fourth stage, where the procedure is the same as that given in Claim 3.

A fifth stage, where the sealing and/or cutting jaws (1a; 1b) are open, obtaining:
- in the case where the two jaws (1a; 1b) cut through the top and the bottom of the entire transverse pre-package (6a; 6b), two finished packages (7) in each manufacturing cycle:
an individual pre-container (6a) which has already been processed or converted into a container (7), where it is picked up, for example, by a mechanical means such as a robot arm or gripper, or by falling onto a conveyor belt underneath the machine, and
an individual pre-container (6b) already processed or transformed into a container (7), where it is picked up by a mechanical means such as a robot arm or gripper or by falling onto a conveyor belt underneath the machine.

Also, both the pre-container (6a) and/or the pre-container (6b), from the upper and/or lower transverse part can be open (unsealed or not completely unsealed and cut) or closed (completely sealed and cut), as well as the cut can be made in between by at least one transverse sealing line of the pre-container (6a) or, conversely, over or under the sealing line(s) made; and,
- if one of the sealing and/or cutting jaw (1b) does not cut, or does not cut completely across, only one finished container (7) is obtained:
an individual pre-container (6b) which has already been processed or converted into a container (7 ), where it is picked up by a mechanical means such as a robot arm or gripper or by falling onto a conveyor belt underneath the machine, and
an individual pre-container (6a) not finished making or transforming into a container (7) as it is still attached at the top to the wrapper, sheet, film, tube or semi-tube, which, in the upper transverse area, prior to opening the jaw (1b), may either be open (if not sealed or cut) or closed (if sealed at least in part, and not cut at least completely), and, later, once the two jaws are open, as the wrap, film, sheet, tube or semi-tube advance again, the pre-container (6a) will become the pre-container (6b) when it is put in place, and
- in the case that at least the two sealing and/or cutting jaws (1a; 1b) do not cut, or do not cut the whole cross section, no finished container (7) will be obtained, so it would be the same as the previous case described but with the difference that, in addition, as the wrapper, film, sheet, tube or semi-tube advances, the pre-container (6b) will be hanging and will now become a pre-container (6c): following the pre-container it was previously (6a) and which has now become a pre-container (6b).

A sixth stage, in which, the wrapper, film, sheet, tube or semi-tube, once all the sealing and/or cutting jaws (1a; 1b) are acting or are in the open position:
preferably the one between the jaw (1b) and the rest of the wrapper, advances, since previously the pre-container (6a) and pre-container (6b) have been cut in the transverse part of the upper part, by means of the sealing and/or cutting jaw (1b), and
stops, preferably, when a distance at least equal to or greater than the length of the height of the sum of the pre-container (6a) and plus the pre-container (6b), which are desired or intended to be obtained, is passed or travelled {from the jaw (1a)} over (or from the side) or under (or from the other side) the sealing and/or cutting jaw (1a) and that the latter is closed: a pre-container (6b) and a pre-container (6a) are defined.

From this sixth stage onwards, the processing or manufacturing cycle is completed or finished, preferably with two containers (7) in one go in each cycle, as well as the possibility of manufacturing a mixed container such as, for example, a cushion type container, half transverse to the top and an English fold or stable bottom type container, half transverse to the bottom.

Next, Stages 1 through 6 described in this Claim 34 will be given again.

34-. **Procedure** to transform or develop a flexible pre-container or container of any one of the vertical (or, for example, horizontal or in diagonal) machines, according to the claims of any one of the Claims from 1 to 32, characterized because it involves generating a mixed container, in which two different three-dimensional geometric shapes belonging to at least part of two different types of containers or pre-packages are combined or merged into a single container or pre-container.

35-. **Procedure** to transform a flexible pre-container or container of any one of the vertical (or, for example, horizontal or in diagonal) machines, according to the claims of any one of the Claims from 1 to 34, **characterized by** the fact that it involves generating, at least one pre-cut line (24), preferably of about 7 microns (or approximately), by means of a laser sealing system mode:
in at least part of a layer of the wrapper, and in at least part of at least one side of a pre-container (6) or container (7), these being, preferably, of a three-dimensional cubic, rectangular prismatic or parallelepipedic shape.

The pre-cut line (24) has the function or serves as an opening line through which the pre-container or container will be open, by pulling it and tearing it through the pre-cut line (24): obtaining, an opening through which to serve or access the packaged content inside.
- It is mostly optimized when a single pre-cut line (24) is delineated in the form of three continuous sides forming two angles (e.g. U-shaped), or also a four-sided square, preferably forming these 90° angles (or approximately).

36-. Packaging **machine** (e.g. vertical, horizontal or inclined) that produces flexible containers or flexible pre-containers, for example, English fold, stable bottom, pillow, half English fold and half pillow or half stable bottom and half pillow, which hold or contain at least one fluid and, optionally or additionally, may hold, for example, at least one solid or / and (granules or / and powders), and they may also be an empty container that does not have any content to be packed inside, where the machine includes:
- optionally, means of clamping, advancing and guiding the sheet, film on a roll or wrapper, as for example by at least a roller, and
- optionally, means for folding or shaping the sheet, film (in rolls) or wrapper (tube or semi-tube) such as, for example, a forming neck or / and a forming tube (5), preferably quadrangular or cylindrical, and
- at least one jaw device or set of two parallel jaws with which the pre-containers or flexible containers are sealed and cut, preferably, transversely and horizontally (from the top and the bottom), and
- optionally or in addition, a means of sealing at least part of at least one longitudinal sealing line: intended to longitudinally seal the two longitudinal ends that are formed when the film or sheet wrap the forming tube (5), which overlap and seal so that the film or sheet permanently takes on the shape of a tube.
- optionally or in addition, a means of generating at least one rectangular fold or flap on at least one generated edge when the film, sheet, tube or semi-tube is wrapped around or fitted to the forming tube (5), preferably, in a quadrangular way because this tube forms 4 vertical edges at right angles, and
at least one sealing means (preferably longitudinal and continuous) of the flap or fold (or of at least part of at least one side by at least one sealing line of the fold) generated on at least one vertical edge (16), by means of at least part of at least one side by at least one sealing line, preferably continuous; and
- a way or means of forming or defining at least one three-dimensional shape or three-dimensional geometric form enclosed within a volume, such as that of:
- a previous pre-container (6a), located on top of the sealing and/or cutting jaw (1) that is, preferably, open on at least one side, and may also contain {preferably, just before the sealing and/or cutting jaw is open} at least one fluid and optionally or additionally, may hold, for example, at least one solid or solids or / and (granules or / and powders), and / or
- a following pre-container (6b), located under the sealing and/or cutting jaw (1) that is, preferably, completely closed, and may also contain at least one fluid and optionally or additionally, may hold, for example, at least one solid or solids or / and (granules or / and powders), and / or
- a container (7), which is already manufactured or finished and it is therefore already an individualized container, as it can be either open on at least one side or, on the contrary, be completely closed.
- optionally, mean of generating at least one flap or fold, for example of the [(vertical / curved / diagonal) English fold (11a) or / and flat English fold (11b) type] or / and [(vertical / curved / sloping / diagonal) stable bottom (12a) or / and flat stable bottom (12b) type], and
- optionally and in addition, a manual, mechanical or automated filling method of the content to be packed inside the pre-container or container, such as that of a hopper, dosing machine or multi-head weigher;
where the machine is **characterized because it comprises**
- at least **one impact mode** such as that of an impact body (preferably, a plus impact body (2, 3), driven by a mean such as the mechanical, e.g. attached to the rod of a linear cylinder (9) or rotary drive or swivel cylinder (8)) and/or a fluid jet, [preferably directed air]: intended to
hit or push at least part of at least one face or side of the pre-container (6a, 6b) or container (7) [e.g. the area that is contiguous to an edge, preferably, horizontally, or the area of a corner): on / over at least part of at least one face or side of at least another face or side (preferably, the area that is contiguous to the same edge horizontally, or the area of a corner] of the same pre-container (6a; 6b) or container (7):
generating at least one flap from any one of these, for example:
[(at least one plus flap (11, 12, 13) or / and at least one burr plus flap (13a, 13b; 13c; 13d; 13e)] or / and [(at least one triangular body flap (14) or / and at least one triangular body flap handled as or strip flap (15b; (15c) or / and the triangular body flap folded over itself (15a) in which it is folded at least part of at least one side in at least one direction in at least another part of at least one side of the same flap (14; 15b).

The impact body, plus impact body (2, 3) or the jet system of a fluid, in an optimal way will be arranged close to the faces or sides of the pre-container (6a, 6b) or container (7), preferably, to (left or / and right) or / and (front or / and back) of the top or / and bottom of the pre-container or container, as well as these are to be fixed to at least one element or part of the machine, preferably, the sealing and/or cutting jaw, (1) or impact body (17; (18), or also to a support or robot claw or mechanical arm.
- at least one **sealing system**, by means of a heat source such as a resistor (4), laser or ultrasound, is to be arranged ideally in the proximity of the faces or sides of the pre-container (6a, 6b) or container (7) [e.g. to (left or / and right) or / and (front or / and back) top or / and bottom], as it is to be attached, preferably, to the plus impact body striking segment (2, 3) or to the sealing and/or cutting jaw (1) [preferably, to the flat surface on top of and/or under], (robot claw or mechanical arm), support or other element or part of the machine: intended to
seal at least once by at least one sealing line at least part of at least one side of at least one flap, e.g: English fold plus flap (11a), flat English fold plus flap (11b), flat stable bottom plus flap (12a), flat stable bottom plus flap (12b), English fold burr plus flap (13a), stable bottom burr plus flap (13b), triangular body flap (14), triangular body flap manipulated as the triangular body flap (14) or strip flap (15b) folded at least once onto itself (15a; 15c); obtaining:
at least one sealing line that will permanently hold at least one of the support sides or additional sides, as well as permanently holding the English fold plus flap (11a), flat English fold plus flap (11b), stable bottom plus flap (12a), flat stable bottom plus flap (12b), English fold burr plus flap (13a), flat English fold burr plus flap (13b), stable bottom burr plus flap (13c), flat stable bottom burr plus flap (13d), triangular body flap (14), manipulated triangular body flap (15) as for example the triangular body flap folded on itself (15a), strip flap (15b) or strip flap folded on itself (15c).

37-. A packaging **machine** that produces pre-containers and flexible containers, according to Claim 36, characterized because it includes at least one clamping device (19), located under the forming tube (5) and/or inside the forming tube (5); it is composed of:
an impact body by means of a rammer mode (19), preferably flat and of the same or similar shape as the supporting side that acts as a base, preferably, square or circular, as well as being defined, preferably, by a perimeter structure (preferably square or circular), in the form of a frame, which is hollow in the centre, so as to allow the product to fall {first through the forming tube (5) and secondly through the hole} to the bottom of the previous pre-container (6a), and
a drive mode by mechanical means such as for example a linear drive (9) or linear cylinder (9), pneumatic or electric, on whose rod the rammer is fixed (19).

This device (19) is intended to widen, flatten, lock or immobilize:
the support side or base side of the previous pre-container (19), blocking the wrapper that remains between the clamp (19) and the (preferably flat) surface of the top part of the sealing and/or cutting jaw (1) which is located under the wrapper, as well as widening the side faces that are contiguous to the base side, for example by making them, in an optimized manner, vertical (90 degrees on the plane or base side) or approximately. The rammer (19) may be smaller or narrower on at least one of its sides (or the perimeter outline), so as to free up space in the area between the outer perimeter of the previous pre-container support side (6a) and the lateral sides or outer perimeter of the rammer (19), in such a way that it will enable the impact bodies or plus impact bodies (2, 3), when operated, may fold at least part of the underside of the wrapper of at least one face or lateral side on at least part of at least the outermost side or area of the wrapper of the supporting face, thereby generating at least one plus flap (11; 12; 16).

38-. A packaging **machine** that produces pre-containers and flexible containers, according to Claim 36, characterized because it includes at least one retractable and extendable forming tube device, located under the forming tube (5) or / and inside and under the whole of the forming tube (5). This device includes the following elements or parts:
at least two sections of forming tube (preferably, quadrangular or cylindrical) one under the other, the bottom section being that which is movable, by means of a drive mode or mechanical mode such as: that of at least one linear cylinder (9), preferably fixed to the inside face of the stationary forming tube (5a) and located on top of the movable forming tube (5b).

The mobile forming tube (5b) will extend or move downwards: a distance or length that is less than the gap between the lowest part of the mobile forming tube itself (5b) and of the radius of action of the impact bodies (2, 3) of the invention generated by the flaps or plus flaps; in such a way that it will allow these impact bodies (2, 3) to make all the distance to contact or bump with the sealing and/or cutting jaw (1), without the mobile forming tube (5b) blocking their passage: intended to
on the one hand, the wrapper of the previous pre-container is widened, preferably, from the bottom or from the middle down and,
on the other hand, the wrapper, film, sheet, tube or semi-tube is kept tight or stretched to prevent folds from forming, facilitating optimum folding of the wrapper when the plus flap (11, 12, 13), triangular body flap (14) or manipulated triangular body flap (15a; 15b; 15c) are generated, as well as simultaneously or prior to the plus impact body (2, 3) being operated to generate the flaps: the wrapper, film, sheet, tube or semi-tube can optionally, more optimally, also be moved or advanced (depending on the size of the generated flap or plus flap) downwards so as to facilitate or enable the generation of flaps such as the plus flap (11); 12; 13), triangular body flap (14) or manipulated triangular body flap (15a; 15b; 15c), whereby the wrapper, film, sheet, semi-tube or tube lies on the sealing and/or cutting jaws (1a; 1b), and is in the closed position:
it will move a minimum distance so that there is a gap allowing at least part of at least one side of the pre-container (6a, 6b) or container (7) to be folded towards at least another part of at least one other side of the pre-container or container (7), preferably the lower part of the side face that is contiguous to the base support face of the pre-container (6a; 6b) or container (7) or the upper face(s) of the pre-container (6a; 6b) or container (7).

39-. A packaging **machine** that produces pre-containers and flexible containers, according to Claim 36, characterized because it includes at least one pressing platform (22a) device or / and pressing drawer (22b), which are located under the pre-container (6b; 6a) that are under the sealing and/or cutting jaws (1a; 1b) of the vertical packaging machine.

This device comprises or consists of an (adjustable) support base, preferably with a drawer unit, where the part from the middle down (or approximately) of the pre-container (6b; 6a) is to be inserted inside the pressing drawer unit, or will be supported on the pressing platform: intended to press the following pre-container upwards (6b) {or also the previous pre-container (6a), since the jaw (1a), by means of an drive (8; 9), will also be pushed upwards and will therefore have the same function as the drawer unit (22a) or platform (22b)} that is located between the pressing platform and the surface under the sealing and/or cutting jaws (1a; 1b): obtaining
a pre-container (6b; 6a) that has been crushed and widened three-dimensionally into a cubic or prismatic rectangular shape by the area or middle part or three fifths up (or approximately), as well as a flat side generated on the top part which is making contact with the underside of the sealing and/or cutting jaw (1), will therefore facilitate the subsequent generation of any of the flaps (plus flaps (11, 12, 13), triangular body flaps (14) or manipulated triangular body flaps (15a; 15b; 15c)] of the pre-container (6b; 6a) in this area.

The pressing platform or drawer unit will be moved upwards, by means of a mechanical mode, such as a linear cylinder drive that will be arranged vertically, so it will be fixed to the rod of this cylinder (9), preferably from below, just as this linear cylinder (9) is preferably to be fixed to the rod of another linear cylinder (9) but horizontally (and this in turn is to be fixed to a support mode or element or part of the machine): intended to
push the previous pre-container upwards until it is crushed against the underside of the sealing and / or cutting jaw (1).

This device will be located just underneath the following pre-container (6b) which is located underneath the sealing and/or cutting jaw (1) of the packaging machine.

The pressing platform is a support base, preferably with a drawer unit and it is adjustable, as well as the part from the middle down (or approximately) of the pre-container (6b; 6a): it is to be inserted inside the pressing drawer unit (22b), where it can also be supported or not.

Also, optionally, the pressing platform (22a) or the pressing drawer unit (22b) can also have, or be attached to, at least one single-jaw system (22c) or a set of jaws (two-jaws) for clamping (22c), fixed to at least one side or face, preferably on the front or back side, as well as being a drawer unit (20b) it will be fixed to the side faces of the same and, if it is a platform, it will be fixed to the up/down side and on the external contour of the same.

The clamping jaw (22c) is intended, on the one hand, to hold the pre-container (6b) [or container (7)], preferably, at a point or concentric location where the container will be held in a vertical position without tilting, and, on the other hand, optionally, to exert pressure from at least one side of the pre-container (6b) or container (7) towards the inside of the container so that the fluid contained within it: exerts pressure, in turn, on the rest of the pre-container (6b) or container (7), preferably the part (or quarter) of the pre-container (6b) or container (7) that is higher or from the halfway up.

40-. A packaging **machine** that produces pre-containers and flexible containers, according to Claim 36, characterized because it includes at least one conical flap Removal Device (21), in which these are driven by a mechanical means, such as a rotary drive (8) or at least a linear cylinder (9), in such a way that it will make the pre-container (6; 6b; 6a) or container (7) move or be pushed from the bottom or from the middle down, so as to make the pre-container turn to one side and/or to the other. The route can be, for example, horizontal, diagonal or semi-circular, so that the pre-container will move in the same way (or to the left or / and to the right, or diagonally to the left or right, or, by means of a turning cylinder, swing pendulously to the left or / and right) thus generating at least one of the conical flaps.

The device comprises at least one thrust body with a conical flap remover (21), being able to choose, for example, from among the following different options:
at least one device in which there is a body in the form of a shovel or plate, fixed to the head of the rod, arranged in parallel, vertically, regarding the underside of at least one side of the pre-container (6) or container (7), or
at least one drawer device (22b), in which the bottom or the part from the middle down of the pre-container (6) or container (7) is introduced so that, by means of at least one rotor and/or linear drive, the pre-container or container can be moved by pushing it to one side and/or the other or,
at least one claw device of a robot or mechanical arm, in which it will trap or hold by pinching or folding at least part of the wrapper, sheet, film, tube or semi-tube from the bottom or from the middle down at least one of the side faces of the pre-container (6) or container (7), so that with only one claw it will be possible to move the pre-container or container back and forth to generate one or both conical flaps, or
at least one sealing and/or cutting jaw device (1; 1a; 1b) and at least one mechanical mode such as that of at least one rotary or linear drive that will cause the jaw (1), once it has been operated in the closed position and has gripped, held or trapped the lower part of the pre-package or container: to move to one side and/or the other.

These four devices are arranged {at the side of or / and in front of} at least one lateral side to (the left and / or the right) or / and in front of or / and behind the bottom or from the middle down the lateral side of the pre-container or container or / and, also, of the sealing and/or cutting jaw (1).

41-. A packaging **machine** that produces pre-containers or flexible containers, according to Claim 36, characterized because it includes before the flaps are generated,
at least one device, by means of a method of insufflating a fluid, to introduce it into the pre-container (6a) or container (7): intended to widen or inflate, preferably, the area where any of the types of flaps are generated, and to define a more three-dimensional or volumetric geometrical shape, so that the flaps will subsequently be generated optimally without folds or creases. This device will be preferably arranged (at least in part) and fixed inside the forming tube (5), and part of at least one part of the device may be extended and directed inside the pre-container (6a) in the area between the jaw (1a) and the forming tube (5).

42-. A packaging **machine** that produces pre-containers and flexible containers, according to Claim 36, characterized because it includes at least one a suction device that has:
at least one suction cup, at least one mechanical drive mode, such as a linear cylinder (9) or rotary drive (8), and optionally, at least one air suction system to support, direct or exert pressure on the wrapper; intended to
stretch and widen the pre-packaged (6) or packaged (7) wrapper, film, sheet, tube or semi-tube lengthwise (forward and backward) and/or widthwise (sideways) in the area, near or upwards of where at least one of the flaps is generated.

43-. A packaging **machine** that produces pre-containers and flexible containers, according to Claim 36, characterized because it includes at least one rod or frame device in the form of a tensioner (may be extendable), which are attached to the inner side of the forming tube (5), remaining inside the wrapper and the previous pre-container (6a): intended to widen and make the pre-container (6a) or container (7) take on a three-dimensional shape.

44-. A packaging **machine** that produces pre-containers and flexible containers, according to Claim 36, characterized because it includes at least one device for manipulating at least one of the generated flaps, such as the plus flap (11; 12; 13) or triangular body flap (14), preferably by means of any one of the devices of the 3D compack system, in which the choice is made randomly and in combination and/or repetitively from one or more of the following options:
[Not intended to be restrictive of the scope of protection]
- seal at least once by at least one sealing line of at least part of at least one side of the triangular body flap or plus flap.
- fold the flap (14; 15b) / plus flap at least once over itself and seal, after folding, at least part of at least one side by at least one sealing line [or, also, join the rest of the flap or plus flap: to the rest of the container by means of a way to adhere it, such as contact glue, staples or tape), and optionally cut at least part of the flap at the intersection of the sealing line and the following remainder of the flap or plus flap, at least once;
- It is the same as the previous option, but with the difference that, previously, at least part of at least one side of the triangular body flap or plus flap is also to be sealed at least once, preferably the area of intersection between the flap and the rest of the container.
- it is the same as the previous option, but with the difference that, after being sealed for the first time: the flap, in turn, at least part of it will be cut.
- fold (15b; 15c) the triangular body flap (14; 15b) or plus flap;
- fold the triangular body flap or plus flap and attach it to the rest of the container using a means of attachment such as contact glue, a staple or a tape;
- seal the triangular body flap or plus flap at least part of at least one side with at least one sealing line, fold it over at least once onto itself in at least one other part of it and optionally join the folded flap to the rest of the container at least once using a means of adhesion, e.g. contact glue, a staple or a strip of tape.

45-. A packaging **machine** that produces pre-containers or flexible containers, according to Claim 36 and 44, characterized because it includes at least one device for manipulating at least one of the generated flaps, such as the triangular body flap (14) or plus flap (10; 11; 12; 13), preferably by means of a way of folding the flap over itself or by generating a strip flap (15b), which can also subsequently be folded over itself.

The device can be fixed by means of a fixing mode to the plus impact body (2; 3) or, preferably, be fixed to the sealing and/or cutting jaw (1) or additional sealing and/or cutting jaw (15b), as well as comprising the following elements or parts:
- at least one **device intended to join**, by means of a folding or bending method, at least once on itself towards at least one direction of at least part of a flap (10; 11; 12; 13; 14; 15b) on at least another part of itself or of the same body flap, in which they may also be, for example superimposed in parallel or with some degree of rotation to one side or the other, as well as folded or bent over itself, for example, rectilinearly, obliquely or semi-circularly convex/concave, and
- at least **one system of consolidating** or permanently maintaining the generated flap as described in the machine Claim 36 stable: intended, for example, to
seal at least any one of the flaps generated or, also,
optionally seal at least any one of the generated flaps and/or seal any one of the flaps once it has been folded over itself.

46-. A packaging **machine** that produces pre-containers or flexible containers, according to Claim 36 and 45, **characterized by** having at least one device or a device of at least two contiguous devices, where the device consists of:
a body, such as one with at least one hook, fork, buckle, filament or hinge, attached to a rotary drive or swivel motor, in such a way that it will rotate or fold at least once to the flap, triangular body, English fold or stable bottom English fold. The rotary motor or rotary drive should preferably be fixed to the jaw (1).

47- A packaging **machine** that produces pre-containers or flexible containers, according to Claim 36, **characterized by** having in addition at least one pre-cutting device (24) [e.g. of about 7 microns or approximately] in at least one layer of the wrapper, made by means of a laser sealing system mode:
in at least part of at least one side of the pre-container (6) or container (7) and preferably by a (U)-shaped pre-cut line (24) or alternatively by a quadrangular line in which the sides form an angle of 90 degrees (or approximately); intended to:
delimit by a line or dotted line an area of at least one side of the container which serves as an opening lid through which the product can be taken or served from the inside of the container.

48- A packaging **machine** that produces pre-containers or flexible containers, according to Claim 36, **characterized by** additionally having at least a second set of sealing and/or cutting jaw (1b) on top and/or under the sealing and/or cutting jaws (1; 1a), in which the jaw (1b) is in the same way, devices elements, pieces and functions as the jaw (1a) but with the difference that they will act in the termination on top of the pre-container (6a; 6), as well as delimit a volume generating the three-dimensional geometric shape of the pre-container or container which is to be obtained: destined to,
on the one hand, to manufacture or process at least two containers (7) or pre-containers (6a; 6b) in each processing or manufacturing production cycle and,
on the other hand, to be able to make or produce at least two mixed containers (7) or pre-containers (6a; 6b), preferably those of a geometric shape from the half up of the pillow type and from the half down of the English fold or stable bottom type.

49-. A machine **device** (e.g. vertical, horizontal or inclined) that produces flexible containers or pre-containers, such as English fold, stable bottom, pillow, half English fold and half pillow or half stable bottom and half pillow, which holds or contains at least one fluid and, optionally or additionally, may hold, for example, at least one solid or / and (granulated or / and powdered), as well as may be an empty container that does not contain any contents to be packaged, where the machine understands:
- optionally, means of clamping, feeding and guiding the wrapper, sheet, film on a roll, tube or semi-tube such as at least one forming roller or forming tube neck, and
- optionally, means for folding or forming the sheet, film (on a roll) or wrapper (tube or semi-tube), such as a forming neck and/or forming tube (5), preferably square or cylindrical, and
- at least one jaw device or set of two parallel jaws with which the pre-containers or flexible containers are preferably sealed and cut transversely and horizontally (from the top and from the bottom), and
- optionally or additionally, a means of sealing at least part of at least one longitudinal sealing line: intended to seal longitudinally the two longitudinal ends that are formed when the film or sheet is wrapped around the forming tube (5), which overlap and seal so that the film or sheet permanently takes on the form of a tube.
- optionally or additionally, a means of generating at least one rectangular fold or flap on at least one generated edge when the film, sheet, tube or semi-tube is wrapped around or fitted to the forming tube (5), preferably in a rectangular shape because the forming tube forms 4 vertical edges at right angles, and
at least one means of sealing (preferably longitudinal and continuous) the flap or fold (or at least part of at least one side by at least one sealing line of the fold) generated in at least one vertical edge (16) by means of at least part of at least one side by at least one sealing line, preferably continuous; and
- a way or means of forming or defining at least a three-dimensional shape or three-dimensional geometrical form bounded by a volume, as can be that of:
- a previous pre-container (6a), located on top of the sealing and/or cutting jaw (1) and which is preferably open on at least one side, may contain {preferably, just before the sealing and/or cutting jaw opens} at least one fluid and optionally or additionally may contain, for example, at least one solid or solids and/or (granules or / and powders), and/or
- a following pre-container (6b), located under the sealing and/or cutting jaw which is preferably, completely closed, may contain at least one fluid and optionally or additionally may contain, for example, at least one solid or solids or / and (granules or / and powders), and / or
- a container (7), which is already processed or finished is therefore already an individual container, and can be either open on at least one side or, on the contrary, be completely closed.
- optionally, means of generating at least one flap or fold, for example (English fold (11a) or / and flat English fold (11b)) or / and (stable bottom (12a) or / and flat stable bottom (12b)), and
- optionally and additionally, a manual, mechanical or automated filling mode of the content to be packed inside the pre-container or container, such as that of a hopper, dosing machine or multi-head weigher; where the device is **characterized because it comprises:**
- at least **one impact mode** such as that of an impact body (preferably, a plus impact body (2, 3), driven by a mean such as the mechanical, e.g. attached to the rod of a linear cylinder (9) or rotary drive or swivel cylinder (8)) and/or a fluid jet, [preferably directed air]: intended to
hit or push at least part of at least one face or side of the pre-container (6a, 6b) or container (7) [e.g. the area that is contiguous to an edge, preferably, horizontally, or the area of a corner): on / over at least part of at least one face or side of at least another face or side (preferably, the area that is contiguous to the same edge horizontally, or the area of a corner] of the same pre-container (6a; 6b) or container (7):
generating at least one flap, for example: [(at least one plus flap (11a, 11b; 12a; 12b; 13a; 13b; 13c; 13d; 13e) or / and at least one triangular body flap (14) or / and at least one manipulated triangular body flap (15a; 15b; 15c), such as the strip flap (15b) or strip flap folded over itself (15c) or, also, the triangular body flap (14) folded at least once in one direction from at least part of at least one side over at least another part of at least one side of the same flap (15b).

The impact body, plus impact body (2, 3) or the jet system of a fluid, in an optimal way, will be arranged in proximity to the faces or sides of the pre-container (6a, 6b) or container (7), for example, [(to the left or / and right) or / and (front or / and back)] from the top or / and bottom, as well as being fixed, for example, to at least one element or part of the machine, preferably on the side or surface of the sealing and/or cutting jaws (1; 1a; 1b) or impact body (18a; 18b) or, also to a support, robot claw or mechanical arm.
- at least one **sealing system**, by means of a heat source such as a resistor (4), laser or ultrasound, which, more optimally, will be arranged in proximity to the faces or sides of the pre-container (6a, 6b) or container (7), for example, [( on the left or / and on the right) or / and (in front or / and behind)] from on top or / and underneath, and will be fixed, preferably, to the hitting segment of the plus impact body (2, 3) to at least one element or part of the machine, preferably, on the face or surface of the sealing and/or cutting jaws (1; 1a; 1b) or impact body (18a; 18b) or, alternatively, to a support or robot claw or mechanical arm: intended to
seal at least once by at least one sealing line at least part of at least one side of at least one flap, e.g: the English fold plus flap (11a), flat English fold plus flap (11b), stable bottom plus flap (12a), flat stable bottom plus flap (12b), English fold burr plus flap (13a), flat English fold burr plus flap (13b), stable bottom burr plus flap (13c), flat stable bottom burr plus flap (13d) burr plus flap (13e), triangular body flap (14) or manipulated triangular body flap, such as the strip flap (15b) or strip flap folded over itself (15c) or, also, the triangular body flap (14) folded at least once in a direction of at least part of at least one side over at least another part of the same flap (15b); obtaining:
at least one sealing line that will keep at least one of the support sides or additional sides permanently stable, and also will permanently keep the English fold plus flap (11a), flat English fold plus flap (11b), stable bottom plus flap (12a), flat stable bottom plus flap (12b), English fold burr plus flap (13a), flat English fold burr plus flap (13b), stable bottom burr plus flap (13c), flat stable bottom burr plus flap (13d) burr plus flap (13e), the triangular body flap (14) or the manipulated triangular body flap (15a; 15b; 15c) stable.

50-. **Device** in machines that manufacture flexible containers or / and flexible pre-containers, according to Claim 49, characterized because it has at least one immobilising clamping device (19), located under the forming tube (5) and/or inside and under all the forming tube (5). This device includes the same elements, parts, characteristics and functions as those described in the machine's Claim 37.

51-. **Device** in machines that manufacture flexible containers or / and flexible pre-containers, according to Claim 49, characterized because it has at least one retractable and extendable forming tube device, located under the forming tube (5) or / and inside and under the whole of the forming tube (5a). This device includes the same elements, parts, characteristics and functions as those described in the machine's Claim 38.

52-. **Device** in machines that manufacture flexible containers or / and flexible pre-containers, according to Claim 49, characterized because it has at least one platform or pressing drawer device (22b), which is located right under the pre-container (6b; 6a; 6) that is under the sealing and/or cutting jaw (1a) of the machine. This device includes the same elements, parts, characteristics and functions as those described in the machine's Claim 39.

53-. **Device** on packaging machines producing flexible containers and/or flexible pre-containers, according to Claim 49, characterized because it has at least one conical flap removal device (21). This device includes the same elements, parts, characteristics and functions as those described in the machine's Claim 40.

54-. **Device** on packaging machines producing flexible containers and/or flexible pre-containers, according to Claim 49, characterized because it comprises, before the flaps are generated, at least one device to insufflate at least one fluid into the pre-container (6a) producing the inflation of the same. This device includes the same elements, parts, characteristics and functions as those described in the machine's Claim 41.

55-. **Device** on packaging machines producing flexible containers and/or flexible pre-containers, according to Claim 49, characterized because it comprises, before the flaps are generated, at least one suction cup, at least one mechanical drive mode, such as that of a linear cylinder (9) or rotary drive (8), and optionally, at least one air suction system to support, direct or exert pressure on the wrapper, film, sheet, tube or semi-tube; intended to stretch and widen the wrapper, film, sheet, tube or semi-tube of the pre-container (6) or container (7). This device includes the same elements, parts, characteristics and functions as those described in the machine's Claim 42.

56.- Flexible **container**, characterized because it is obtainable through the procedure described in Claims 1 to 35 or by using the machine described in Claims 36 to 48 or the devices described in Claims 49 to 55.

57- Flexible **container** of the English fold type, in which there is neither a defined flat English fold flap on the left or on the right side nor on the bottom or on the top, as the container can be closed or open on at least one of the sides so that the product to be packaged can later be filled in the production lines, in accordance with Claim 56, **characterized because it has** two plus flaps [(an English fold plus flap (11a) on the left and one on the right) from the bottom or the top of the lateral side of the pre-container or container], as well as comprising on at least part of one side towards at least one direction:
at least one sealing line on each English fold plus flap (11a).
It has a rectangular prism or parallelepiped geometric body shape.

Optionally, on top and / or underneath from the front or / and behind the closed or open container, it also contains at least one English fold burr plus flap (13a; 13b) or / and burr plus flap (13e).

58.- Flexible English fold type **container**, in which there is neither a defined flat English fold flap horizontally to the left and to the right, nor on the bottom or on the top of the container, closed or open on at least one side (not tightly sealed), according to Claim 56, **characterized because it has** two plus flaps [(one English fold plus flap (11a) to the left and another to the right) from the bottom (or the top) side of the pre-container or container], as well as having on at least part of one side towards at least one direction: at least one sealing line on each English fold plus flap (11a); and
one English fold plus flap (11a) to the left or right of the top (or bottom) side of the pre-container or container, as well as at least part of at least one side of at least one sealing line on the English fold plus flap (11a).

It has a rectangular trapezoid shape and a conical dosing neck at the top.

Optionally, on top of and / or under the front or / and back of the closed or open container, it also contains at least one English fold burr plus flap (13a) or / and burr plus flap (13e).

59.- Flexible English fold type **container**, in which there is neither a defined flat English fold flap to the left and to the right, nor on the bottom or on the top of the container, closed or open on at least one side (not tightly sealed), according to Claim 56, **characterized because it has** two plus flaps [(one English fold plus flap (11a) to the left and another to the right from the bottom or the top of the lateral side side of the pre-container or container], as well as having on at least part of one side towards at least one direction: at least one sealing line on each English fold plus flap (11a); and
an English fold plus flap (11a) to the left and another to the right of the bottom or top side of the pre-container or container, as well as at least part of at least one side of at least one sealing line on each English fold plus flap (11a).

It has a rectangular prism or parallelepiped geometric body shape.

Optionally, on top of and / or under the front or / and back of the closed or open container, it also contains at least one English fold burr plus flap (13a) or / and burr plus flap (13e).

60.- Flexible English fold type **container**, in which there is neither a defined flat English fold flap to the left and to the right, nor on the bottom or on the top of the container, closed or open on at least one side (not tightly sealed), according to Claim 56, **characterized because it has** an English fold plus flap (11a) to the left or to the right on top or under the lateral side of the pre-container or container, as well as also having on at least part of one side: at least one sealing line on the English fold plus flap (11a).

It has a rectangular or parallelepiped prism geometric body shape but it is wider and more volumetric in 3D in the zone or area that is contiguous to the generated flap.

Optionally, on top of and / or under the front or / and back of the closed or open container, it also contains at least one English fold burr plus flap (13a) or / and burr plus flap (13e).

61.- Flexible English fold type **container**, in which there is neither a defined flat English fold flap to the left and to the right, nor on the bottom or on the top of the container, closed or open on at least one side (not tightly sealed), according to Claim 56, **characterized because it has** an English fold plus flap (11a) to the left and/ or to the right of the lower part or /and top part of the pre-container or container, as well as also having on at least part of one side: at least one sealing line on the English fold plus flap (11a): and
one English fold plus flap (11a) on the opposite side (left or right) of the top lateral side from where the English fold plus flap (11a) is generated on the bottom (or top) part of the pre-container or container, as well as at least part of at least one side of at least one sealing line on the English fold plus flap (11a).

It has a parallelepiped geometric body shape, where the two top sides are parallel and the two lateral sides are parallel but diagonally and, in addition, the volumetry of the container is inverted from the middle up in comparison to the middle down: in one it widens to the left and down and the other widens to the right and up, in which the wider or longer the flaps generated on the lateral sides the more it widens.

Optionally, on top of and / or under the front or / and back of the closed or open container, it also contains at least one English fold burr plus flap (13a) or / and burr plus flap (13e).

62.- Flexible English fold type **container**, in which at least one flat English fold flap is defined on both the left and right side of the top or bottom lateral side of the container or pre-container closed or open on at least one side, according to Claim 56, **characterized by the fact that it comprises** two plus flaps (two flat English fold plus flaps (11b), or, one English fold plus flap (11a) and one flat English fold plus flap (11b) on the left and right of the lateral side of the lower (or upper) part of the pre-container or container, and, there is also, on at least part of at least one side towards at least one direction: at least one sealing line on each flat English fold plus flap (11b) or plus flap (11a).

It has a rectangular prism or parallelepiped geometric body shape. Optionally, it can also contain [(at least one English fold burr plus flap (13a) or / and at least one flat English fold burr plus flap (13b) or / and (at least one burr plus flap (13e)]: on top and / or under the front and / or behind the closed or open container.

63.- Flexible English fold type **container**, in which there is at least one flat English fold flap defined on both the left and right side of the top or bottom lateral side of the container or pre-container closed or open on at least one side, according to Claim 56, **characterized by the fact that it comprises** two plus flaps (two flat English fold plus flaps (11b), or, one English fold plus flap (11a) and one flat English fold plus flap (11b) on the left and right of the lateral side of the lower (or upper) part of the pre-container or container, as well as having on at least part of at least one side: at least one sealing line in each flat English fold plus flap (11b) or English fold plus flap (11a); and
one English fold plus flap (11a) on the left or right side of the top (or bottom) lateral side of the container or pre-container, and also at least part of at least one side towards at least one direction of at least one sealing line in the English fold plus flap (11a).

It has a rectangular trapezoid geometric body shape with a cone-shaped dispensing neck at the top. Optionally, it can contain (at least one English fold burr plus flap (13a) or / and at least one English fold burr plus flap (13b) or / and at least one burr plus flap (13e): on top and / or under the front and / or behind the closed or open container.

64.- Flexible English fold type **container**, in which there is at least one flat English fold flap defined on both the left and right side of the top or bottom lateral side of the container or pre-container closed or open on at least one side, according to Claim 56, **characterized because it has** two plus flaps [two flat English fold plus flaps (11b), or, one English fold plus flap (11a) and one flat English fold plus flap (11b)] on the left and right of the lateral side of the lower (or upper) part of the pre-container or container, as well as having on at least part of at least one side: at least one sealing line in each flat English fold plus flap (11b) or English fold plus flap (11a); and
two plus flaps [two flat English fold plus flaps (11b), or, one English fold plus flap (11a) and one flat English fold plus flap (11b) on the left and right of the lateral side of the lower (or upper) part of the pre-container or container, and also, at least part of at least one side towards at least one direction of at least one sealing line in each English fold plus flap (11a). It has a cubic, rectangular or parallelepiped prism geometric body shape. Optionally, it can contain at least one English fold burr plus flap (13a) or / and at least one English fold burr plus flap (13b) or / and at least one burr plus flap (13e): on top and / or under the front and / or behind the closed or open container.

65.- Flexible English fold type **container**, in which there is at least one flat English fold flap defined on both the left and right side of the top or bottom lateral side of the container or pre-container closed or open on at least one side, according to Claim 56, **characterized because it has** one plus flap [one flat English fold plus flap (11b), or one English fold plus flap (11a) on the left or right of the top or bottom lateral side of the container or pre-container, and also has in at least part of at least one side towards at least one direction:
at least one sealing line in the flat English fold plus flap (11b) or in the English fold plus flap (11a).

It has a rectangular or parallelepiped prism geometric body shape but being wider and volumetric in 3D in the area or zone contiguous to the generated flap, where in addition up or / and down or / and left or / and right can be broader, wider or more square: depending on the size or width of the flaps generated on the side of the container.

Optionally, it can contain at least one English fold burr plus flap (13a) or / and at least one English fold burr plus flap (13b) or / and at least one burr plus flap (13e): on top and / or under the front and / or behind the closed or open container.

66.- Flexible English fold type **container**, in which there is at least one flat English fold flap defined on both the left and right side of the top or bottom lateral side of the container or pre-container closed or open on at least one side, according to Claim 56, **characterized because it has** one flat English fold plus flap (11b), or one English fold plus flap (11a) on the left or right of the bottom (or top) lateral side of the container or pre-container, and also has in at least part of at least one side towards at least one direction: at least one sealing line in the flat English fold plus flap (11b) or in the English fold plus flap (11a); and
one English fold plus flap (11a) to the opposite side (left or right) of the lateral side of the top (or bottom) from where the English fold plus flap (11a; 11b) of the pre-container or container is generated, and also at least part of at least one side towards at least one direction of at least one sealing line in the English fold plus flap (11a).

It has the same parallelepiped/rectangular prism geometric shape as Claim 67.

Optionally, it can also contain (at least one English fold burr plus flap (13a) or / and at least one English fold burr plus flap (13b) or / and at least one burr plus flap (13e): on top and / or under the front and / or behind the closed or open container.

67.- English type flexible **container**, in which there is at least one flat English fold flap on both the left and right side on top or under the lateral side of the container or pre-container closed or open on at least one side, and at least one vertical edge flap defined on the lateral side (16) [at least one fold and at least one partial or full perimeter sealing line on the left and/or right side of the container], according to Claim 56, **characterized because it has**
two plus flaps, [two flat stable bottom plus flaps (12b), or, one flat stable bottom plus flap (12b) and one stable bottom plus flap (12a)] on the left and right of the bottom (or top) part of the pre-container or container, and it also has in at least part of at least one side: at least one sealing line in each stable bottom plus flap (12a) or stable bottom plus flap (12b). It has a parallelepiped or rectangular prism geometric body shape. Optionally, it can also contain [(at least one stable bottom burr plus flap (13c or/and 13d) or / and at least one English fold plus flap (13a or/and 13b)) or at least one burr plus flap (13e)]: on top and / or under the front and / or behind part of the closed or open container.

68.- Stable bottom flexible **container**, in which there is at least one defined flat English fold flap on both the left and right side on top or under the lateral side of the container closed or open on at least one side, and, also defined is at least one lateral side vertical edge flap (16) [at least one fold and at least one partial or full perimeter sealing line on the left and/or right lateral side of the container], in each lateral side, according to Claim 56, **characterized because it has** two plus flaps, [two flat stable bottom plus flaps (12d), or, one flat stable bottom plus flap (12d) and one stable bottom plus flap (12c)] on the left and right of the bottom (or top) part of the pre-container or container, and it also has in at least part of at least one side towards at least one direction: at least one sealing line in each flat stable bottom plus flap (12d) or stable bottom plus flap (12c); and
one English fold plus flap (11a) to the left or right of the top (or bottom) side of the pre-container / container, and at least part of at least one side towards at least one direction of at least one sealing line in the English fold plus flap (11a).

It has a rectangular trapezoid geometric shape with a cone-shaped dispensing neck at the top. Optionally, it can also contain (at least one stable bottom burr plus flap (13c or/and 13d) or / and at least one English fold burr plus flap (13a) or flat English fold burr plus flap (13b) or/ and at least one burr plus flap (13e): on top and / or under the front and / or behind part of the closed or open container.

69.- Stable bottom flexible **container**, in which there is at least one defined flat English fold flap on both the left and right side on top or under the lateral side of the container closed or open on at least one side, and, also defined is at least one lateral side vertical edge flap (16) [at least one fold and at least one partial or full perimeter sealing line on the left and/or right lateral side of the container], in each lateral side, according to Claim 56 **characterized because it has** two plus flaps, [two flat stable bottom plus flaps (12d), or, one flat stable bottom plus flap (12d) and one stable bottom plus flap (12c)] on the left and right of the bottom (or top) part of the pre-container or container, and it also has in at least part of at least one side towards at least one direction: at least one sealing line in each flat stable bottom plus flap (12d) or stable bottom plus flap (12c); and
two plus flaps, [two flat stable bottom plus flaps (12d), or, one flat stable bottom plus flap (12d) and one stable bottom plus flap (12c)] on the left and right of the top (or bottom) part of the lateral side of pre-container or container, and it also has in at least part of at least one side towards at least one direction: at least one sealing line in each flat stable bottom plus flap (12d) or stable bottom plus flap (12c).

It has a cubic, rectangular or parallelepiped prism geometric body shape. Optionally, it can also contain (at least one stable bottom burr plus flap (13c) or / and at least one burr plus flap (13d) or burr plus flap (13a or/and 13b) or/ and at least one burr plus flap (13e): on top and / or under the front and / or behind part of the closed or open container.

70.- Stable bottom flexible **container**, in which there is at least one defined flat English fold flap on both the left and right side on top or under the lateral side of the pre-container or container and, also defined is at least one lateral side vertical edge flap (16) [at least one fold and at least one partial or full perimeter sealing line on the left and/or right lateral side of the container], in each lateral side, according to Claim 56 **characterized because it has** one stable bottom plus flap (12c) or, one flat stable bottom plus flap (12d) on the left and right of the bottom (or top) part of the pre-container or container, and it also has in at least part of at least one side towards at least one direction: at least one sealing line in each stable bottom plus flap (12c) or flat stable bottom plus flap (12d).

It has a rectangular or parallelepiped prism geometric body shape but it is wider and more volumetric in 3D in the zone or area that is contiguous to the generated flap.

Optionally, it can also contain (at least one stable bottom burr plus flap (13c or/and 13d) or / and at least one English fold burr plus flap (13a or/and 13b)) or /and at least one burr plus flap (13e): on top and / or under the front and / or behind the closed or open container.

71.- Stable bottom flexible **container,** in which there is at least one defined flat English fold flap on both the left and right side on top or under the lateral side of the container closed or open on least one side, also defined is at least one lateral side vertical edge flap (16) [at least one fold and at least one partial or full perimeter sealing line on the left and/or right lateral side of the container], in each lateral side, according to Claim 56 **characterized because it has** one stable bottom plus flap (12c) or, one flat stable bottom plus flap (12d) on the left and right of the bottom (or top) part of the pre-container or container, and it also has in at least part of at least one side towards at least one direction: at least one sealing line in each flat stable bottom plus flap (12d) or stable bottom plus flap (12c); and
One stable bottom plus flap (12c) on the opposite side, to the left or right, of the lateral side of the bottom (or top) part where the stable bottom plus flap (12c) or flat stable bottom plus flap (12d) of the container is generated, as well as at least part of at least one side of at least one sealing line in the stable bottom plus flap (12c)..

It has the same parallelepiped/rectangular prism geometric shape as Claim 67.

Optionally, it can also contain (at least one stable bottom burr plus flap (13c or/and 13d) or / and at least one English fold burr plus flap (13a)) or /and at least one burr plus flap (16e): on top and / or underneath the front and / or back part of the closed or open container.

72.- Flexible **container,** half English fold type (in which there is no defined flat English fold flap) and the other half, pillow type. The closed or open container or pre-container (at least one of the sides to, afterwards, once the container has been manufactured: be filled with the product to be packaged), according to Claim 56, **characterized because it has** two plus flaps [one English fold plus flap (11a) on the left and the other on the right side on top or under the lateral side of the pre-container or container, also there is at least part of at least one side at least one sealing line in every English fold plus flap (11a).

The container is of a rectangular prism or parallelepiped geometric body shape. Optionally, on and / or under the front or / and behind the closed or open container, it also contains at least one English fold burr plus flap (11a) or / and burr plus flap (13e).

73.- Flexible **container**, half English fold type (in which there is no defined flat English fold flap) and the other half, pillow type. The closed or open container or pre-container (at least one of the sides to, afterwards, once the container has been manufactured: be filled with the product to be packaged), according to Claim 56, **characterized because it has** two plus flaps [one English fold plus flap (11a) on the left and the other on the right side on top or under the lateral side of the pre-container or container, also there is at least part of at least one side at least one sealing line in every English fold plus flap (11a); and
a triangular shaped body flap folded over itself (15a) at least once over at least another part of it, to the left or right of the top of the container, and
at least part of at least one side towards at least one direction and on a plane or in an inclined plane of at least one sealing line: at least part of at least one side of the triangular-shaped body flap folded over itself (15a).

[At least one triangular body flap of this flexible container, as another alternative to folding or bending at least once over itself, can also be manipulated to choose, for example, in a random and combined and/or repetitive way from among at least one or more of the following options: fold and adhere the flap by means of a method such as contact glue or by using grippers; seal only; fold and seal; seal, fold and seal; seal and glue; seal, fold and glue; seal and cut; seal, cut and glue; cut, seal and glue; fold or fold over itself and glue; seal, fold or fold over itself and glue; fold or fold over itself and seal; seal, fold or fold over itself and seal; seal, fold or fold over itself, seal and cut; fold or fold over itself, seal and cut; fold or fold over itself, seal and glue; seal, fold or fold over itself, seal and glue; seal and cut; fold or fold over itself; seal and cut, fold or fold over itself and glue; seal and cut, fold or fold over itself and seal].

The container has a rectangular trapezoid shape and a conical dosing neck at the top. Optionally, on and / or under the front or / and behind the closed or open container, it also contains at least one English fold burr plus flap (13a) or / and burr plus flap (13e).

74.- Flexible **container**, half English fold type (in which there is no defined flat English fold flap) and the other half, pillow type. The closed or open container or pre-container (at least one of the sides to, afterwards, once the container has been manufactured: be filled with the product to be packaged), according to Claim 56, **characterized because it has** two plus flaps [one English fold plus flap (11a) on the left and the other on the right side on top or under the lateral side of the pre-container or container, also there is at least part of at least one side at least one sealing line in every English fold plus flap (11a); and
on the left and right side at the top / bottom part of the container: a triangular body flap folded over itself (15a) at least once over at least another part of it, and
at least part of at least one side towards at least one direction and on a plane or in an inclined plane of at least one sealing line: on at least part of at least one side of each of the triangular body flaps folded or bent over itself (15a).

[At least one triangular body flap of this flexible container, as an alternative to folding or bending at least once on itself, may also be manipulated to choose from any of the options described in the aforementioned paragraph of Claim 73].

The container has a rectangular prism or parallelepiped geometric body shape.

Optionally, on and / or under the front or / and behind the closed or open container, it also contains at least one English fold burr plus flap (13a) or / and burr plus flap (13e).

75.- Flexible **container**, half English fold type (in which there is no defined flat English fold flap) and the other half, pillow type. The closed or open container or pre-container (at least one of the sides to, afterwards, once the container has been manufactured: be filled with the product to be packaged), according to Claim 56, **characterized because it has** one English fold plus flap (11a) on the left or right on top or under the lateral side of the pre-container or container, also there is in at least part of at least one side at least one made sealing line in the English fold plus flap (11a).

It has a cube, rectangular prism or parallelepiped geometric body shape but it is wider and more volumetric in 3D in the zone or area that is contiguous to the generated flap. Optionally, on and / or under the front or / and behind the closed or open container, it also contains at least one English fold burr plus flap (13a) or / and burr flap (13e).

76.- Flexible **container**, half English fold type (in which there is no defined flat English fold flap) and the other half, pillow type. The closed or open container or pre-container (at least one of the sides to, afterwards, once the container has been manufactured: be filled with the product to be packaged), according to Claim 56, **characterized because it has** one English fold plus flap (11a) on the left or right on the lateral side of the bottom (or top) part of the pre-container or container, there is also, at least part of at least one side towards at least one direction of at least one sealing line in the English fold plus flap (11a); and
a triangular shaped body flap folded over itself (15a) at least once over at least another part of it, on the opposite side [to the left or right of the lateral side at the bottom (or top) of the pre-container or container]: to the lateral side from where the English fold plus flap (11a) of the pre-container or container is generated, and
at least part of at least one side towards at least one direction and on a plane or on an inclined plane of at least one sealing line: on at least part of at least one side of the triangular-shaped body flap folded over itself (15a).

[At least one triangular body flap of this flexible container, as an alternative to folding or bending at least once on itself, may also be manipulated to choose from any of the options described in the aforementioned paragraph of Claim 73].

It has the same parallelepiped/rectangular prism geometric shape as Claim 72.

Optionally, on and / or under the front or / and behind the closed or open container, it also contains at least one English fold burr plus flap (13a) or / and burr flap (13e).

77.- Flexible **container**, half stable bottom (in which there is at least a defined flat stable bottom flap) and the other half, pillow type. The container or pre-container can be closed or open (at least one of the sides to, afterwards, once the container has been manufactured: be filled with the product to be packaged), according to Claim 56, **characterized because it has** two flaps [one or two flat stable bottom plus flaps (12d) or, one flat stable bottom plus flap (12d) and one stable bottom plus flap (12c)] on the left and right of the bottom (or top) part of the container, as well as also, at least part of at least one side towards at least one direction of at least one sealing line in every flat stable bottom plus flap (12d) or, stable bottom plus flap (12c).

The container has a rectangular prism or parallelepiped geometric body shape. Optionally, it can also contain [(at least one stable bottom burr plus flap (13c or/and 13d) at least one English fold burr plus flap (11)) or at least one burr flap (13e): on top and / or underneath the front and / or back part of the closed or open container.

78.- Flexible **container**, half stable bottom (in which there is at least a defined flat stable bottom flap) and the other half, pillow type. The container or pre-container can be closed or open (at least one of the sides to, afterwards, once the container has been manufactured: be filled with the product to be packaged), according to Claim 56, **characterized because it has** two flaps [one or two flat stable bottom plus flaps (12d) or, one flat stable bottom plus flap (12d) and one stable bottom plus flap (12c)] on the left and right of the bottom (or top) part of the container, as well as also, at least part of at least one side towards at least one direction of at least one sealing line in every flat stable bottom plus flap (12d) or, stable bottom plus flap (12c); and
a triangular body flap folded over itself (15a) at least once over at least another part of it, to the left or right of the top (or bottom) of the container, and
at least part of at least one side towards at least one direction and on a plane or on an inclined plane of at least one sealing line: on at least part of at least one side of the triangular-shaped body flap folded over itself (15a).

The container has a geometric rectangular trapeze shape with a cone-shaped dispensing neck at the top. Optionally, it may also contain (at least one stable bottom burr plus flap (13b or/and 13d) or /and at least one English fold burr plus flap (13a or/and 13b)) or / and at least one burr plus flap (13e): on top and / or underneath the front and / or back part of the closed or open container.

79.- Flexible **container**, half stable bottom (in which there is at least a defined flat stable bottom flap) and the other half, pillow type. The container or pre-container can be closed or open (at least one of the sides to, afterwards, once the container has been manufactured: be filled with the product to be packaged), according to Claim 56, **characterized because it has** two flaps [one or two flat stable bottom plus flaps (12d) or, one flat stable bottom plus flap (12d) and one stable bottom plus flap (12c)] on the left and right of the bottom (or top) part of the container, as well as also, at least part of at least one side towards at least one direction of at least one sealing line in every flat stable bottom plus flap (12d) or, stable bottom plus flap (12c); and
on the left and right side at the top / bottom part of the container: a triangular body flap folded over itself (15a) at least once over at least another part of it, and
at least part of at least one side towards at least one direction and on a plane or on an inclined plane of at least one sealing line: on at least part of at least one side of the triangular-shaped body flap folded over itself (15a).

[At least one triangular body flap of this flexible container, as an alternative to folding or bending at least once on itself, may also be manipulated to choose from any of the options described in the aforementioned paragraph of Claim 73].

It has a cube, rectangular prism or parallelepiped geometric body shape. Optionally, it can also contain (at least one stable bottom burr plus flap (13c) or/ and at least one stable bottom burr plus flap (13d)) or/ and at least one burr plus flap (13e): on top and / or underneath the front and / or back part of the closed or open container.

80.- Flexible **container**, half English fold type (in which there is at least a defined flat English fold flap) and the other half, pillow type. The container or pre-container may be closed or open (at least one of the sides to, afterwards, once the container has been manufactured: be filled with the product to be packaged), according to Claim 56, **characterized because it has** [one flat English fold plus flap (11b) or one English fold plus flap (11a)] on the left or right of the bottom (or top) part of the lateral side of the container, there is also, at least part of at least one side towards at least one direction of at least one sealing line in the flat English fold plus flap (11b) or English fold plus flap (11a) It has the same parallelepiped / rectangular prism geometric shape as Claim 77. Optionally, it may also contain (at least one flat English fold plus flap (13b) or/ and at least one English fold burr plus flap (13a)) or/ and at least one burr plus flap (13e): on top and / or underneath the front and / or back part of the closed or open container.

81- Flexible **container**, half English fold type (in which there is at least a defined flat English fold flap) and the other half, pillow type. The container or pre-container may be closed or open (at least one of the sides to, afterwards, once the container has been manufactured: be filled with the product to be packaged), according to Claim 56, **characterized because it has** [one flat English fold plus flap (11b) or one English fold plus flap (11a)] on the left or right of the bottom (or top) part of the lateral side of the container, there is also, at least part of at least one side towards at least one direction of at least one sealing line in the flat English fold plus flap (11b) or English fold plus flap (11a): and
a triangular body flap folded over itself (15a) at least once over at least another part of it, on the opposite side (left or right of the top (or bottom) of the container): on the lateral side where the flat English fold plus flap (11b) or English fold plus flap (11a) of the bottom (or top) part of the container is generated, and
at least part of at least one side towards at least one direction and on a plane or on an inclined plane of at least one sealing line: on at least part of at least one side of the triangular-shaped body flap folded over itself (15a).

[At least one triangular body flap of this flexible container, as an alternative to folding or bending at least once on itself, may also be manipulated to choose from any of the options described in the aforementioned paragraph of Claim 73].

It has the same parallelepiped/rectangular prism geometric shape as Claim 76. Optionally, it may also contain (at least one stable bottom burr plus flap (16b) or/ and at least one English fold burr plus flap (16a)) or/ and at least one burr flap (16c): on top and / or underneath the front and / or back part of the closed or open container.

82.- Flexible **container**, half stable bottom or English fold type (in which there is at least a defined flat English fold flap) and the other half, pillow type. The container or pre-container may be closed or open (at least one of the sides to, afterwards, once the container has been manufactured: be filled with the product to be packaged), there is also at least one defined lateral side vertical edge flap (16) [at least one fold and at least one sealing line on the edge in the perimeter zone of the lateral side of the container] on both sides or lateral sides of the container, according to Claim 56, **characterized because it has** two flaps [two flat stable bottom plus flaps (12b) or one flat stable bottom plus flap (12b) and one stable bottom plus flap (12b)] on the left or right of the bottom (or top) part of the container, also, at least part of at least one side towards at least one direction of at least one sealing line in every plus flap (12b) or stable bottom plus flap (12a).

The container has a parallelepiped or rectangular prism geometric body shape. Optionally, it can also contain [(at least one stable bottom burr plus flap (13c) or / and at least one flat stable bottom burr plus flap (13d)) or at least one burr plus flap (16c)]: on top and / or under the front and / or behind part of the closed or open container.

83.- Flexible **container**, half stable bottom or English fold type (in which there is at least a defined flat English fold flap) and the other half, pillow type. The container or pre-container may be closed or open (at least one of the sides to, later, once the container has been manufactured: be filled with the product to be packaged), there is also at least one defined lateral side vertical edge flap (16) on both sides or lateral sides of the container, according to Claim 56, **characterized because it has** two flaps [two flat stable bottom plus flaps (12b) or one flat stable bottom plus flap (12b) and one stable bottom plus flap (12a)] on the left and right of the bottom (or top) part of the container, also, at least part of at least one side towards at least one direction of at least one sealing line in every flat stable bottom plus flap (12b) or stable bottom plus flap (12a); and
a triangular body flap folded over itself (15a) at least once over at least another part of it, to the left or right of the top (or bottom) of the container, and
at least part of at least one side towards at least one direction and on a plane or on an inclined plane of at least one sealing line: on at least part of at least one side of the triangular-shaped body flap folded over itself (15a).

[At least one triangular body flap of this flexible container, as an alternative to folding or bending at least once on itself, may also be manipulated to choose from any of the options described in the aforementioned paragraph of Claim 73].

It has the geometric shape of a rectangular trapezoid with a cone-shaped dispensing neck at the top. Optionally, it can contain (at least one stable bottom burr plus flap (13c) or / and at least one stable bottom burr plus flap (13d)) or at least one burr plus flap (13e)]: on top and / or under the front and / or behind part of the closed or open container.

84.- Flexible **container**, half stable bottom or English fold type (in which there is at least a defined flat English fold flap) and the other half, pillow type. The container or pre-container may be closed or open (at least one of the sides to, later, once the container has been manufactured: be filled with the product to be packaged), there is also at least one defined lateral side vertical edge flap (16) on both sides or lateral sides of the container, according to Claim 56, **characterized because it has** two flaps [two flat stable bottom plus flaps (12b) or one flat stable bottom plus flap (12b) and one stable bottom plus flap (12a)] on the left and right of the bottom (or top) part of the container, also, at least part of at least one side towards at least one direction of at least one sealing line in every flat stable bottom plus flap (12b) or stable bottom plus flap (12a); and
to the left and also to the right of the top (or bottom) of the container:
a triangular-shaped body flap folded over itself (15a), and
at least part of at least one side towards at least one direction and on a plane or on an inclined plane of at least one sealing line: on at least part of at least one side of the triangular-shaped body flap folded over itself (15a).

[At least one triangular body flap of this flexible container, as an alternative to folding or bending at least once on itself, may also be manipulated to choose from any of the options described in the aforementioned paragraph of Claim 73].

It has a cube, rectangular prism or parallelepiped geometric body shape. Optionally, it can also contain [(at least one stable bottom burr plus flap (13c) or / and at least one flat stable bottom burr plus flap (13d)) or at least one burr plus flap (16c)]: on top and / or under the front and / or behind part of the closed or open container.

85.- Flexible **container**, half stable bottom or English fold type (in which there is at least a defined flat English fold flap triangular shaped flap) and the other half, pillow type. The container or pre-container may be closed or open (at least one of the sides to, afterwards, once the container has been manufactured: be filled with the product to be packaged), there is also at least one defined lateral side vertical edge flap (16) on both sides or lateral sides of the container, according to Claim 56, **characterized because it has** [one flat stable bottom plus flaps (12b) or one stable bottom plus flap (12a)] on the left and right of the bottom (or top) part of the container, also, at least part of at least one side towards at least one direction of at least one sealing line in every flat stable bottom plus flap (12b) or stable bottom plus flap (12a).

The container has a rectangular prism or parallelepiped geometric body shape but being wider and more volumetric in the area or zone contiguous to the generated flap. Optionally, it can also contain [(at least one flat stable bottom burr plus flap (13d) or / and at least one stable bottom burr plus flap (13c)) or at least one burr plus flap (16c)]: on top and / or under the front and / or behind part of the closed or open container.

86.- Flexible **container**, half stable bottom or English fold type (in which there is at least a defined flat English fold flap) and the other half, pillow type. The container or pre-container may be closed or open (at least one of the sides to, afterwards, once the container has been manufactured: be filled with the product to be packaged), there is also at least one defined lateral side vertical edge flap (16) on both sides or lateral sides of the container, according to Claim 56, **characterized because it has** [one flat stable bottom plus flaps (12b) or one stable bottom plus flap (12a)] on the left and right of the bottom (or top) part of the container, also, at least part of at least one side towards at least one direction of at least one sealing line in every flat stable bottom plus flap (12b) or stable bottom plus flap (12a); and
a triangular body flap folded over itself (15a) at least once over at least another part of it, on the opposite side (left or right) of the top (or bottom) of the container, generating (on the left or the right) the flat stable bottom plus flap (12b) or stable bottom plus flap (12a) at the bottom (or top) part of the container, and
at least part of at least one side towards at least one direction and on a plane or on an inclined plane of at least one sealing line: on at least part of at least one side of the triangular-shaped body flap folded over itself (15a).

[At least one triangular body flap of this flexible container, as an alternative to folding or bending at least once on itself, may also be manipulated to choose from any of the options described in the aforementioned paragraph of Claim 73].

It has the same parallelepiped/rectangular prism geometric body shape as Claim 87. Optionally, it can also contain [(at least one stable bottom burr plus flap (13c) or / and at least one flat stable bottom burr plus flap (13d)) or at least one burr plus flap (13e)]: on top and / or under the front and / or behind part of the closed or open container.

87.- Flexible **container**, half stable bottom or English fold type (in which there is at least a defined flat English fold flap) and the other half, pillow type. The container or pre-container may be closed or open (at least one of the sides to, afterwards, once the container has been manufactured: be filled with the product to be packaged), there is also at least one defined lateral side vertical edge flap (16) on at least one of the sides or lateral sides of the container, according to Claim 56, **characterized because it has** two flaps on the left and right side of the bottom of the container, and that:
- in the case of having defined only a flat English fold flap, [(a flat stable bottom fold plus flap (12b) and an English fold plus flap (11a)), or (a stable bottom fold plus flap (12a) and a flat English fold plus flap (11b))] is made on the left and right of the bottom (or top) of the container or pre-container and,
at least part of at least one side in at least one direction and in a horizontal or inclined plane or inclined plane of at least one sealing line on each flat stable bottom plus flap (12b), plus flap (12a), plus flap (11a), flat English fold plus flap (11b); and
- in the case of having defined two folded flaps (of a triangular configuration of the English fold type), [a flat English fold plus flap (11b) and a flat stable bottom plus flap (12b)] will be made to the left and right of the lower (or top) part of the container or pre-container; as well as at least part of at least one side in at least one direction on a plane or on an inclined plane of at least one sealing line on each flat stable bottom plus flap (12b) and flat English fold plus flap (11b).

The container has a rectangular or parallelepiped prism geometric body shape. Optionally, it can also contain the following burrs:
in the case of having defined only one folded triangular shaped English fold flap, it may not contain any or contain randomly and combined or / and repetitively of at least one or more than one of: the stable bottom burr plus flap (13c), flat stable bottom burr plus flap (13d), English fold burr plus flap (13a), English fold burr plus flap (13b), and at least one burr plus flap (13e); and,
in the case of having defined two folded triangular shaped English fold flap, it may contain [(at least one flat stable bottom burr plus flap (13d)) or / and (at least one English fold burr plus flap (13a)) and / or at least one burr plus flap (13e)]: on top and / or under the front and / or behind part of the closed or open container.

88.- Flexible **container**, half stable bottom or English fold type (in which there is at least a defined flat English fold flap) and the other half, pillow type. The container or pre-container may be closed or open (at least one of the sides to, afterwards, once the container has been manufactured: be filled with the product to be packaged), there is also at least one defined lateral side vertical edge flap (16) on at least one of the sides or lateral sides of the container, according to Claim 56, **characterized because it has** two flaps on the left and right side of the bottom of the container, and that:
- in the case of having defined only a flat English fold flap, [(a flat stable bottom fold plus flap (12b) and an English fold plus flap (11a)), or (a stable bottom fold plus flap (12a) and a flat English fold plus flap (11b))] is made on the left and right of the bottom (or top) of the container or pre-container and,
at least part of at least one side in at least one direction and on a planel or inclined plane of at least one sealing line on each flat stable bottom plus flap (12b), stable bottom plus flap (12a), plus flap (11a), flat English fold plus flap (11b); and
- in the case of having defined two horizontal English fold flaps, [a flat English fold plus flap (11b) and a flat stable bottom plus flap (12b)] will be made to the left and right of the bottom (or top) part of the container or pre-container; as well as at least part of at least one side in at least one direction and on a flat or inclined plane of at least one sealing line in every flat stable bottom plus flap (12b) and flat English fold plus flap (11b); and,
a triangular body flap folded over itself (15a) at least once over at least another part of it, to the left or right of the top (or bottom) of the container, and at least part of at least one side towards at least one direction and on a plane or on an inclined plane of at least one sealing line: at least part of at least one side of the triangular body flap folded over itself (15a).

[At least one triangular body flap of this flexible container, as an alternative to folding or bending at least once on itself, may also be manipulated to choose from any of the options described in the aforementioned paragraph of Claim 73].

The container has a geometric rectangular trapeze shape with a cone-shaped dispensing neck at the top. Optionally, it may also contain the burrs as described at the end (of lines 2 to 12 on page 140) of Claim 87.

89.- Flexible **container**, half stable bottom or English fold type (there is at least a defined horizontal flat English fold flap) and the other half, pillow type. The container or pre-container may be closed or open (at least one of the sides to, afterwards, once the container has been manufactured: be filled with the product to be packaged), there is also at least one defined lateral side vertical edge flap (16) on at least one of the sides or lateral sides of the container, according to Claim 56, **characterized because it has** two flaps on the left and right side of the bottom of the container, and that:
- in the case of having defined only a flat English fold flap, [(a flat stable bottom fold plus flap (12b) and an English fold plus flap (11a)), or (a stable bottom fold plus flap (12a) and a flat English fold plus flap (11b))] is made on the left and right of the bottom (or top) of the container or pre-container and,
at least part of at least one side in at least one direction and on a plane or inclined plane of at least one sealing line on each flat stable bottom plus flap (12b), plus flap (12a), English fold plus flap (11a), flat English fold plus flap (11b); and
- in the case of having defined two horizontal English fold flaps, [one flat English fold plus flap (11b) and one flat stable bottom plus flap (12b)] will be made to the left and right of the bottom (or top) part of the container or pre-container; and also
at least part of at least one side in at least one direction and on a plane or inclined plane of at least one sealing line on each flat stable bottom plus flap (12b) and flat English fold plus flap (11b); and
to the left and right of the top/bottom part of the container: a triangular body flap folded over itself (15a) at least once over at least another part of the container, and
at least part of at least one side towards at least one direction and on a plane or on an inclined plane of at least one sealing line: on at least part of at least one side of the triangular-shaped body flap folded over itself (15a).

[At least one triangular body flap of this flexible container, as an alternative to folding or bending at least once on itself, may also be manipulated to choose from any of the options described in the aforementioned paragraph of Claim 73].

The container has a cubic, rectangular prism or parallelepiped geometric body shape. Optionally, it may also contain the burrs as described at the end in the aforementioned 12-line paragraph of Claim 87.

90.- Flexible **container**, half stable bottom or English fold type (in which there is at least a defined flat English fold flap) and the other half, pillow type. The container or pre-container may be closed or open (at least one of the sides to, afterwards, once the container has been manufactured: be filled with the product to be packaged), there is also at least one defined lateral side vertical edge flap (16) on at least one of the sides or lateral sides of the container, according to Claim 56, **characterized because it has** one flap on the left and right side of the bottom of the container, and that:
- in the case of having defined only a flat English fold flap, [(a flat stable bottom fold plus flap (12b) and an English fold plus flap (11a)), or (a stable bottom fold plus flap (12a) and a flat English fold plus flap (11b))] is made on the left and right of the bottom (or top) of the container or pre-container and, also
at least part of at least one side in at least one direction and on a plane or inclined plane of at least one sealing line on each flat stable bottom plus flap (12b), plus flap (12a), plus flap (11a), flat English fold plus flap (11b); and
- in the case of having defined two horizontal English fold flaps, [one flat English fold plus flap (11b) and one flat stable bottom plus flap (12b)] will be made to the left and right of the bottom (or top) part of the container or pre-container; and also at least part of at least one side in at least one direction and on a plane or inclined plane of at least one sealing line on each flat stable bottom plus flap (12b) and flat English fold plus flap (11b).

The container has a rectangular or parallelepiped prism geometric body shape but it is wider and more volumetric in 3D in the zone or area that is contiguous to the generated flap. Optionally, it may also contain the burrs as described at the end in the aforementioned 12-line paragraph of Claim 87.

91.- Flexible **container**, half stable bottom or English fold type (in which there is at least a defined flat English fold flap) and the other half, pillow type. The container or pre-container may be closed or open (at least one of the sides to, afterwards, once the container has been manufactured: be filled with the product to be packaged), there is also at least one defined lateral side vertical edge flap (16) on at least one of the sides or lateral sides of the container, according to Claim 56, **characterized because it has** one flap on the left and right side of the bottom of the container, and that:
- in the case of having defined only a flat English fold flap, [(a flat stable bottom fold plus flap (12b) and an English fold plus flap (11a)), or (a stable bottom fold plus flap (12a) and a flat English fold plus flap (11b))] is made on the left and right of the bottom (or top) of the container or pre-container and, also
at least part of at least one side in at least one direction and on a plane or inclined plane of at least one sealing line on each flat stable bottom plus flap (12b), stable bottom plus flap (12a), plus flap (11a), flat English fold plus flap (11b); and
- in the case of having defined two horizontal English fold flaps, [one flat English fold plus flap (11b) and one flat stable bottom plus flap (12b)] will be made to the left and right of the bottom (or top) part of the container or pre-container; and also
at least part of at least one side in at least one direction and on a plane or inclined plane of at least one sealing line on each flat stable bottom plus flap (12b) and flat English fold plus flap (11b); and
a triangular body flap folded over itself (15a) at least once over at least another part of it, on the opposite side (left or right) of the top (or bottom) of the container, generating (on the left or the right) the flat stable bottom plus flap (12b) or stable bottom plus flap (12a) at the bottom (or top) part of the container, and
at least part of at least one side towards at least one direction and on a plane or on an inclined plane of at least one sealing line: on at least part of at least one side of the triangular-shaped body flap folded over itself (15a).

[At least one triangular body flap of this flexible container, as an alternative to folding or bending at least once on itself, may also be manipulated to choose from any of the options described in the aforementioned paragraph of Claim 73].

It has the same rectangular parallelepiped / prism geometric shape as Claim 92.

Optionally, it may also contain the burrs as described at the end in the aforementioned 12-line paragraph of Claim 87.

92.- Flexible **container** according to any one of Claims 56 to 91, **characterized in that** it additionally comprises at least one pre-cut line (24) [e.g. 7 microns, approximately] in at least one layer of the wrapper, made by means of a laser sealing system mode:
in at least part of at least one side of the pre-container (6) or container (7) and preferably by a (U)-shaped pre-cut line (24) or also by a square line in which its sides form angles of 90° (approximately).

93.- **Sealing line** of a flexible container or flexible pre-container such as an English fold, stable bottom, pillow, half English fold and half pillow or half stable bottom and half pillow, which holds at least one fluid inside and, optionally or additionally, can hold, for example, a solid or solids, granules or powders, and it can also be an empty container which does not contain any contents to be packed inside, **characterized because it has** a seam or sealing line made on at least part of at least one side at least once by at least one sealing line on or over a flap generated in a flexible container or flexible pre-container, previously, by means of a hitting, blowing or folding mode.

The sealing will be done on at least part of at least one side by at least one sealing line of the generated flap, making it permanently stable.

94.- **Sealing line** of a flexible container or flexible pre-container according to Claim 93, **characterized because it has** a sealing line in an English fold plus flap (11a): obtaining a triangular / triangular trapezoidal geometric body shape.

95.- **Sealing line** of a flexible container or flexible pre-container according to Claim 93, **characterized because it has** a sealing line in /on an flat English fold plus flap (11a): obtaining a trapezoidal geometric body shape.

96.- **Sealing line** of a flexible container or flexible pre-container according to Claim 93, **characterized because it has** a sealing line in /on a stable bottom plus flap (12a): obtaining
a triangular or triangular trapezoidal geometric body shape with at least one lateral side vertical edge flap (16) sealing line.

97.- **Sealing line** of a flexible container or flexible pre-container according to Claim 93, **characterized because it has** a sealing line in /on a flat stable bottom plus flap (12b): obtaining
a trapezoidal geometric body shape with at least one lateral side vertical edge flap (16) sealing line.

98.- **Sealing line** of a flexible container or flexible pre-container according to Claim 93, **characterized because it has** a sealing line in /on an English fold plus flap (13a; 13b): obtaining
a three-dimensional trapezoidal or rectangular trapezoidal geometric body shape.

It is made on the edge and/or contiguous area to this and it is arranged on the plane (or approximately) on the side of (the front and/or the back) and/or (the top and/or the bottom) of the container or pre-container.

These lines can also be made or arranged in the following ways:
- mounted on top of the top and/or bottom side of the English fold plus flap (11a) and/or flat English fold plus flap (11b) on the top and/or bottom side; or
- mounted underneath the top and/or bottom face of the English fold plus flap (11a) or / and flat English fold plus flap (11b) sealing line.

99.- **Sealing line** of a flexible container or flexible pre-container according to Claim 93, **characterized because it has** a sealing line in /on a stable bottom burr plus flap (13c; 13d): obtaining
a trapezoidal or rectangular trapezoidal geometric body shape with at least one lateral side vertical edge flap (16) sealing line.

These sealing lines are made in the same way as in the previous claim, but with the difference that it will also be mounted on top of or underneath the vertical edge flap (16), as well as on the top and/or bottom of the pre-container or container.
